# EUROPÄISCHE PATENTSCHRIFT

(11) **EP 0 922 735 B1**
(45) Veröffentlichungstag und Bekanntmachung des Hinweises auf die Patenterteilung: **16.07.2003**
(21) Anmeldenummer: 98811197.7
(22) Anmeldetag: 02.12.1998
(51) Int. Cl.: C09B 67/22, D06P 1/38, C09D 11/00

(54) **Verfahren zum Färben oder Bedrucken sowie neue Reaktivfarbstoffe**
Method for dyeing or printing and new reactive dyes
Procédé de teinture ou d'impression et nouveaux colorants réactifs

(30) Priorität: 11.12.1997 EP 97810975
(43) Veröffentlichungstag der Anmeldung: 16.06.1999
(60) Teilanmeldung: 03100382.5
(73) Patentinhaber: Ciba Specialty Chemicals Holding Inc., 4057 Basel (CH)
(72) Erfinder: Scheibli, Peter, 4103 Bottmingen (CH); Aeschlimann, Peter, 4123 Allswil (CH); Lehmann, Urs, 4057 Basel (CH); Frick, Marcel, 4153 Reinach (CH)

(56) Entgegenhaltungen:
- EP-A- 0 437 184
- EP-A- 0 742 270
- EP-A- 0 755 985
- EP-A- 0 775 776
- WO-A-97/30125
- DE-A- 2 818 654
- DATABASE WPI Week 6800 Derwent Publications Ltd., London, GB; AN 68-73419p[00] XP002095854 "Printing textiles using a water soluble printed film" & JP 41 019632 B (ASASHI CHEMICAL IND. CO.), 1968

## Beschreibung

Die vorliegende Erfindung betrifft ein Verfahren zum Färben oder Bedrucken von hydroxylgruppenhaltigen oder stickstoffhaltigen Fasermaterialien mit Reaktivfarbstoffen, sowie neue Reaktivfarbstoffe. Das der vorliegenden Erfindung zugrundeliegende Verfahren eignet sich auch zum Färben oder Bedrucken von Papier oder Kunststoff-Folien.

Die Praxis des Färbens und Bedruckens mit Reaktivfarbstoffen hat in neuerer Zeit zu erhöhten Anforderungen an die Qualität der Färbungen und Drucke und die Wirtschaftlichkeit des Färbe- bzw. Druckprozesses geführt. Infolge dessen besteht weiterhin ein Bedarf nach neuen Verfahren, welche verbesserte Eigenschaften hinsichtlich Applikation sowie hinsichtlich der erhaltenen Färbungen bzw. Drucke aufweisen.

Für das Färben bzw. Bedrucken werden heute Verfahren gefordert, worin die Reaktivfarbstoffe eine ausreichende Substantivität haben und zugleich eine gute Auswaschbarkeit der nicht fixierten Anteile aufweisen. Die Färbungen und Drucke sollten ferner eine gute färberische Ausbeute, hohe Fixiergrade und gute Allgemeinechtheiten, wie Nassechtheiten und insbesondere Lichtechtheiten, aufweisen. So sollte bei der Verwendung von Kombinationen von Reaktivfarbstoffen der Effekt des sogenannten catalytic fading weitestgehend vermieden werden. Gemäss diesem Effekt bleicht einer der Reaktivfarbstoffe in Kombination mit anderen Reaktivfarbstoffen deutlich stärker aus als dies bei seiner alleinigen Verwendung, d.h. in Einzelnuance, der Fall ist.

Die EP-A-0 742 270 und die WO-A-97/30125 offenbaren Reaktivfarbstoffmischungen, die Phthalocyaninfarbstoffe enthalten. Die DE-A-28 18 654 offenbart reaktive Azofarbstoffe auf der Basis von 1-Hydroxy-7-aminonaphthalin-3,6-disulfonsäure.

Ferner sollte das Verfahren für Tintenstrahldruck-Verfahren (Jet- und Ink-Jet-Verfahren) geeignet sein.

Tintenstrahldruck-Verfahren werden bereits seit einigen Jahren in der Textilindustrie angewendet. Diese Verfahren ermöglichen es, auf die sonst übliche Herstellung einer Druckschablone zu verzichten, so dass erhebliche Kosten- und Zeiteinsparungen erzielt werden können. Insbesondere bei der Herstellung von Mustervorlagen kann innerhalb deutlich geringerer Zeit auf veränderte Bedürfnisse reagiert werden.

Entsprechende Tintenstrahldruck-Verfahren sollten insbesondere optimale anwendungstechnische Eigenschaften aufweisen. Zu erwähnen seien in diesem Zusammenhang Eigenschaften wie die Viskosität, Stabilität, Oberflächenspannung und Leitfähigkeit der verwendeten Tinten. Ferner werden erhöhte Anforderungen an die Qualität der erhaltenen Drucke gestellt, wie z.B. bezüglich Farbstärke, Faser-Farbstoff-Bindungsstabilität sowie bezüglich der Nassechtheiten und insbesondere der Lichtechtheiten.

Weiterhin sollten die für die oben genannten Verfahren zu verwendenden Reaktivfarbstoffe gut kombinierbar sein und durch Kombination die Erstellung möglichst aller Nuancen des Farbraums ermöglichen.

Von den bekannten Verfahren werden diese Anforderungen nicht in allen Eigenschaften erfüllt.

Der vorliegenden Erfindung liegt daher die Aufgabe zugrunde, neue, verbesserte Verfahren für das Färben und Bedrucken von Fasermaterialien zu finden, welche die oben charakterisierten Qualitäten in hohem Masse besitzen.

Es hat sich gezeigt, dass mit dem weiter unten definierten Verfahren die gestellte Aufgabe weitgehend gelöst wird.

Gegenstand der vorliegenden Erfindung ist ein Verfahren zum Färben oder Bedrucken von Papier, Kunststoff-Folien oder von hydroxylgruppenhaltigem oder stickstoffhaltigem Fasermaterial mit Reaktivfarbstoffen, welches dadurch gekennzeichnet ist, dass man mindestens einen Reaktivfarbstoff der Formel (1) aus der nachfolgenden Gruppe a) und mindestens einen Reaktivfarbstoff aus den nachfolgenden Gruppen b), c) und d) verwendet:
a) grün- oder blaufärbende Reaktivfarbstoffe der Formel (1) 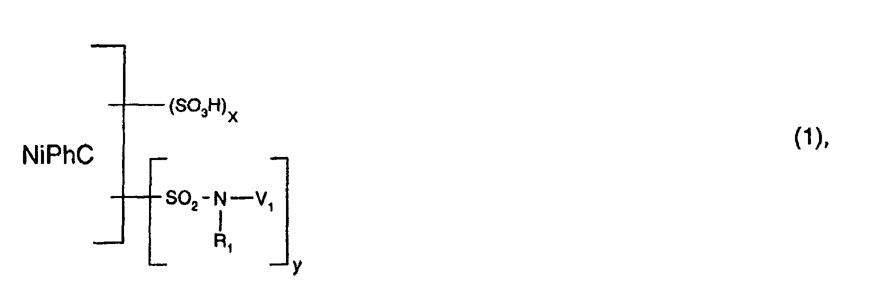 worin
   NiPhC der Rest eines Nickelphthalocyanins ist,
   R₁ Wasserstoff oder gegebenenfalls durch Hydroxy, Sulfo oder Sulfato substituiertes C₁-C₄-Alkyl,
   V₁ C₁-C₈-Alkyl, welches durch eine faserreaktive Gruppe der Formel

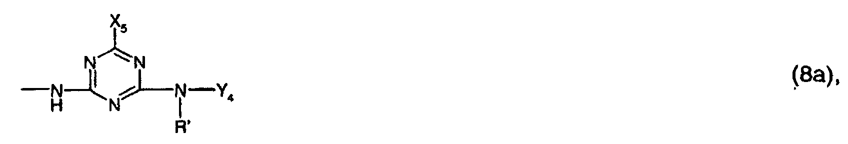

   -SO₂-Z (8b)

   oder

   -CONH-(CH₂)₂₋₃SO₂-Z (8c)

   substituiert ist, worin
   R' Wasserstoff oder C₁-C₄-Alkyl, insbesondere Wasserstoff,
   X₅ Fluor oder insbesondere Chlor,
   Y₄ Wasserstoff, gegebenenfalls durch Hydroxy, Sulfo oder Sulfato substituiertes und gegebenenfalls durch Sauerstoff unterbrochenes C₁-C₈-Alkyl oder gegebenenfalls durch C₁-C₄-Alkyl, C₁-C₄-Alkoxy, Halogen, Carboxy oder Sulfo substituiertes Phenyl oder Naphthyl, vorzugsweise Wasserstoff oder gegebenenfalls durch C₁-C₄-Alkyl, C₁-C₄-Alkoxy, Halogen, Carboxy oder Sulfo substituiertes Phenyl bedeutet, und
   Z ein Rest der Formel -CH=CH₂ oder -CH₂-CH₂-U₁ und U₁ eine Abgangsgruppe ist, oder
   V₁ durch C₁-C₄-Alkyl, C₁-C₄-Alkoxy, Halogen, Carboxy, Sulfo oder eine faserreaktive Gruppe der Formel (8a), (8b) oder (8c) substituiertes Phenyl oder Naphthyl ist, und
   x 2 bis 4 und y 1 bis 2 ist,
   wobei der Reaktivfarbstoff der Formel (1) mindestens eine faserreaktive Gruppe enthält;
b) blaufärbende Reaktivfarbstoffe der Formel (2) oder (3) 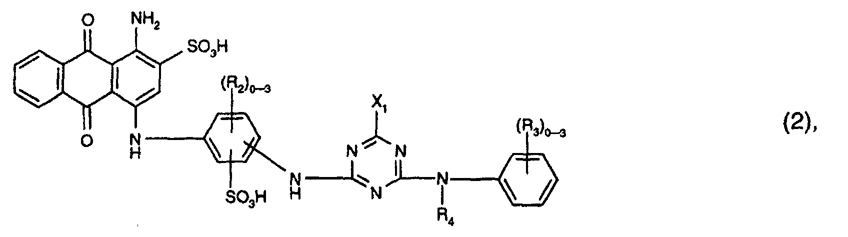 worin
   (R₂)₀₋₃ für 0 bis 3 gleiche oder voneinander verschiedene C₁-C₄-Alkylreste und
   (R₃)₀₋₃ für 0 bis 3 gleiche oder voneinander verschiedene Substituenten aus der Gruppe C₁-C₄-Alkyl, C₁-C₄-Alkoxy, Halogen, Carboxy und Sulfo steht,
   X₁ Chlor oder Fluor ist, und
   R₄ Wasserstoff oder gegebenenfalls durch Hydroxy, Sulfo oder Sulfato substituiertes C₁-C₄-Alkyl ist, 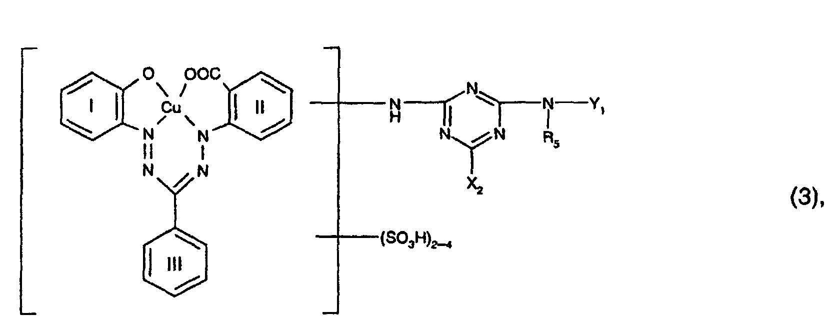 worin
   R₅ Wasserstoff oder gegebenenfalls durch Hydroxy, Sulfo oder Sulfato substituiertes C₁-C₄-Alkyl,
   X₂ Chlor ist,
   Y₁ Wasserstoff, gegebenenfalls durch Hydroxy, Sulfo oder Sulfato substituiertes und gegebenenfalls durch Sauerstoff unterbrochenes C₁-C₈-Alkyl oder gegebenenfalls durch C₁-C₄-Alkyl, C₁-C₄-Alkoxy, Halogen, Carboxy oder Sulfo substituiertes Phenyl oder Naphthyl ist, und
   die Benzolkerne I, II und III keine weiteren Substituenten enthalten oder durch C₁-C₄-Alkyl, C₁-C₄-Alkoxy, Halogen oder Carboxy weitersubstituiert sind;
c) rotfärbende Reaktivfarbstoffe der Formel (4) 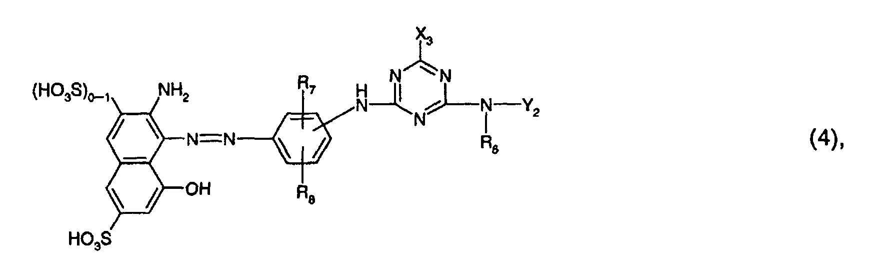 worin
   R₆ Wasserstoff oder gegebenenfalls durch Hydroxy, Sulfo oder Sulfato substituiertes C₁-C₄-Alkyl ist,
   R₇ und R₈ unabhängig voneinander Wasserstoff, C₁-C₄-Alkyl, C₁-C₄-Alkoxy, Halogen, Carboxy oder Sulfo sind,
   X₃ Chlor oder Fluor, und
   Y₂ Wasserstoff, gegebenenfalls durch Hydroxy, Sulfo, Sulfato oder einen Rest der Formel -SO₂-Z substituiertes und gegebenenfalls durch Sauerstoff unterbrochenes C₁-C₈-Alkyl, gegebenenfalls durch C₁-C₄-Alkyl, C₁-C₄-Alkoxy, Halogen, Carboxy, Sulfo oder einen Rest der Formel -SO₂-Z oder -CO-NH-(CH₂)₂₋₃-SO₂-Z substituiertes Phenyl oder Naphthyl ist, oder der Rest -N(R₆)-Y₂ Morpholino bedeutet, wobei
   Z ein Rest der Formel -CH=CH₂ oder -CH₂-CH₂-U₁ und U₁ eine Abgangsgruppe ist;
d) gelb- oder orangefärbende Reaktivfarbstoffe der Formel (5) 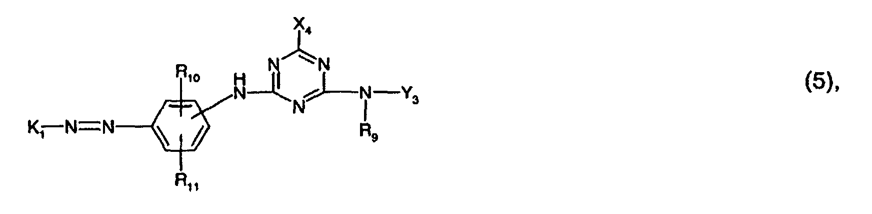 worin
   R₉ Wasserstoff oder gegebenenfalls durch Hydroxy, Sulfo oder Sulfato substituiertes C₁-C₄-Alkyl ist,
   R₁₀ und R₁₁ unabhängig voneinander Wasserstoff, C₁-C₄-Alkyl, C₁-C₄-Alkoxy, Halogen, Carboxy oder Sulfo sind,
   X₄ Chlor oder Fluor, und
   Y₃ Wasserstoff, gegebenenfalls durch Hydroxy, Sulfo oder Sulfato substituiertes und gegebenenfalls durch Sauerstoff unterbrochenes C₁-C₈-Alkyl, gegebenenfalls durch C₁-C₄-Alkyl, C₁-C₄-Alkoxy, Halogen, Carboxy, Sulfo oder einen gegebenenfalls weitersubstituierten Halogentriazinylaminorest substituiertes Phenyl oder Naphthyl ist, oder der Rest -N(R₉)-Y₃ Morpholino bedeutet, und
   K₁ ein Rest der Formel 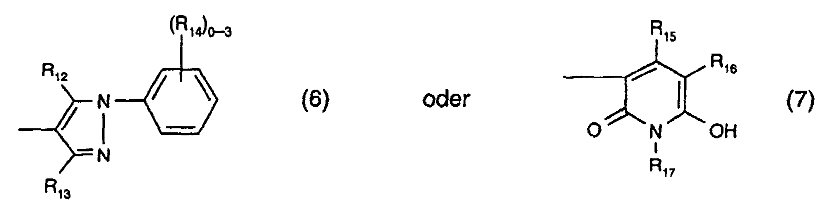 ist, worin
   R₁₂ Hydroxy oder Amino,
   R₁₃ Methyl oder Carboxy ist,
   (R₁₄)₀₋₃ für 0 bis 3 gleiche oder verschiedene Substituenten aus der Gruppe C₁-C₄-Alkyl, C₁-C₄-Alkoxy, Halogen, Carboxy und Sulfo steht,
   R₁₅ und R₁₇ C₁-C₄-Alkyl sind, und
   R₁₆ Cyano, Carbamoyl oder Sulfomethyl ist.

In den obigen Reaktivfarbstoffen vorhandene Sulfogruppen können generell sowohl als freie Säure (-SO₃H) als auch in einer beliebigen Salzform, z.B. als Alkali-, Erdalkali- oder Ammoniumsalz oder als Salz eines organischen Amins wie etwa dem Natrium-, Kalium-, Lithium- oder Ammoniumsalz, dem Salz des Triethanolamins oder dem Mischsalz zweier oder mehrerer verschiedener Kationen, z.B. als Na/Li-, Na/NH₄- oder Na/Li/NH₄-Mischsalz, vorliegen.

Als C₁-C₄-Alkyl kommen für R₁, R₂, R₃, R₄, R₅, R₆, R₇, R₈, R₉, R₁₀, R₁₁, R₁₄, R₁₅, R₁₇ sowie die anderen oben als Substituenten genannten C₁-C₄-Alkylreste z.B. Methyl, Aethyl, Propyl, Isopropyl, Butyl, sek.-Butyl, tert.-Butyl oder Isobutyl, insbesondere Methyl oder Aethyl, in Betracht. Von besonderer Bedeutung sind hierbei die Methylreste. Als Substituenten des Alkylrestes R₁ kommen Hydroxy, Sulfo oder Sulfato in Betracht. Die Alkylreste R₄, R₅, R₆ und R₉ können wie oben angegeben substituiert sein. Vorzugsweise sind die genannten Alkylreste unsubstituiert.

Als C₁-C₄-Alkoxy kommen für R₃, R₇, R₈, R₁₀, R₁₁ und R₁₄ sowie die anderen oben als Substituenten genannten C₁-C₄-Alkoxyreste z.B. Methoxy, Äthoxy, Propoxy, Isopropoxy, Butoxy oder Isobutoxy, insbesondere Methoxy, in Betracht.

Als Halogen kommen für R₃, R₇, R₈, R₁₀, R₁₁ und R₁₄ sowie die anderen oben als Substituenten genannten Halogenreste z.B. Fluor oder insbesondere Chlor in Betracht.

Bei der Abgangsgruppe U₁ handelt es sich z.B. um -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂. Bevorzugt ist U₁ eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Bevorzugt ist Z Vinyl oder ein Rest der Formel -CH₂-CH₂-OSO₃H.

Als substituiertes C₁-C₈-Alkyl kommt für V₁ insbesondere C₁-C₄-Alkyl und vorzugsweise Aethyl in Betracht.

Als substituiertes Phenyl oder Naphthyl kommen für V₁ die durch C₁-C₄-Alkyl, C₁-C₄-Alkoxy, Halogen, Carboxy, Sulfo oder eine faserreaktive Gruppe der Formel (8a), (8b) oder (8c) substituierten Reste in Betracht. Von besonderem Interesse sind solche Phenyl- oder Naphthylreste, welche durch eine faserreaktive Gruppe substituiert sind und weiterhin gegebenenfalls durch Sulfo substituiert sind. Von ganz besonderem Interesse sind hierbei für V₁ die entsprechenden Phenylreste.

Bevorzugt ist V₁ ein Rest der Formel 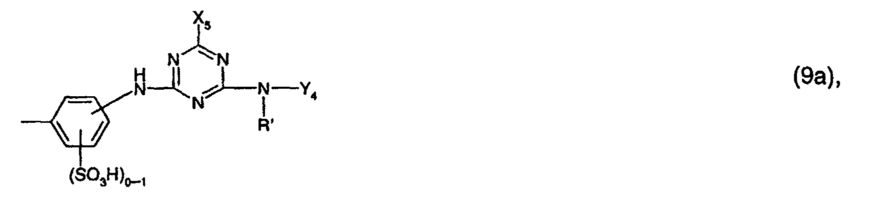 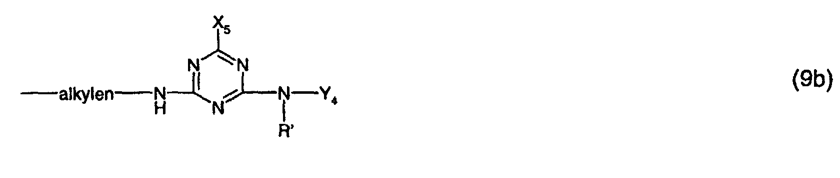 oder 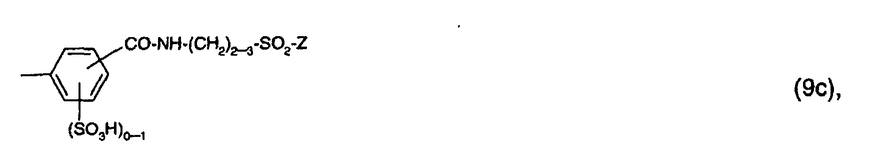 worin
R' Wasserstoff oder C₁-C₄-Alkyl, insbesondere Wasserstoff,
X₅ Fluor oder insbesondere Chlor,
Y₄ Wasserstoff oder gegebenenfalls durch C₁-C₄-Alkyl, C₁-C₄-Alkoxy, Halogen, Carboxy oder Sulfo substituiertes Phenyl, insbesondere Wasserstoff oder durch Sulfo substituiertes Phenyl, ist,
alkylen C₂-C₆-Alkylen, insbesondere C₂-C₄-Alkylen und vorzugsweise Aethylen, bedeutet,
und für Z die oben angegebenen Bedeutungen und Bevorzugungen gelten.

Besonders bevorzugt ist V₁ ein Rest der Formel (9a) oder (9b), insbesondere ein Rest der Formel (9a).

Bevorzugt als Reaktivfarbstoffe der Formel (1) sind solche, worin
R₁ Wasserstoff oder C₁-C₄-Alkyl, insbesondere Wasserstoff, ist und für V₁ die oben angegebenen Bedeutungen und Bevorzugungen gelten.

Besonders bevorzugt als Reaktivfarbstoffe der Formel (1) sind solche der Formel 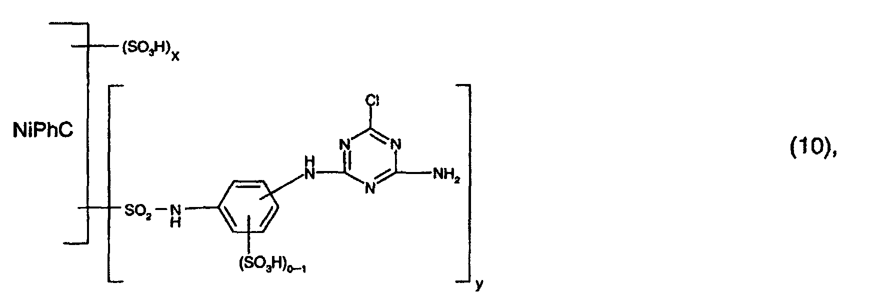 worin NiPhC, x und y die oben angegebenen Bedeutungen haben.

R₂ ist bevorzugt Methyl.

R₃ ist bevorzugt C₁-C₄-Alkyl, C₁-C₄-Alkoxy oder Sulfo, insbesondere Sulfo.

Für X₁ ist die Bedeutung als Chlor bevorzugt.

R₄ ist bevorzugt Wasserstoff oder C₁-C₄-Alkyl, insbesondere Wasserstoff.

Bevorzugt als Reaktivfarbstoffe der Formel (2) sind solche, worin
R₃ Sulfo, R₄ Wasserstoff oder C₁-C₄-Alkyl und X₁ Chlor ist. Vorzugsweise enthalten die Reaktivfarbstoffe der Formel (2) drei Reste R₂.

Besonders bevorzugt als Reaktivfarbstoffe der Formel (2) sind solche der Formel 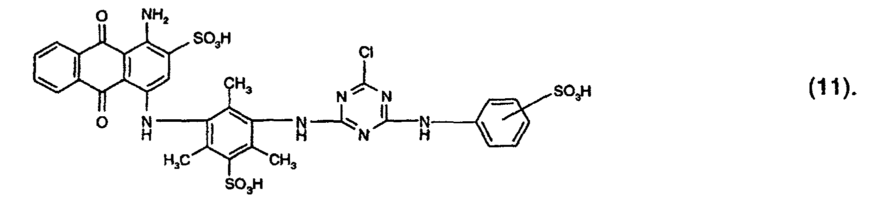 R₅ ist bevorzugt Wasserstoff oder C₁-C₄-Alkyl, insbesondere Wasserstoff.

Y₁ ist bevorzugt Wasserstoff oder gegebenenfalls durch Hydroxy, Sulfo oder Sulfato substituiertes und gegebenenfalls durch Sauerstoff unterbrochenes C₁-C₈-Alkyl, insbesondere Wasserstoff.

Die Benzolkerne I, II und III des Reaktivfarbstoffs der Formel (3) enthalten bevorzugt keine weiteren Substituenten.

Bevorzugt als Reaktivfarbstoffe der Formel (3) sind solche, worin
R₅ Wasserstoff oder C₁-C₄-Alkyl, insbesondere Wasserstoff, X₂ Chlor und Y₁ Wasserstoff ist.

Besonders bevorzugt als Reaktivfarbstoffe der Formel (3) sind solche der Formel 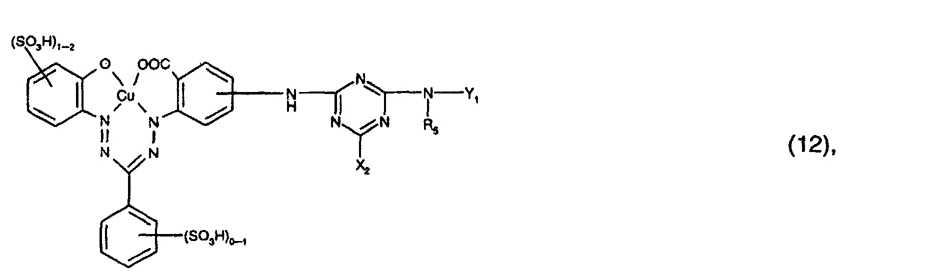 worin R₅ Wasserstoff oder C₁-C₄-Alkyl, insbesondere Wasserstoff, ist und für X₂ und Y₁ die oben angegebenen Bedeutungen und Bevorzugungen gelten.

Ganz besonders bevorzugt als Reaktivfarbstoffe der Formel (3) sind solche der Formel

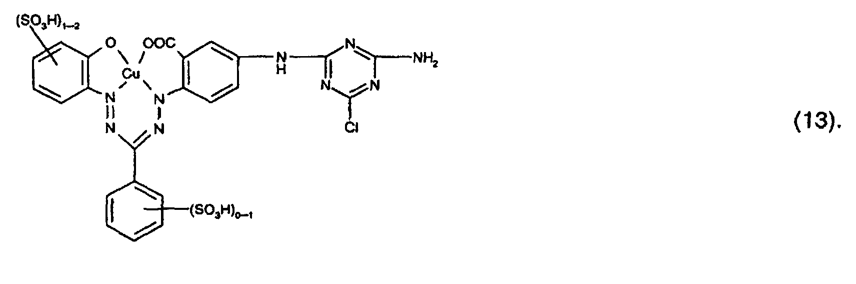

R₆ ist bevorzugt Wasserstoff oder C₁-C₄-Alkyl, insbesondere C₁-C₄-Alkyl und vorzugsweise Methyl.

R₇ ist bevorzugt Sulfo.

R₈ ist bevorzugt Wasserstoff oder Sulfo, insbesondere Wasserstoff.

Für X₃ ist die Bedeutung als Chlor bevorzugt.

Y₂ ist bevorzugt Wasserstoff, gegebenenfalls durch Hydroxy, Sulfo oder Sulfato substituiertes und gegebenenfalls durch Sauerstoff unterbrochenes C₁-C₈-Alkyl, insbesondere C₁-C₄-Alkyl, oder gegebenenfalls durch C₁-C₄-Alkyl, C₁-C₄-Alkoxy, Halogen, Carboxy oder Sulfo substituiertes Phenyl oder Naphthyl, oder der Rest -N(R₆)-Y₂ bedeutet Morpholino.

Besonders bevorzugt ist Y₂ durch Hydroxy, Sulfo oder Sulfato, insbesondere durch Sulfo, substituiertes und gegebenenfalls durch Sauerstoff unterbrochenes C₁-C₄-Alkyl, oder gegebenenfalls durch C₁-C₄-Alkyl, C₁-C₄-Alkoxy, Halogen, Carboxy oder Sulfo, insbesondere durch Sulfo, substituiertes Phenyl.

Ganz besonders bevorzugt ist Y₂ durch Hydroxy, Sulfo oder Sulfato, insbesondere durch Sulfo, substituiertes C₁-C₄-Alkyl.

Bevorzugt als Reaktivfarbstoffe der Formel (4) sind solche, worin
R₆ Wasserstoff oder C₁-C₄-Alkyl, insbesondere C₁-C₄-Alkyl und vorzugsweise Methyl,
R₇ Sulfo,
R₈ Wasserstoff oder Sulfo, insbesondere Wasserstoff,
X₃ Fluor oder insbesondere Chlor, und
Y₂ Wasserstoff, gegebenenfalls durch Hydroxy, Sulfo oder Sulfato substituiertes und gegebenenfalls durch Sauerstoff unterbrochenes C₁-C₈-Alkyl, oder gegebenenfalls durch C₁-C₄-Alkyl, C₁-C₄-Alkoxy, Halogen, Carboxy oder Sulfo substituiertes Phenyl oder Naphthyl ist, oder der Rest -N(R₆)-Y₂ Morpholino bedeutet. Hierbei gelten für Y₂ die weiter oben angegebenen Bevorzugungen.

Besonders bevorzugt als Reaktivfarbstoffe der Formel (4) sind solche der Formel 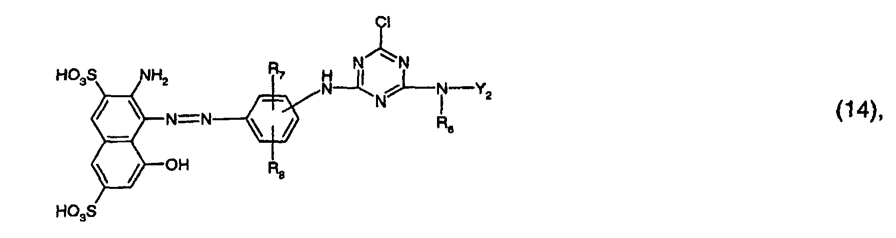 worin R₆ Wasserstoff oder C₁-C₄-Alkyl, insbesondere C₁-C₄-Alkyl und vorzugsweise Methyl, R₇ Sulfo, R₈ Wasserstoff oder Sulfo, insbesondere Wasserstoff, und
Y₂ durch Hydroxy, Sulfo oder Sulfato, insbesondere durch Sulfo, substituiertes und gegebenenfalls durch Sauerstoff unterbrochenes C₁-C₄-Alkyl, oder gegebenenfalls durch C₁-C₄-Alkyl, C₁-C₄-Alkoxy, Halogen, Carboxy oder Sulfo substituiertes Phenyl ist. Hierbei gelten für Y₂ die weiter oben angegebenen Bevorzugungen.

Ganz besonders bevorzugt als Reaktivfarbstoffe der Formel (4) sind solche der Formel 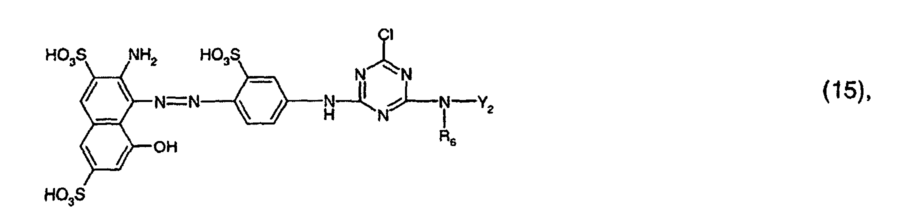 worin R₆ Wasserstoff oder C₁-C₄-Alkyl, insbesondere C₁-C₄-Alkyl und vorzugsweise Methyl, und Y₂ durch Hydroxy, Sulfo oder Sulfato, insbesondere durch Sulfo, substituiertes C₁-C₄-Alkyl ist.

R₉ ist bevorzugt Wasserstoff oder C₁-C₄-Alkyl, insbesondere Wasserstoff.

R₁₀ ist bevorzugt Sulfo.

R₁₁ ist bevorzugt Wasserstoff oder Sulfo, insbesondere Wasserstoff.

X₄ ist bevorzugt Chlor.

R₁₂ ist bevorzugt Hydroxy.

R₁₃ ist bevorzugt Methyl.

Für R₁₄ sind die Bedeutungen als Halogen oder Sulfo bevorzugt.

R₁₅ ist bevorzugt Methyl und R₁₇ ist vorzugsweise Aethyl.

Für R₁₆ kommt insbesondere die Bedeutung als Carbamoyl oder Sulfomethyl, vorzugsweise die Bedeutung als Carbamoyl, in Betracht.

Bei dem Rest K₁ handelt es sich vorzugsweise um einen Rest der Formel (6).

Y₃ ist bevorzugt gegebenenfalls durch C₁-C₄-Alkyl, C₁-C₄-Alkoxy, Halogen, Carboxy, Sulfo oder einen gegebenenfalls weitersubstituierten Halogentriazinylaminorest substituiertes Naphthyl oder insbesondere Phenyl. Als gegebenenfalls weitersubstituierter Halogentriazinylaminorest kommt z.B. ein solcher der Formel (8a) in Betracht, wobei für die Substituenten die unter Formel (8a) angegebenen Bedeutungen und Bevorzugungen gelten und Y₄ insbesondere Wasserstoff ist.

Besonders bevorzugt ist Y₃ durch Sulfo oder einen Rest der Formel (8a) substituiertes Phenyl, insbesondere durch Sulfo substituiertes Phenyl.

Bevorzugt als Reaktivfarbstoffe der Formel (5) sind solche, worin
R₉ Wasserstoff oder C₁-C₄-Alkyl, insbesondere Wasserstoff, R₁₀ Sulfo, R₁₁ Wasserstoff oder Sulfo, insbesondere Wasserstoff, R₁₂ Hydroxy, R₁₃ Methyl, R₁₆ Carbamoyl und X₄ Chlor ist.

Besonders bevorzugt als Reaktivfarbstoffe der Formel (5) sind solche der Formel 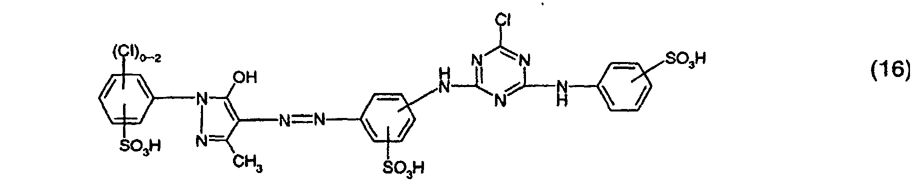 oder 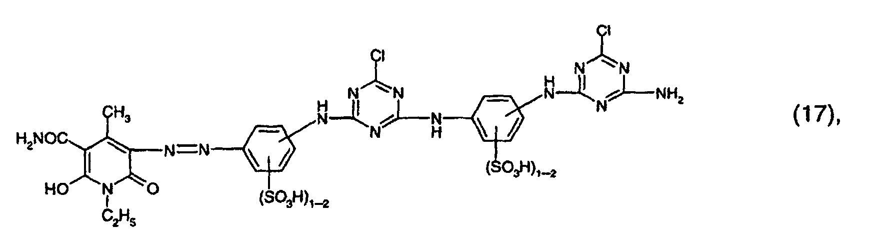 insbesondere solche der Formel (16).

Bevorzugt verwendet man als Reaktivfarbstoffe der Gruppe a) solche der Formel (10), als Reaktivfarbstoffe der Gruppe b) solche der Formel (11) oder (12), insbesondere solche der Formel (11) oder (13),
als Reaktivfarbstoffe der Gruppe c) solche der Formel (14), insbesondere der Forme (15), und als Reaktivfarbstoffe der Gruppe d) solche der Formel (16) oder (17), insbesondere der Formel (16).

Als Reaktivfarbstoffe der Gruppe b) verwendet man insbesondere eine Mischung der Reaktivfarbstoffe der Formeln (2) und (3), wobei für die Reaktivfarbstoffe der Formeln (2) und (3) die oben angegebenen Bedeutungen und Bevorzugungen gelten.

Bevorzugt verwendet man mindestens einen Reaktivfarbstoff der Formel (1) aus der Gruppe a) und mindestens einen Reaktivfarbstoff der Formel (4) aus der Gruppe c).

Bevorzugt verwendet man ferner mindestens einen Reaktivfarbstoff der Formel (1) aus der Gruppe a) und mindestens einen Reaktivfarbstoff der Formel (5) aus der Gruppe d).

Besonders bevorzugt verwendet man mindestens einen Reaktivfarbstoff der Formel (1) aus der Gruppe a), mindestens einen Reaktivfarbstoff der Formel (4) aus der Gruppe c) und mindestens einen Reaktivfarbstoff der Formel (5) aus der Gruppe d).

Gemäss einer ganz besonders bevorzugten Ausführungsform des erfindungsgemässen Verfahrens verwendet man mindestens einen Reaktivfarbstoff der Formel (1) aus der Gruppe a),
mindestens einen Reaktivfarbstoff der Formel (2) oder (3) aus der Gruppe b),
mindestens einen Reaktivfarbstoff der Formel (4) aus der Gruppe c) und
mindestens einen Reaktivfarbstoff der Formel (5) aus der Gruppe d).

Das erfindungsgemässe Verfahren eignet sich zum Färben oder Bedrucken von hydroxylgruppenhaitigen oder stickstoffhaltigen Fasermaterialien.

Das erfindungsgemässe Verfahren eignet sich femer zum Färben oder Bedrucken von Papier oder Kunststoff-Folien.

Als Beispiele für stickstoffhaltige Fasermaterialien seien natürliche Polyamidmaterialien, wie z.B. Wolle, oder synthetische Polyamidmaterialien, wie z.B. Polyamid 6 oder Polyamid 6.6, genannt.

Bevorzugt für das erfindungsgemässe Verfahren sind hydroxylgruppenhaltige, insbesondere cellulosehaltige Fasermaterialien, die ganz oder teilweise aus Cellulose bestehen. Beispiele sind natürliche Fasermaterialien wie Baumwolle, Leinen oder Hanf, sowie Zellstoff und regenerierte Fasermaterialien wie z.B. Viskose sowie Lyocell. Besonders bevorzugt sind hierbei Viskose oder vorzugsweise Baumwolle.

Die genannten Fasermaterialien liegen vorzugsweise als textile Fasermaterialien vor, insbesondere als flächige textile Gewebe, Gewirke oder Bahnen.

Als Beispiele für Papier, das nach dem erfindungsgemässen Verfahren gefärbt oder bedruckt werden kann seien handelsübliches Ink-Jet Papier, Photopapier, Glanzpapier, mit Kunststoff beschichtetes Papier, wie z.B. Epson Ink-Jet Paper, Epson Photo Paper, Epson Glossy Film, Epson Glossy Film, HP Special Ink-Jet Paper, Encad Photo Gloss Paper, llford Photo Paper genannt. Kunststoff-Folien, die nach dem erfindungsgemässen Verfahren gefärbt oder bedruckt werden können sind beispielsweise transparent oder milchig/undurchsichtig. Geeignete Kunststoff-Folien sind z.B. 3M Transparency-Film.

Gemäss einer Ausführungsform des erfindungsgemässen Verfahrens kann das Färben oder Bedrucken gemäss den üblichen Färbe- bzw. Druckverfahren ausgeführt werden. Die Färbeflotten oder Druckpasten können hierbei ausser Wasser und den Farbstoffen weitere Zusätze, beispielsweise Netzmittel, Antischaummittel, Egalisiermittel oder die Eigenschaft des Substrates, wie beispielsweise des Textilmaterials, beeinflussende Mittel, wie z.B. Weichmachungsmittel, Zusätze zum Flammfestausrüsten oder schmutz-, wasser- und ölabweisende Mittel sowie wasserenthärtende Mittel und natürliche oder synthetische Verdicker, wie z.B. Alginate und Celluloseäther, enthalten.

Bevorzugt für das erfindungsgemässe Verfahren ist das Färben nach dem Ausziehverfahren oder dem Foulard-Färbeverfahren. Die genannten Verfahren eignen sich vorzugsweise für das Färben von hydroxylgruppenhaltigen oder stickstoffhaltigen Fasermaterialien.

Gemäss dem Ausziehverfahren erfolgt das Färben in der Regel in wässrigem Medium, bei einem Flottenverhältnis von beispielsweise 1:2 bis 1:60, insbesondere einem Flottenverhältnis von 1:5 bis 1:20, und einer Temperatur von 20 bis 105°C, insbesondere 30 bis 90°C, und vorzugsweise 30 bis 70°C.

Die Mengen, in denen die Reaktivfarbstoffe hierbei in den Färbebädem verwendet werden, können je nach der gewünschten Farbtiefe schwanken, im allgemeinen haben sich Mengen von 0,01 bis 10 Gewichtsprozent, insbesondere 0,01 bis 6 Gewichtsprozent, bezogen auf das Färbegut, als vorteilhaft erwiesen.

Gemäss dem Foulard-Färbeverfahren wird die Ware in der Regel mit wässrigen, gegebenenfalls salzhaltigen Farbstofflösungen imprägniert. Die Flottenaufnahme beträgt hierbei z.B. 20 bis 150%, insbesondere 40 bis 120% und vorzugsweise 50 bis 100%, bezogen auf das Gewicht des zu färbenden Fasermaterials. Gegebenenfalls enthält die Flotte bereits Fixieralkali, oder das Fasermaterial wird nach der Imprägnierung mit Fixieralkali behandelt. Als Alkali kommen z.B. Natriumcarbonat, Natriumbicarbonat, Natriumhydroxid, Dinatriumphosphat, Trinatriumphosphat, Borax, wässriges Ammoniak, Natriumtrichloracetat, Natriumformiat oder eine Mischung aus Wasserglas und einer wässrigen Natriumcarbonatlösung in Betracht. Bevorzugt sind hierbei Alkalihydroxid und/oder Alkalicarbonat, insbesondere Natriumhydroxid und/oder Natriumcarbonat. Die Fixierung kann beispielsweise durch Wärmeeinwirkung, wie durch Dämpfen des imprägnierten Fasermaterials bei einer Temperatur von z.B. 100 bis 120°C, vorzugsweise im Sattdampf, erfolgen. Gemäss dem sogenannten Kaltverweilverfahren wird der Farbstoff zusammen mit dem Alkali auf dem Foulard aufgebracht und danach durch mehrstündiges Lagern, z.B. 3 bis 40 Stunden, bei Raumtemperatur fixiert. Nach dem Fixieren werden die Färbungen oder Drucke gegebenenfalls unter Zusatz eines dispergierend wirkenden Mittels gründlich gespült.

Besonders bevorzugt für das erfindungsgemässe Verfahren ist das Bedrucken. Als Beispiele für entsprechende Druckverfahren seien der konventionelle Druck, Schablonendruck sowie Tintenstrahldruck-Verfahren genannt.

Ganz besonders bevorzugt für das erfindungsgemässe Verfahren sind Tintenstrahldruck-Verfahren.

Für das Bedrucken von Fasermaterialien werden in der Regel Tinten verwendet, welche einen Gesamtgehalt an Reaktivfarbstoffen von z.B. 3 bis 35 Gew.-%, insbesondere 5 bis 35 Gew.-% und vorzugsweise 10 bis 30 Gew.-%, bezogen auf das Gesamtgewicht der Tinte, aufweisen.

Für das Bedrucken von Papier oder Kunststoff-Folien werden in der Regel Tinten verwendet, welche einen Gesamtgehalt an Reaktivfarbstoffen von z.B. 1 bis 30 Gew.-%, insbesondere 1,5 bis 25 Gew.-% und vorzugsweise 2 bis 20 Gew.-%, bezogen auf das Gesamtgewicht der Tinte, aufweisen.

Die in den Tinten verwendeten Reaktivfarbstoffe sollten vorzugsweise salzarm sein, d.h. einen Gesamtgehalt an Salzen von weniger als z.B. 0,5 Gew.-%, bezogen auf das Gewicht der Farbstoffe, enthalten. Reaktivfarbstoffe, die, bedingt durch ihre Herstellung und/oder die nachträgliche Zugabe von Coupagemitteln grössere Salzgehalte aufweisen, können z.B. durch Membrantrennverfahren, wie Ultrafiltration, Umkehrosmose oder Dialyse, entsalzt werden.

Ferner können die Tinten noch wasserlösliche, nichtionogene Celluloseäther enthalten, wie z.B. Methyl-, Aethyl-, Hydroxyäthyl-, Methylhydroxyäthyl-, Hydroxypropyl- oder Hydroxypropylmethylcellulose. Bevorzugt sind Methylcellulose oder insbesondere Hydroxyäthylcellulose. Die Celluloseäther können in der Tinte üblicherweise in einer Menge von 0,01 bis 2 Gew.-%, insbesondere 0,01 bis 1 Gew.-% und vorzugsweise 0,01 bis 0,5 Gew.-%, bezogen auf das Gesamtgewicht der Tinte, verwendet werden.

Weiterhin können die Tinten Alginate, insbesondere Alkalialginate und vorzugsweise Natriumalginat, enthalten. Diese können in der Tinte üblicherweise in einer Menge von 0,01 bis 2 Gew.-%, insbesondere 0,01 bis 1 Gew.-% und vorzugsweise 0,01 bis 0,5 Gew.-%, bezogen auf das Gesamtgewicht der Tinte, verwendet werden.

Bevorzugt weisen die Tinten eine Viskosität von 1 bis 40 mPa·s auf.

Ferner können die Tinten Puffersubstanzen enthalten, wie z.B. Borax, Borat oder Citrat. Als Beispiele seien Natriumborat, Natriumtetraborat sowie Natriumcitrat genannt. Sie können insbesondere in Mengen von 0,1 bis 3 Gew.-%, vorzugsweise 0,1 bis 1 Gew.-%, bezogen auf das Gesamtgewicht der Tinte, verwendet werden, um einen pH-Wert von z.B. 5 bis 9, insbesondere 6 bis 8, einzustellen.

Als weitere Zusätze können die Tinten z.B. N-Methyl-2-pyrrolidon oder insbesondere 1,2-Propylenglykol enthalten. Diese können in der Tinte üblicherweise in einer Menge von 5 bis 30 Gew.-%, insbesondere 5 bis 20 Gew.-% und vorzugsweise 10 bis 20 Gew.-%, bezogen auf das Gesamtgewicht der Tinte, verwendet werden.

Ferner können die Tinten noch, falls gewünscht, übliche Zusätze, wie z.B. schaumdämpfende Mittel oder insbesondere das Pilz- und/oder Bakterienwachstum hemmende Stoffe, enthalten. Diese werden üblicherweise in Mengen von 0,01 bis 1 Gew.-%, bezogen auf das Gesamtgewicht der Tinte, verwendet.

Das erfindungsgemässe Verfahren zum Bedrucken nach dem Tintenstrahldruck-Verfahren kann mit an und für sich bekannten für den textilen Druck geeigneten Tintenstrahldruckern ausgeführt werden.

Im Falle des Tintenstrahldruck-Verfahrens werden einzelne Tropfen der Tinte kontrolliert aus einer Düse auf ein Substrat gespritzt. Ueberwiegend werden hierzu die kontinuierliche Ink-Jet-Methode sowie die Drop on demand-Methode verwendet. Im Falle der kontinuierlichen Ink-Jet-Methode werden die Tropfen kontinuierlich erzeugt, wobei nicht für den Druck benötigte Tropfen in einen Auffangbehälter abgeleitet und rezykliert werden. Im Falle der Drop on demand-Methode hingegen werden Tropfen nach Wunsch erzeugt und gedruckt; · d.h. es werden nur dann Tropfen erzeugt, wenn dies für den Druck erforderlich ist. Die Erzeugung der Tropfen kann z.B. mittels eines Piezo-Inkjet-Kopfes oder mittels thermischer Energie (Bubble Jet) erfolgen. Bevorzugt ist für das erfindungsgemässe Verfahren der Druck nach der Drop on demand-Methode, insbesondere mittels eines Piezo-Inkjet-Kopfes.

Gemäss einer bevorzugten Ausführungsform des erfindungsgemässen Verfahrens zum Bedrucken nach dem Tintenstrahldruck-Verfahren erfolgt vor dem Bedrucken eine Vorbehandlung des Fasermaterials, worin man das zu bedruckende Fasermaterial zuerst mit einer wässrigen alkalischen Flotte behandelt und das behandelte Fasermaterial gegebenenfalls trocknet.

Die wässrige alkalische Flotte enthält mindestens eine der üblichen Basen, welche in konventionellen Reaktivdruckverfahren zur Fixierung der Reaktivfarbstoffe eingesetzt werden. Die Base wird z.B. in einer Menge von 10 bis 100 g/l Flotte, vorzugsweise 10 bis 50 g/l Flotte, eingesetzt. Als Base kommen beispielsweise Natriumcarbonat, Natriumhydroxid, Dinatriumphosphat, Trinatriumphosphat, Natriumacetat, Natriumpropionat, Natriumhydrogencarbonat, wässriges Ammoniak oder Alkalispender, wie z.B. Natriumchloracetat oder Natriumformiat in Betracht. Vorzugsweise wird Natriumhydrogencarbonat, Natriumcarbonat oder eine Mischung aus Wasserglas und Natriumcarbonat verwendet. Der pH-Wert der alkalischen Flotte beträgt in der Regel 7,5 bis 13,5, vorzugsweise 8,5 bis 12,5. Die wässrige alkalische Flotte kann ausser den Basen weitere Zusätze, z.B. Hydrotropiermittel, enthalten. Als Hydrotropiermittel wird bevorzugt Harnstoff verwendet, der z.B. in einer Menge von 25 bis 200 g/l Flotte, vorzugsweise 50 bis 150 g/l Flotte eingesetzt wird. Vorzugsweise wird das Fasermaterial nach der obigen Vorbehandlung getrocknet.

Nach dem Bedrucken gemäss dem Tintenstrahldruck-Verfahren wird das Fasermaterial vorteilhafterweise getrocknet, vorzugsweise bei Temperaturen bis 150°C, insbesondere 80 bis 120°C, und anschliessend einem Hitzebehandlungsprozess unterworfen, um den Druck zu vervollständigen, bzw. den Farbstoff zu fixieren.

Die Hitzebehandlung kann z.B. durch ein Warmverweilverfahren, einen Thermosolierprozess oder vorzugsweise durch ein Dämpfverfahren durchgeführt werden.

Beim Dämpfverfahren wird das bedruckte Fasermaterial z.B. einer Behandlung in einem Dämpfer mit gegebenenfalls überhitztem Dampf, zweckmässigerweise bei einer Temperatur von 95 bis 180° C, vorteilhafterweise im Sattdampf, unterzogen.

Im Anschluss wird das bedruckte Fasermaterial in der Regel in üblicher Weise mit Wasser ausgewaschen um nichtfixierten Farbstoff zu entfernen.

Die nach dem erfindungsgemässen Verfahren erhältlichen Färbungen und Drucke weisen gute Allgemeinechtheiten auf; sie besitzen z.B. eine hohe Faser-Farbstoff-Bindungsstabilität sowohl im sauren als auch im alkalischen Bereich, gute Nassechtheiten, wie Wasch-, Wasser-, Seewasser-, Überfärbe-und Schweissechtheit, eine gute Chlorechtheit, Reibechtheit, Bügelechtheit und Plissierechtheit sowie scharfe Konturen und eine hohe Farbstärke. Hervorzuheben ist ferner die sehr gute Lichtechtheit.

Gegenstand der vorliegenden Erfindung sind ferner Reaktivfarbstoffe der Formel 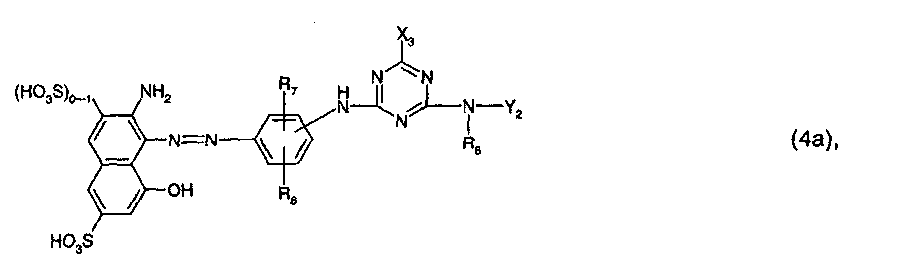 worin
R₆ Wasserstoff oder gegebenenfalls durch Hydroxy, Sulfo oder Sulfato substituiertes C₁-C₄-Alkyl ist,
R₇ Sulfo und R₈ Wasserstoff sind,
X₃ Fluor, und
Y₂ Wasserstoff, gegebenenfalls durch Hydroxy, Sulfo oder Sulfato substituiertes und gegebenenfalls durch Sauerstoff unterbrochenes C₁-C₈-Alkyl, oder der Rest -N(R₆)-Y₂ Morpholino bedeutet.

Für die einzelnen Substituenten sowie die Reaktivfarbstoffe der Formel (4a) gelten die oben angegebenen Bevorzugungen.

Gegenstand der vorliegenden Erfindung ist ferner ein Verfahren zur Herstellung der Reaktivfarbstoffe der Formel (4a), welches dadurch gekennzeichnet ist, dass man eine Verbindung der Formel 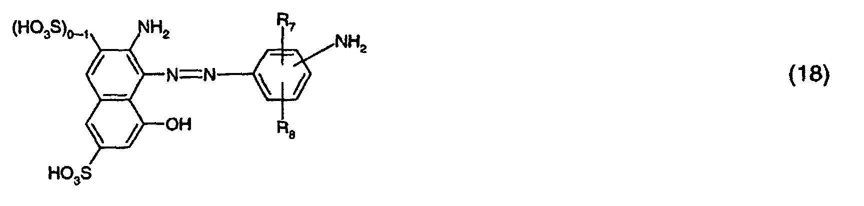 mit einer Verbindung der Formel 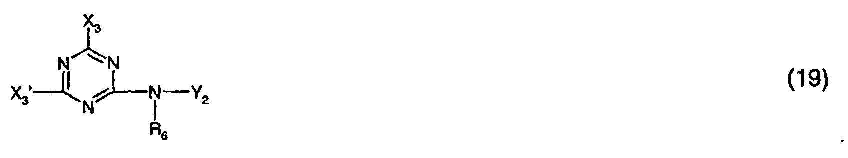 kondensiert,
oder eine Verbindung der Formel (18) Cyanurfluorid kondensiert und das erhaltene Produkt anschliessend mit einer Verbindung der Formel 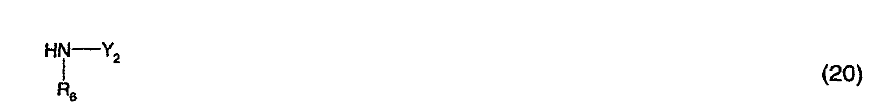 kondensiert,
wobei R₆, R₇, R₈, Y₂ und X₃ die unter Formel (4a) angegebenen Bedeutungen haben und X₃' die unter Formel (4a) für X₃ angegebenen Bedeutungen hat.

Die einzelnen Kondensationsreaktionen erfolgen z.B. gemäss an sich bekannter Verfahren, in der Regel in wässriger Lösung, bei einer Temperatur von z.B. 0 bis 50°C, insbesondere 0 bis 30°C, und einem pH-Wert von z.B. 3 bis 10, insbesondere 3 bis 8.

Die weiteren für das erfindungsgemässe Verfahren verwendeten Reaktivfarbstoffe sind bekannt oder können in Analogie zu bekannten Farbstoffen hergestellt werden.

So können beispielsweise Reaktivfarbstoffe der Formel (1) erhalten werden, indem man eine Verbindung der Formel 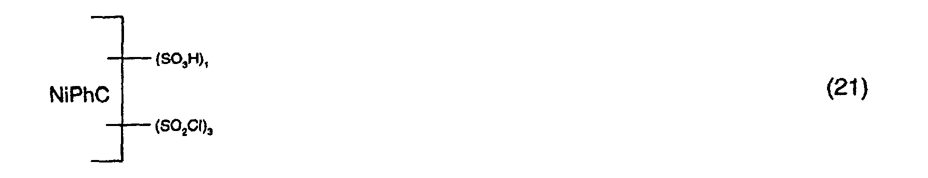 mit einer Verbindung der Formel 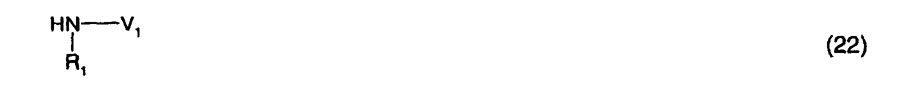 kondensiert, wobei NiPhC, R₁ und V₁ die unter Formel (1) angegebenen Bedeutungen haben.

Die Kondensationsreaktion erfolgt z.B. gemäss an sich bekannter Verfahren, in der Regel in wässriger Lösung, bei einer Temperatur von z.B. 0 bis 50°C, insbesondere 0 bis 30°C, und einem pH-Wert von z.B. 3 bis 10, insbesondere 3 bis 8.

Gegebenenfalls können weitere Kondensationsreaktionen angeschlossen werden. So kann z.B., falls der Rest V₁ der Verbindung der Formel (22) eine weitere Aminogruppe enthält, diese Aminogruppe mit Cyanurchlorid oder Cyanurfluorid kondensiert werden. Im Anschluss daran kann in den Cyanurchlorid- oder Cyanurfluoridrest des so erhaltenen Zwischenprodukts durch Kondensation ein Aminorest eingeführt werden. Die einzelnen Kondensationsreaktionen können z.B. wie oben angegeben erfolgen.

Die erfindungsgemässen Reaktivfarbstoffe der Formel (4a) ergeben Färbungen und Drucke mit guten Allgemeinechtheiten; sie besitzen z.B. eine hohe Faser-Farbstoff-Bindungsstabilität sowohl im sauren als auch im alkalischen Bereich, eine gute Lichtechtheit und gute Nassechtheiten, wie Wasch-, Wasser-, Seewasser-, Übertärbe-and Schweissechtheit, eine gute Chlorechtheit, Reibechtheit, Bügelechtheit und Plissierechtheit sowie scharfe Konturen und eine hohe Farbstärke. Besondere Eignung finden die Reaktivfarbstoffe der Formel (4a) in dem erfindungsgemässen Verfahren.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Herstellungsbeispiel 1:

a) 21,8 Teile 4-Nitroanilin-2-sulfonsäure werden in 350 Teilen heissem Wasser verrührt und mit einer wässrigen Natriumhydroxidlösung (30%) neutral gestellt. Zu dieser Lösung gibt man 6,9 Teile Natriumnitrit und rührt bis zur vollständigen Lösung.
   Diese Lösung tropft man bei einer Temperatur von 0°C in eine Mischung von 100 Teilen Eis und 25 Teilen Salzsäure (30%). Bei einem auf Kaliumjodidpapier sichtbaren Nitritüberschuss wird eine halbe Stunde bei einer Temperatur von 0 bis 2 °C nachgerührt und der Nitritüberschuss wird durch Zugabe von Sulfaminsäurelösung vernichtet.
b) Separat werden 31,9 Teile Sulfogammasäure in 125 Teilen Wasser mit 4 Teilen Natriumhydroxid neutral gestellt und klar gelöst. Diese Sulfogammasäurelösung wird langsam zur wie oben unter a) angegeben hergestellten Lösung dosiert. Die Farbstoffbildung erfolgt sofort und wird durch Anhebung des pH-Wertes auf einen Wert von 2,0 mittels Zugabe einer wässrigen Natriumacetatlösung vervollständigt.
   Man erhält eine Lösung, welche die in Form der freien Säure angegebene Verbindung der Formel 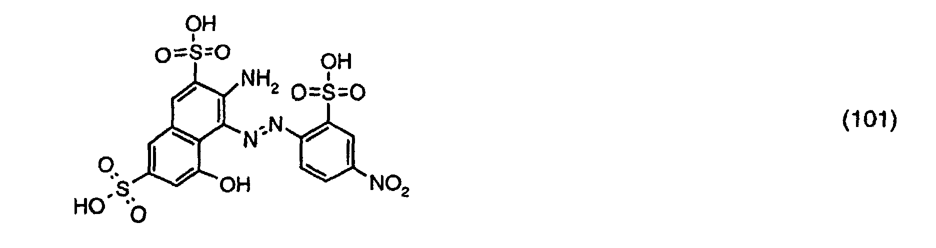 enthält.
c) Die wie unter b) angegeben hergestellte Lösung der Verbindung der Formel (101) wird auf eine Temperatur von 40°C erwärmt und mit Natriumhydroxid auf einen pH-Wert von 9 gestellt. Nun tropft man bei einer Temperatur von ca. 40°C innerhalb von einer Stunde die folgende Lösung ein:
   40,9 Teile Natriumsulfid und 7,1 Teile elementarer Schwefel, gelöst in 250 Teilen 80°C heissem Wasser.
   Der pH-Wert wird durch Zudosierung von Salzsäurelösung bei einem Wert von 9,0 gehalten. Der Endpunkt wird mittels Dünnschichtchromatographie festgestellt.
   Die erhaltene Verbindung wird durch Zusatz von 140 Teilen Natriumchlorid ausgefällt, abfiltriert und mit einer 10%-igen wässrigen Natriumchloridlösung gewaschen. Man erhält eine Verbindung, welche in Form der freien Säure der Formel 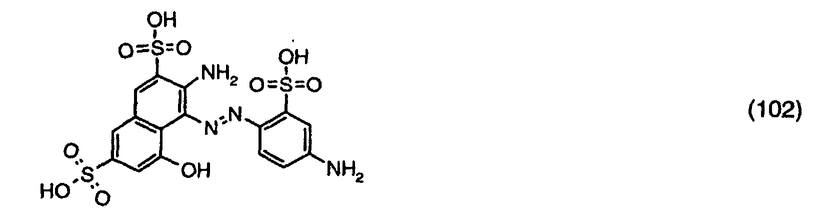 entspricht.
d) Es werden 1,84 Teile Cyanurchlorid in 50 Teilen Eiswasser zusammen mit 0,1 Teilen eines oberflächenaktiven Hilfsmittels und 0,2 Teilen Dinatriumhydrogenphosphat intensiv verrührt. Dazu gibt man 2,53 Teile Anilin-2,5-disulfonsäure. Die Temperatur wird stets bei 0°C gehalten. Der pH-Wert wird mit wässriger Natriumhydroxidlösung auf 4,0 angehoben und solange konstant gehalten, bis ein Testchromatogramm keine unkondensierte Anilin-2,5-disulfonsäure mehr anzeigt.
   Nun setzt man 5,18 Teile der gemäss c) erhaltenen Verbindung der Formel (102) hinzu, stellt den pH-Wert auf 7,0 ein und erwärmt die Reaktionsmischung auf 30°C und hält diese Bedingungen solange konstant, bis ein Chromatogramm keine unkondensierte Verbindung der Formel (102) mehr anzeigt. Man erhält eine chromatographisch einheitliche Lösung des nachfolgend angegebenen Reaktivfarbstoffes der Formel (103). Nach Zugabe von Natriumchlorid wird ausgefällt, abfiltriert und getrocknet. Man erhält einen Reaktivfarbstoff, welcher in Form der freien Säure der Verbindung der Formel 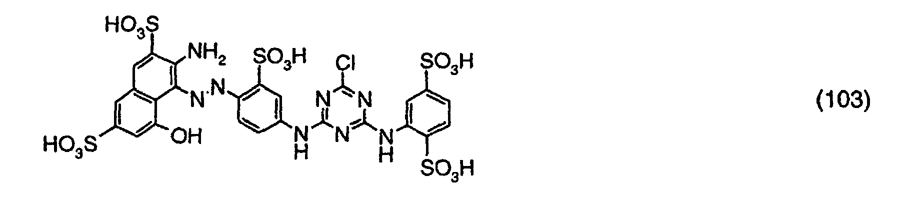 entspricht. Der Reaktivfarbstoff der Formel (103) färbt Baumwolle in roten Farbtönen.

### Herstellungsbeispiele 2 bis 24:

In analoger Weise zu den Angaben in Herstellungsbeispiel 1 können die in der folgenden Tabelle 1 in Spalte 2 angegebenen Reaktivfarbstoffe erhalten werden, welche Baumwolle in roten Farbtönen färben.

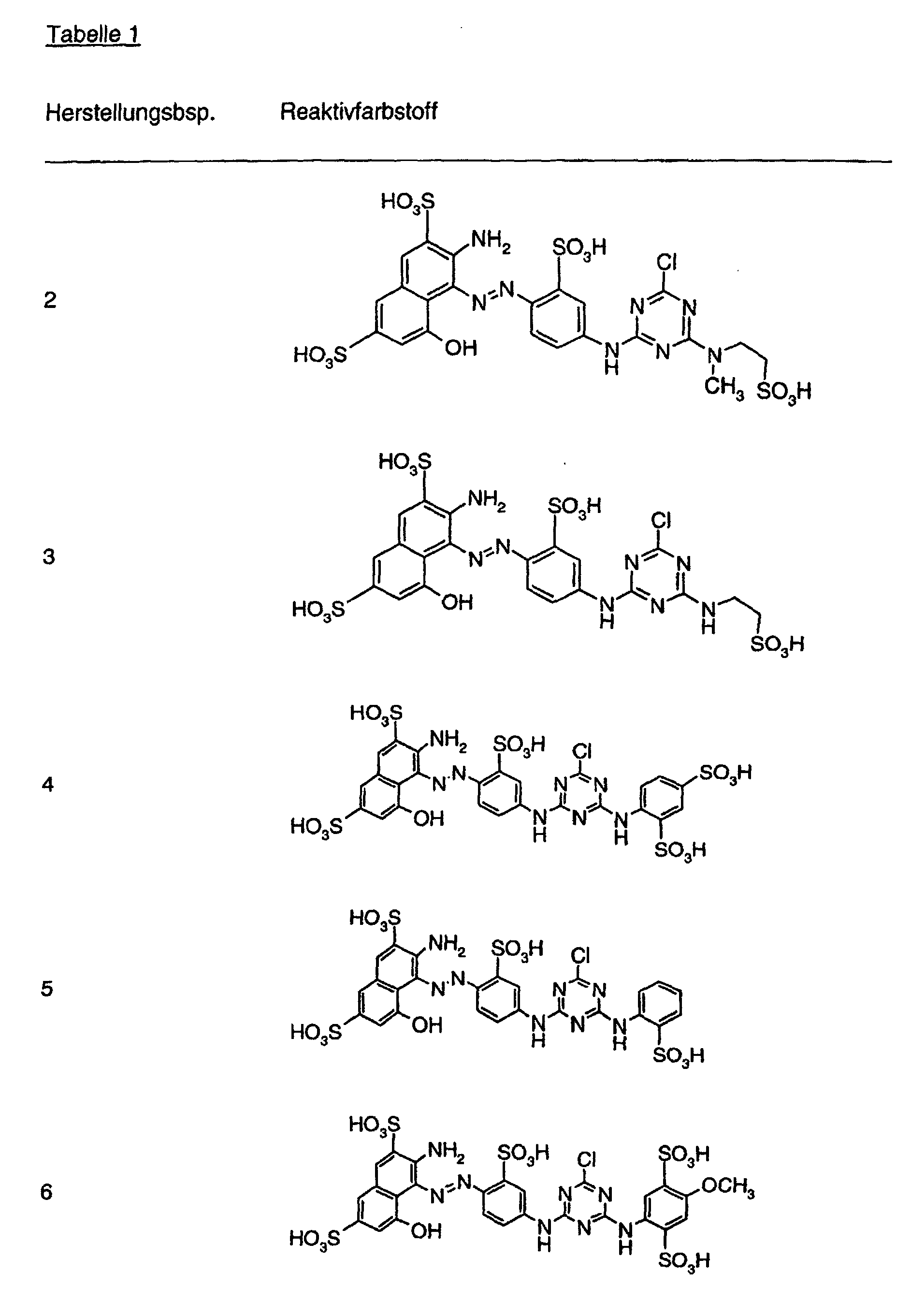

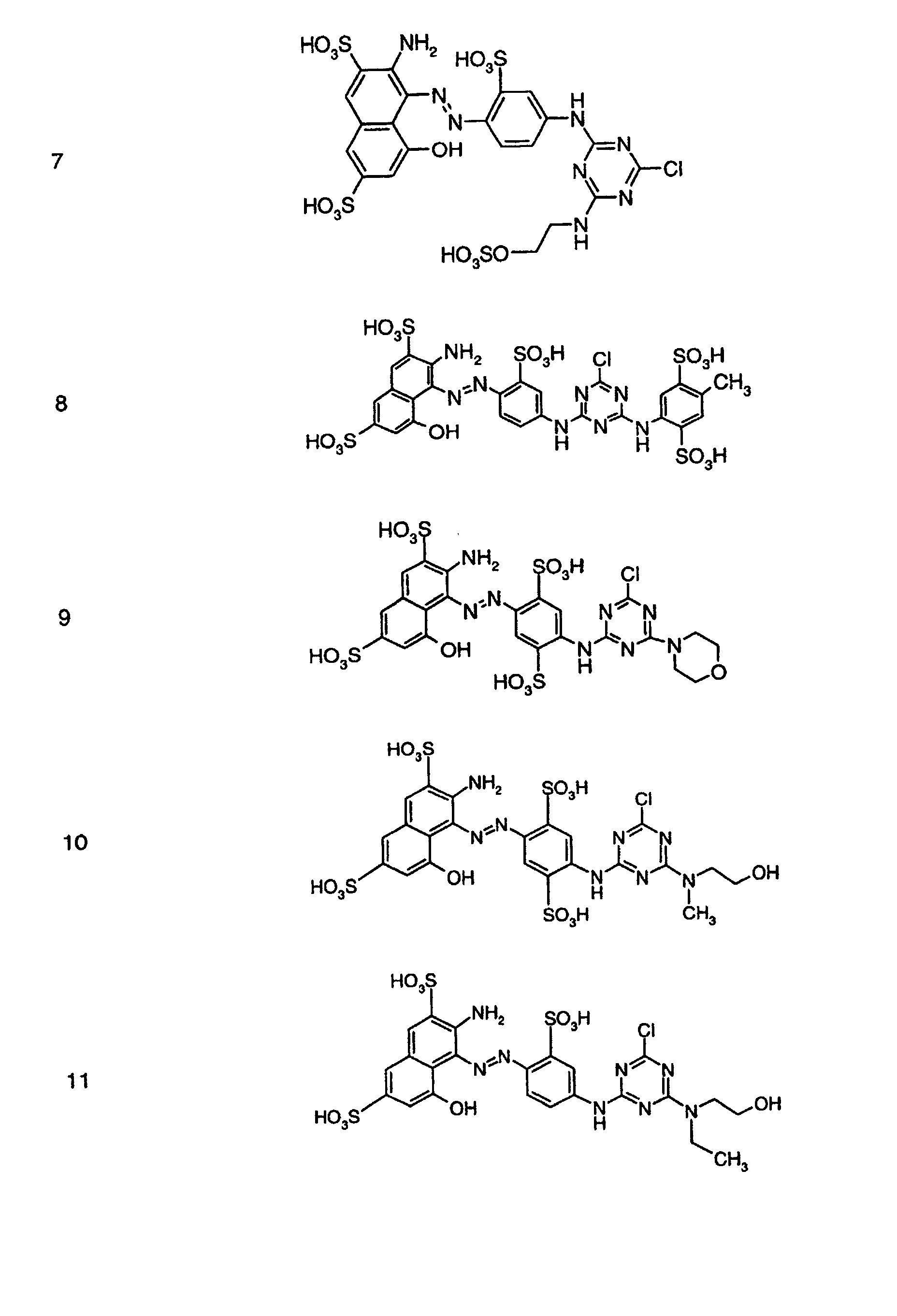

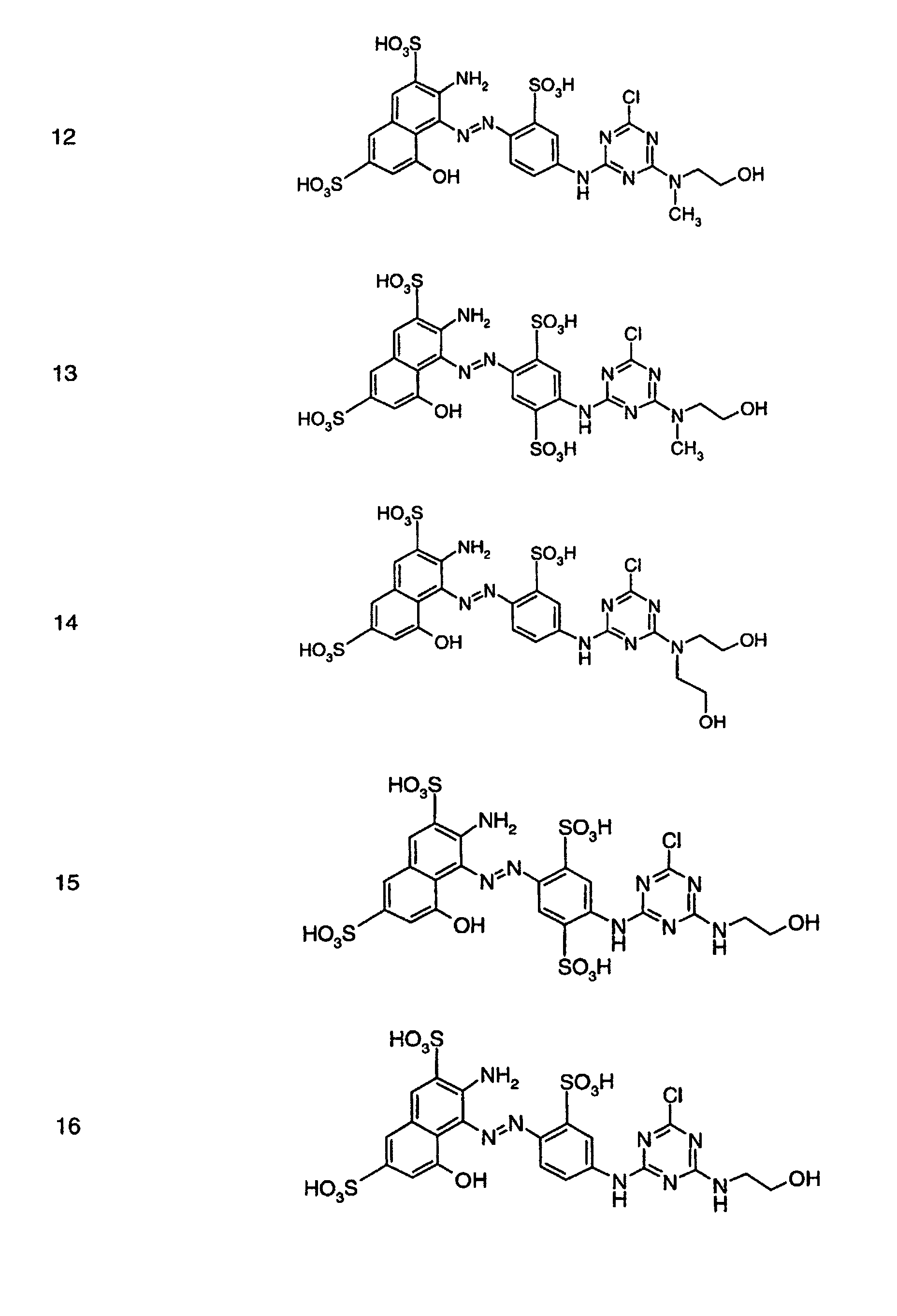

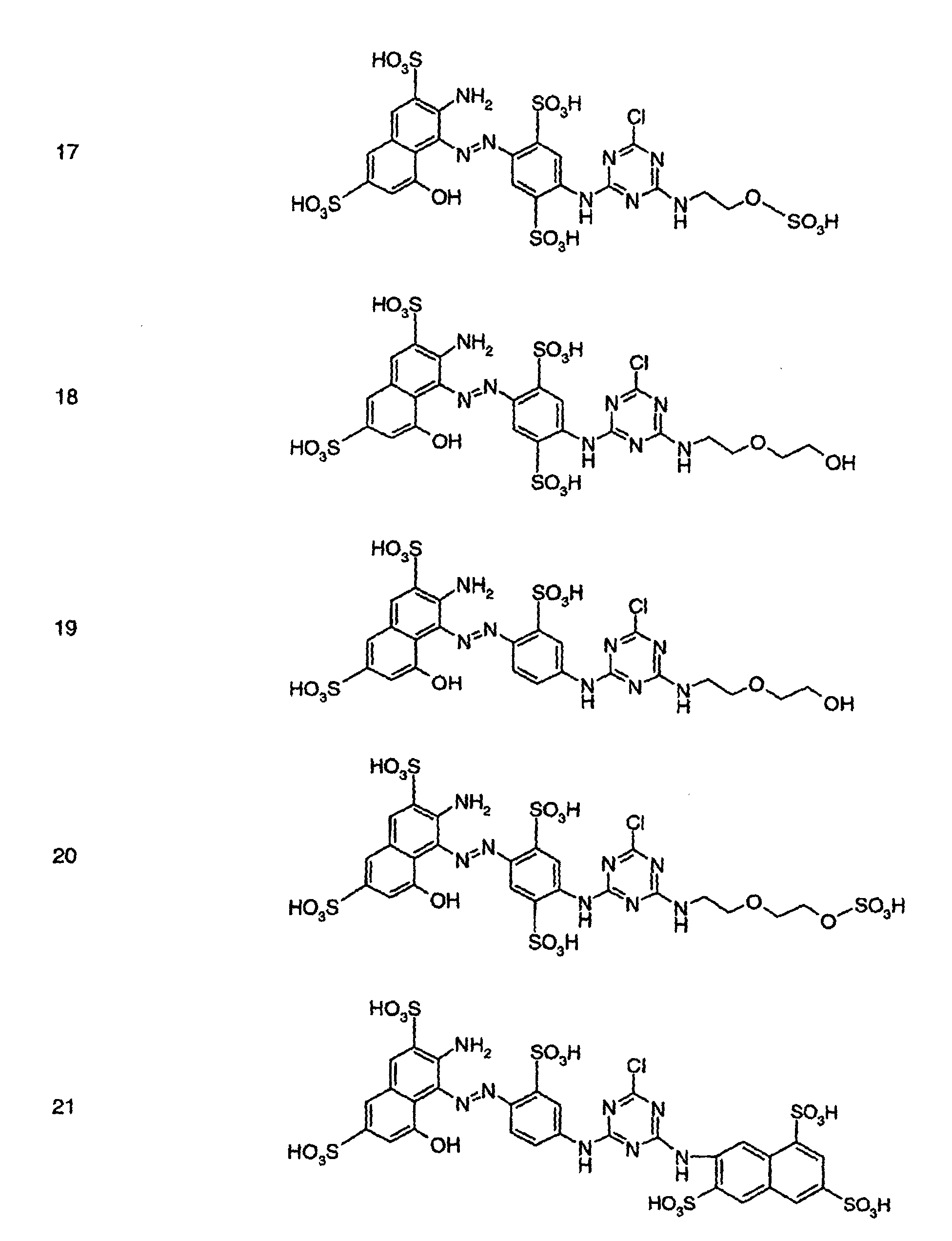

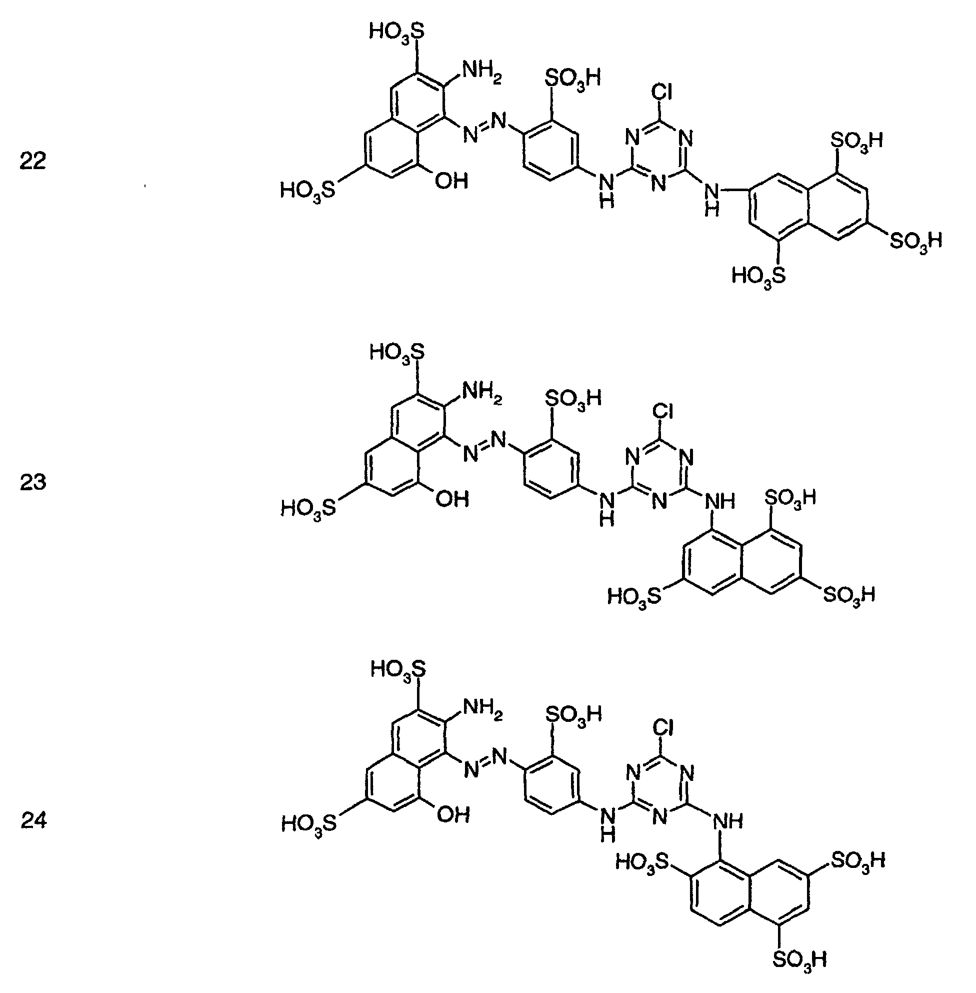

### Herstellungsbeispiel 25:

28,7 Teile Anilin-2,5-disulfonsäure werden in 150 Teilen Wasser verrührt und mit 2,0 Teilen Natriumhydroxid neutral gelöst. Nach Zugabe der üblichen Puffer- und Netzmittelmenge wird auf 0°C gekühlt und zusätzlich mit wenig feingestossenem Eis versetzt. Dann dosiert man bei schnellem Rühren 4,7 Volumenteile Cyanurfluorid zu und hält den pH-Wert durch Zugabe von 15%-iger Natronlauge bei 6,0. Anschliessend rührt man kurz nach. Zu dieser Reaktionsmasse tropft man eine Lösung von 24,6 Teilen der Verbindung der Formel (102), die vorab in 300 Teilen Wasser bei 30°C neutral gelöst wurde, und hält den pH-Wert mit 15%-iger Natronlauge bei 6,0. Nach der Zugabe wird die Temperatur während einer Stunde bei 25°C gehalten. Die Reaktionslösung wird dialisiert und gefriergetrockent. Man erhält einen Reaktivfarbstoff, welcher in Form der freien Säure der Verbindung der Formel (104) 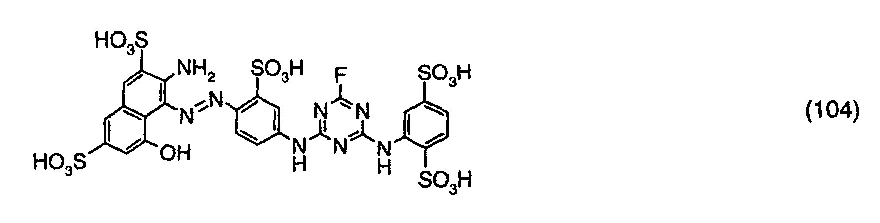 entspricht. Der Reaktivfarbstoff der Formel (104) färbt Baumwolle in roten Farbtönen.

### Herstellungsbeispiel 26:

In analoger Weise zu den Angaben in Herstellungsbeispiel 25 kann der folgende Reaktivfarbstoff der Formel (105) 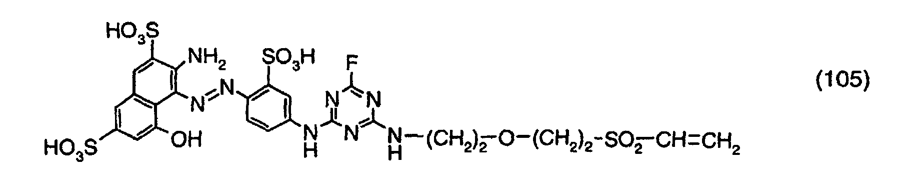 erhalten werden, welcher Baumwolle in roten Farbtönen färbt.

### Herstellungsbeispiel 27:

a) In einem Sulfierkolben werden 345 Teile Chlorsulfonsäure vorgelegt und es werden bei einer Temperatur von 20 bis 25°C innerhalb von einer Stunde 85,7 Teile Nickelphthalocyanin eingetragen. Anschliessend wird eine halbe Stunde nachgerührt.
   Nun erhöht man die Temperatur innerhalb von zwei Stunden auf 110°C und hält diese Temperatur noch weitere 30 Minuten. Dann wird die Temperatur innerhalb von einer Stunde auf 130°C erhöht und weitere sechs Stunden bei ca. 133°C gehalten.
   Die Temperatur wird auf 80°C gesenkt, es werden 59 Teile Thionylchlorid innerhalb von zwei Stunden bei einer Temperatur von 77 bis 80°C zugetropft und die Temperatur wird noch während vier Stunden gehalten. Die Reaktionsmasse wird abgekühlt. Die Masse beträgt 500 Teile. Die Masse kann auf Vorrat gehalten werden. Je nach Bedarf wird ein aliquoter Teil auf Eiswasser ausgetragen, filtriert und gewaschen, wobei man die in Form der freien Säure angegebene Nickelphthalocyanin-Verbindung der Formel 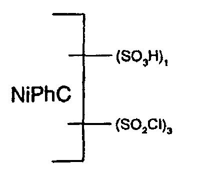 erhält.
b) 66,6 Teile der wie unter a) angegeben erhaltenen Reaktionsmasse werden auf 500 Teile Eis und 100 Teile Wasser ausgetragen und es wird die Nickelphthalocyaniritrisulfochloridmonosulfonsäure von der anhaftenden Säure mit einer 5%-igen Natriumchloridlösung freigewaschen.
   5,64 Teile 1,3-Phenylendiamin-4-sulfonsäure werden in 100 Teilen Wasser mit 0,8 Teilen Natriumhydroxid neutral gelöst. Man versetzt die Lösung mit 50 Teilen Feineis und trägt die wie oben angegeben von der anhaftenden Säure freigewaschene Nickelphthalocyanintrisulfochloridmonosulfonsäure ein. Der pH-Wert wird bei 5,0 und die Temperatur während 12 Stunden bei 0°C gehalten. Dann wird die Temperatur auf 50°C angehoben und während zwei Stunden gehalten. Eine Gehaltsbestimmung zeigt, dass 1,0 Aequivalent des Amins mit dem Sulfochlorid kondensiert ist. Die Reaktionslösung wird mit 20 Teilen Natriumchlorid versetzt, die Fällung wird abfiltriert und mit einer 10%-igen wässrigen Natriumchloridlösung von der nichtkondensierten Phenylendiaminsulfonsäure freigewaschen.
   Man erhält ein Zwischenprodukt, welches in Form der freien Säure der Verbindung der Formel 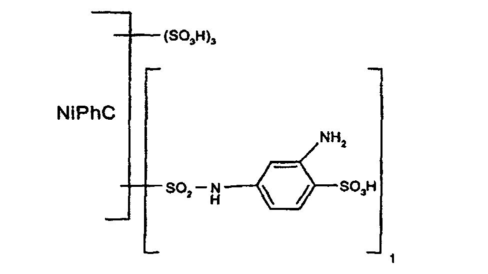 entspricht.
c) 3,7 Teile Cyanurchlorid werden in 70 Teilen Eis und 30 Teilen Wasser unter Zusatz eines oberflächenaktiv wirksamen Mittels, sowie 0,2 Teilen Dinatriumhydrogenphosphat während 10 Minuten intensiv verrührt.
   Dann wird die Paste des wie unter b) angegeben erhaltenen Zwischenprodukts eingetragen und es wird bei einer Temperatur von 0°C und einem pH-Wert von 6,0 während sechs Stunden kondensiert. Dann trägt man 1,3 Teile Ammoniumchlorid ein, erhöht die Temperatur auf 30 bis 35°C und rührt weitere zwölf Stunden bei einem pH-Wert von 8,0 bis 8,5. Die erhaltene Lösung wird mittels Dialyse entsalzt und zur Trockne eingedampft. Man erhält 27 Teile eines Reaktivfarbstoffs, der in Form der freien Säure der Verbindung der Formel 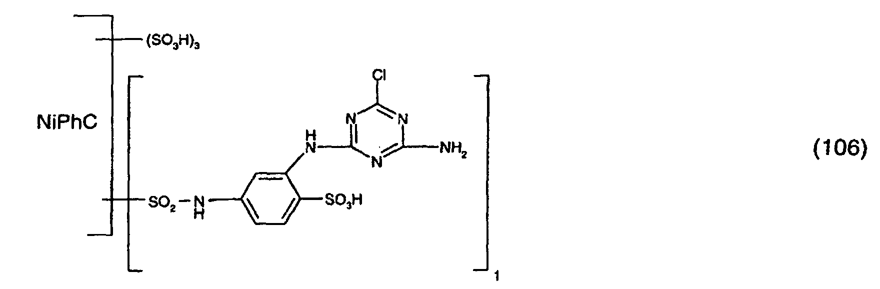 entspricht. Der Reaktivfarbstoff der Formel (106) färbt Baumwolle in türkisblauen Farbtönen.

### Herstellungsbeispiele 28 bis 34:

In analoger Weise zu den Angaben in Herstellungsbeispiel 27 können Reaktivfarbstoffe der Formel 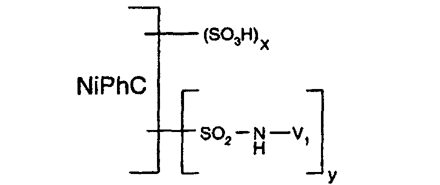 erhalten werden, worin V₁, x und y die in der folgenden Tabelle 2 in den Spalten 2 bis 4 angegebenen Bedeutungen haben. Die in der folgenden Tabelle 2 angegebenen Reaktivfarbstoffe färben Baumwolle in türkisblauen Farbtönen.

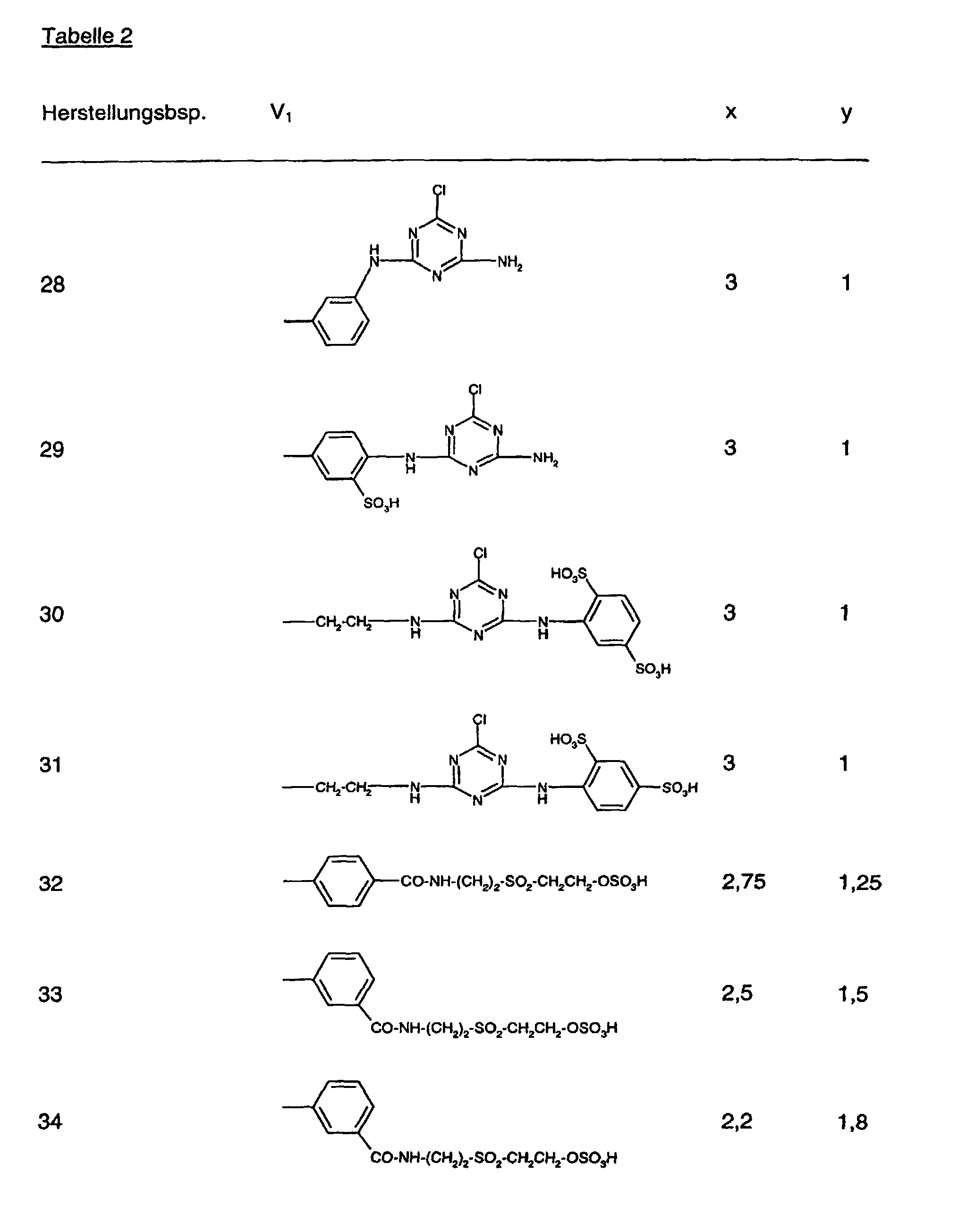

### Herstellungsbeispiel 35:

28,7 Teile Anilin-2,5-disulfonsäure werden in 150 Teilen Wasser verrührt und mit 2,0 Teilen Natriumhydroxid neutral gelöst. Nach Zugabe der üblichen Puffer- und Netzmittelmenge wird auf 0°C gekühlt und zusätzlich mit wenig feingestossenem Eis versetzt. Dann dosiert man bei schnellem Rühren 4,7 Volumenteile Cyanurfluorid zu und hält den pH-Wert durch Zugabe von 15%-iger Natronlauge bei 6,0. Anschliessend rührt man kurz nach. Zu dieser Reaktionsmasse tropft man eine warme, neutrale 10%-ige Lösung von 49,0 Teilen der Verbindung der Formel 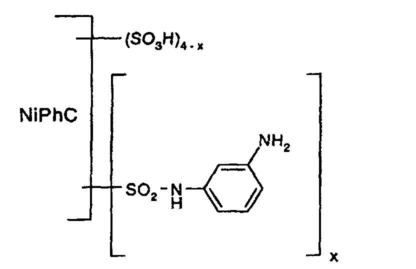 (x = 1,5; Herstellung analog Herstellungsbeispiel 27 a) und b)) bei 10 bis 15°C zu, wobei der pH-Wert mit 15%-iger Natronlauge bei 7,0 gehalten wird. Nach der Zugabe lässt man die Temperatur auf ca. 25°C ansteigen, bis die Laugenaufnahme beendet ist. Die Reaktionslösung wird dialisiert und gefriergetrockent. Man erhält einen Reaktivfarbstoff, welcher in Form der freien Säure der Verbindung der Formel (107) 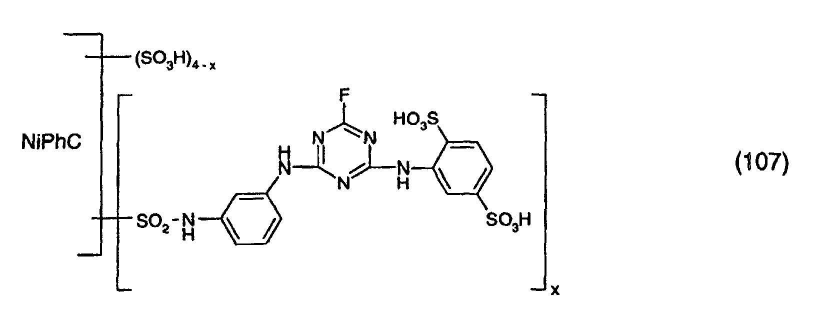 entspricht. Der Reaktivfarbstoff der Formel (107) färbt Baumwolle in türkisblauen Farbtönen.

### Applikationsbeispiel 1:

a) Mercerisiertes Baumwoll-Satin wird mit einer Flotte, enthaltend 40 g/l Natriumcarbonat und 100 g/l Harnstoff, foulardiert (Flottenaufnahme 70%) und getrocknet.
b) Auf das gemäss Schritt a) vorbehandelte Baumwoll-Satin werden auf die gleiche Substratstelle
eine Tinte A, enhaltend 15 Gew.% des Reaktivfarbstoffs der Formel 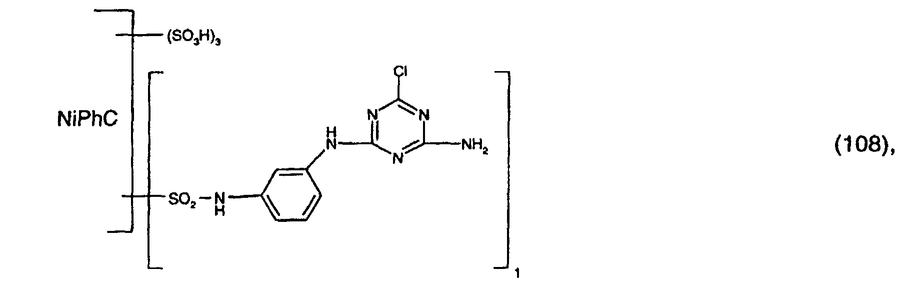 20 Gew.% 1,2-Propylenglykol und 65 Gew.% Wasser,
und
eine Tinte B, enhaltend 15 Gew.% des Reaktivfarbstoffs der Formel 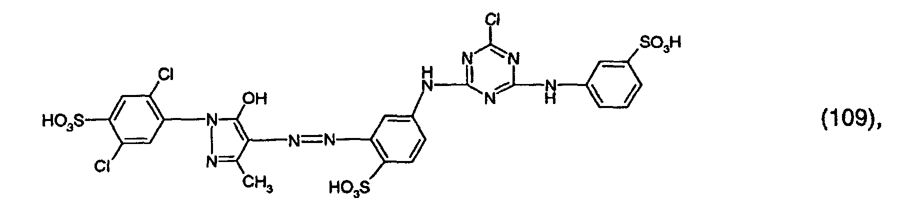 20 Gew.% 1,2-Propylenglykol und 65 Gew.% Wasser, mit zwei verschiedenen Drop-on-Demand Piezo Inkjet-Köpfen aufgedruckt. Der Druck wird vollständig getrocknet und 8 Minuten bei 102°C im Sattdampf fixiert, kalt gespült, kochend ausgewaschen, nochmals gespült und getrocknet. Man erhält einen waschechten grünen Druck mit sehr hoher Lichtechtheit.

Verfährt man wie in Applikationsbeispiel 1 angegeben, verwendet jedoch eine Tinte A, welche anstelle von 15 Gew.% des Reaktivfarbstoffs der Formel (108) 15 Gew.% eines der Reaktivfarbstoffe gemäss den Herstellungsbeispielen 27 und 29 bis 35 enthält, so werden analoge Drucke erhalten.

Verfährt man wie in Applikationsbeispiel 1 angegeben, verwendet jedoch eine Tinte B, welche anstelle von 15 Gew.% des Reaktivfarbstoffs der Formel (109) 11 Gew.% des Reaktivfarbstoffs der Formel (109) und 4 Gew.% des Reaktivfarbstoffs der Formel (112) enthält, so werden analoge Drucke erhalten.

### Applikationsbeispiel 2:

a) Laugiertes Viskose-Gewebe wird mit einer Flotte, enthaltend 40 g/l Natriumcarbonat und 150 g/l Harnstoff, foulardiert (Flottenaufnahme 70%) und getrocknet.
b) Auf das gemäss Schritt a) vorbehandelte Baumwoll-Satin werden auf die gleiche Substratstelle
eine Tinte A, enhaltend 15 Gew.% des Reaktivfarbstoffs der Formel (108),
20 Gew.% 1,2-Propylenglykol und 65 Gew.% Wasser,
und
eine Tinte B, enhaltend 15 Gew.% des Reaktivfarbstoffs der Formel 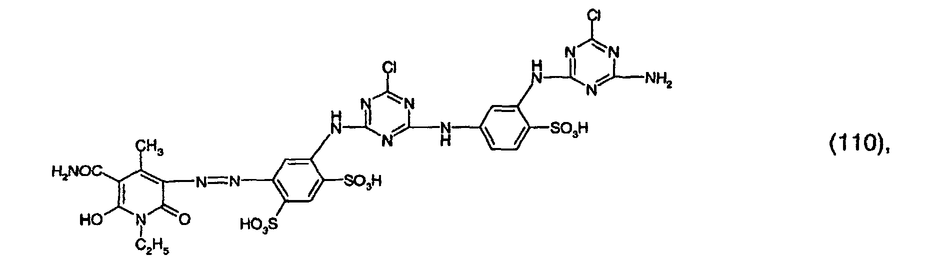 20 Gew.% 1,2-Propylenglykol und 65 Gew.% Wasser, mit zwei verschiedenen Drop-on-Demand Piezo Inkjet-Köpfen aufgedruckt. Der Druck wird vollständig getrocknet und 8 Minuten bei 102°C im Sattdampf fixiert, kalt gespült, kochend ausgewaschen, nochmals gespült und getrocknet. Man erhält einen waschechten grünen Druck mit sehr hoher Lichtechtheit.

Verfährt man wie in Applikationsbeispiel 2 angegeben, verwendet jedoch eine Tinte A, welche anstelle von 15 Gew.% des Reaktivfarbstoffs der Formel (108) 15 Gew.% eines der Reaktivfarbstoffe gemäss den Herstellungsbeispielen 27 und 29 bis 35 enthält, so werden analoge Drucke erhalten.

### Applikationsbeispiel 3:

a) Mercerisiertes Baumwoll-Satin wird mit einer Flotte, enthaltend 40 g/l Natriumcarbonat und 100 g/l Harnstoff, foulardiert (Flottenaufnahme 70%) und getrocknet.
b) Auf das gemäss Schritt a) vorbehandelte Baumwoll-Satin werden auf die gleiche Substratstelle
eine Tinte A, enhaltend 15 Gew.% des Reaktivfarbstoffs der Formel (108),
20 Gew.% 1,2-Propylenglykol und 65 Gew.% Wasser,
und
eine Tinte B, enhaltend 15 Gew.% des Reaktivfarbstoffs der Formel 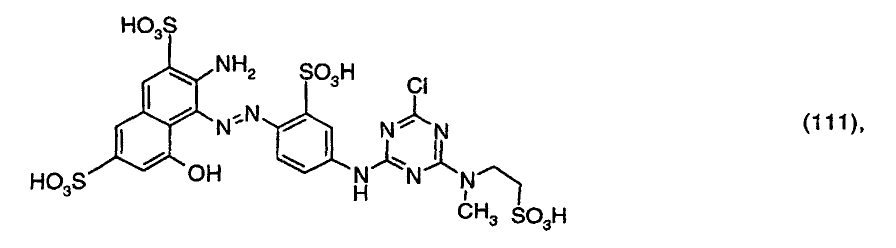 20 Gew.% 1,2-Propylenglykol und 65 Gew.% Wasser, mit zwei verschiedenen Drop-on-Demand Piezo Inkjet-Köpfen aufgedruckt. Der Druck wird vollständig getrocknet und 8 Minuten bei 102°C im Sattdampf fixiert, kalt gespült, kochend ausgewaschen, nochmals gespült und getrocknet. Man erhält einen waschechten violetten Druck mit sehr hoher Lichtechtheit.

Verfährt man wie in Applikationsbeispiel 3 angegeben, verwendet jedoch eine Tinte A, welche anstelle von 15 Gew.% des Reaktivfarbstoffs der Formel (108) 15 Gew.% eines der Reaktivfarbstoffe gemäss den Herstellungsbeispielen 27 und 29 bis 35 enthält, so werden analoge Drucke erhalten.

Verfährt man wie in Applikationsbeispiel 3 angegeben, verwendet jedoch eine Tinte B, welche anstelle von 15 Gew.% des Reaktivfarbstoffs der Formel (111) 15 Gew.% eines der Reaktivfarbstoffe gemäss den Herstellungsbeispielen 1 und 3 bis 26 enthält, so werden analoge Drucke erhalten.

### Applikationsbeispiel 4:

a) Mercerisiertes Baumwoll-Satin wird mit einer Flotte, enthaltend 40 g/l Natriumcarbonat und 100 g/l Harnstoff, foulardiert (Flottenaufnahme 70%) und getrocknet.
b) Auf das gemäss Schritt a) vorbehandelte Baumwoll-Satin werden auf die gleiche Substratstelle
eine Tinte A, enhaltend 15 Gew.% des Reaktivfarbstoffs der Formel (108),
20 Gew.% 1,2-Propylenglykol und 65 Gew.% Wasser,
eine Tinte B, enhaltend 15 Gew.% des Reaktivfarbstoffs der Formel 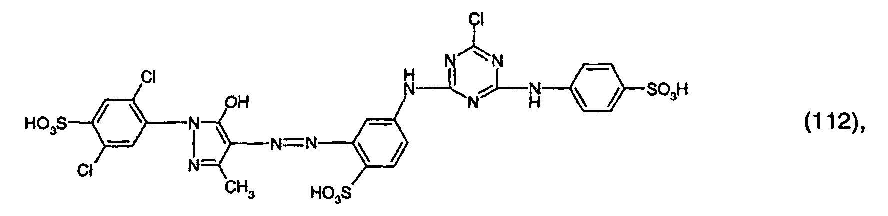 20 Gew.% 1,2-Propylenglykol und 65 Gew.% Wasser, und
eine Tinte C, enhaltend 5 Gew.% des Reaktivfarbstoffs der Formel 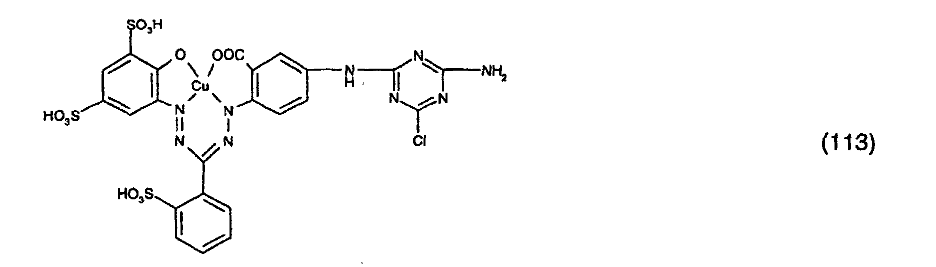 und 10 Gew% des Reaktivfarbstoffs der Formel 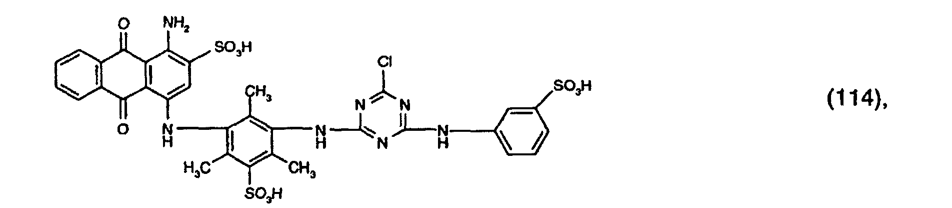 20 Gew.% 1,2-Propylenglykol und 60 Gew.% Wasser, mit drei verschiedenen Drop-on-Demand Piezo Inkjet-Köpfen aufgedruckt. Der Druck wird vollständig getrocknet und 8 Minuten bei 102°C im Sattdampf fixiert, kalt gespült, kochend ausgewaschen, nochmals gespült und getrocknet. Man erhält einen waschechten grünen Druck mit sehr hoher Lichtechtheit.

Verfährt man wie in Applikationsbeispiel 4 angegeben, verwendet jedoch eine Tinte A, welche anstelle von 15 Gew.% des Reaktivfarbstoffs der Formel (108) 15 Gew.% eines der Reaktivfarbstoffe gemäss den Herstellungsbeispielen 27 und 29 bis 35 enthält, so werden analoge Drucke erhalten.

Verfährt man wie in Applikationsbeispiel 4 angegeben, verwendet jedoch eine Tinte B, welche anstelle von 15 Gew.% des Reaktivfarbstoffs der Formel (112) 11 Gew.% des Reaktivfarbstoffs der Formel (109) und 4 Gew.% des Reaktivfarbstoffs der Formel (112) enthält, so werden analoge Drucke erhalten.

### Applikationsbeispiel 5:

1,8 Teile einer Mischung der Reaktivfarbstoffe der Formeln (109) und (112) im Verhältnis von 4:1 und
3 Teile des Reaktivfarbstoffs der Formel (108)
werden unter schnellem Rühren in 100 Teile einer Stammverdickung, enthaltend 50 Teile 5%-ige Natriumalginat-Verdickung, 10 Teile Harnstoff, 1 Teil m-nitrobenzolsufonsaures Natrium, 1,5 Teile kalziniertes Natriumcarbonat und 32,7 Teile Wasser eingerührt. Mit der so erhaltenden Druckpaste bedruckt man mercerisiertes Baumwoll-Satin, trocknet und fixiert den erhaltenen bedruckten Stoff 8 Minuten bei 102°C im Sattdampf. Es wird kalt gespült, kochend ausgewaschen, nochmals gespült und getrocknet. Man erhält einen waschechten grünen Druck mit sehr hoher Lichtechtheit.

Verfährt man wie in Applikationsbeispiel 5 angegeben, verwendet jedoch anstelle von 3 Teilen des Reaktivfarbstoffs der Formel (108) 3 Teile eines der Reaktivfarbstoffe gemäss den Herstellungsbeispielen 27 und 29 bis 35, so werden analoge Drucke erhalten.

### Applikationsbeispiel 6:

0,8 Teile des Reaktivfarbstoffs der Formel (110) und
3 Teile des Reaktivfarbstoffs der Formel (108)
werden unter schnellem Rühren in 100 Teile einer Stammverdickung, enthaltend 50 Teile 5%-ige Natriumalginat-Verdickung, 15 Teile Harnstoff, 1 Teil m-nitrobenzolsufonsaures Natrium, 1,5 Teile kalziniertes Natriumcarbonat und 28,7 Teile Wasser eingerührt. Mit der so erhaltenden Druckpaste bedruckt man laugiertes Viskose-Gewebe, trocknet und fixiert den erhaltenen bedruckten Stoff 8 Minuten bei 102°C im Sattdampf. Es wird kalt gespült, kochend ausgewaschen, nochmals gespült und getrocknet. Man erhält einen waschechten grünen Druck mit sehr hoher Lichtechtheit.

Verfährt man wie in Applikationsbeispiel 6 angegeben, verwendet jedoch anstelle von 3 Teilen des Reaktivfarbstoffs der Formel (108) 3 Teile eines der Reaktivfarbstoffe gemäss den Herstellungsbeispielen 27 und 29 bis 35, so werden analoge Drucke erhalten.

### Applikationsbeispiel 7:

0,8 Teile des Reaktivfarbstoffs der Formel (111) und
3 Teile des Reaktivfarbstoffs der Formel (108)
werden unter schnellem Rühren in 100 Teile einer Stammverdickung, enthaltend 50 Teile 5%-ige Natriumalginat-Verdickung, 10 Teile Harnstoff, 1 Teil m-nitrobenzolsufonsaures Natrium, 1,5 Teile kalziniertes Natriumcarbonat und 33,7 Teile Wasser eingerührt. Mit der so erhaltenden Druckpaste bedruckt man mercerisiertes Baumwoll-Satin, trocknet und fixiert den erhaltenen bedruckten Stoff 8 Minuten bei 102°C im Sattdampf. Es wird kalt gespült, kochend ausgewaschen, nochmals gespült und getrocknet. Man erhält einen waschechten violetten Druck mit sehr hoher Lichtechtheit.

Verfährt man wie in Applikationsbeispiel 7 angegeben, verwendet jedoch anstelle von 3 Teilen des Reaktivfarbstoffs der Formel (108) 3 Teile eines der Reaktivfarbstoffe gemäss den Herstellungsbeispielen 27 und 29 bis 35, so werden analoge Drucke erhalten.

Verfährt man wie in Applikationsbeispiel 7 angegeben, verwendet jedoch anstelle von 0,8 Teilen des Reaktivfarbstoffs der Formel (111) 0,8 Teile eines der Reaktivfarbstoffe gemäss den Herstellungsbeispielen 1 und 3 bis 26, so werden analoge Drucke erhalten.

### Applikationsbeispiel 8:

1,8 Teile einer Mischung der Reaktivfarbstoffe der Formeln (109) und (112) im Verhältnis von 4:1 und
3 Teile des Reaktivfarbstoffs der Formel (108)
werden in 50 Teilen Wasser gelöst. Dazu gibt man 50 Teile einer Lösung, die pro Liter 5 g Natriumhydroxyd und 20 g kalziniertes Soda enthält. Mit der so erhaltenen Lösung wird ein gebleichtes Baumwollgewebe foulardiert, so dass es um 70% seines Gewichtes zunimmt, und auf eine Kaule aufgewickelt. Das Baumwollgewebe wird so während 6 Stunden bei Raumtemperatur gelagert. Danach wird die gefärbte Ware gespült, kochend ausgewaschen, nochmals gespült und getrocknet. Man erhält eine waschechte grüne Färbung mit sehr hoher Lichtechtheit.

Verfährt man wie in Applikationsbeispiel 8 angegeben, verwendet jedoch anstelle von 3 Teilen des Reaktivfarbstoffs der Formel (108) 3 Teile eines der Reaktivfarbstoffe gemäss den Herstellungsbeispielen 27 und 29 bis 35, so werden analoge Färbungen erhalten.

### Applikationsbeispiel 9:

1,8 Teile des Reaktivfarbstoffs der Formel (109) und
3 Teile des Reaktivfarbstoffs der Formel (108)
werden in 100 Teilen Wasser gelöst. Mit der so erhaltenen Lösung wird ein gebleichtes Baumwollgewebe foulardiert, so dass es um 70% seines Gewichtes zunimmt und getrocknet. Dann foulardiert man das Gewebe mit einer Lösung, die pro Liter 4 g Natriumhydroxyd und 300 g Natriumchlorid enthält und dämpft die Färbung während 30 Sekunden bei 102°C im Sattdampf. Danach wird die gefärbte Ware gespült, kochend ausgewaschen, nochmals gespült und getrocknet. Man erhält eine waschechte grüne Färbung mit sehr hoher Lichtechtheit.

Verfährt man wie in Applikationsbeispiel 9 angegeben, verwendet jedoch anstelle von 3 Teilen des Reaktivfarbstoffs der Formel (108) 3 Teile eines der Reaktivfarbstoffe gemäss den Herstellungsbeispielen 27 und 29 bis 35, so werden analoge Färbungen erhalten.

### Applikationsbeispiel 10:

1,0 Teile des Reaktivfarbstoffs der Formel 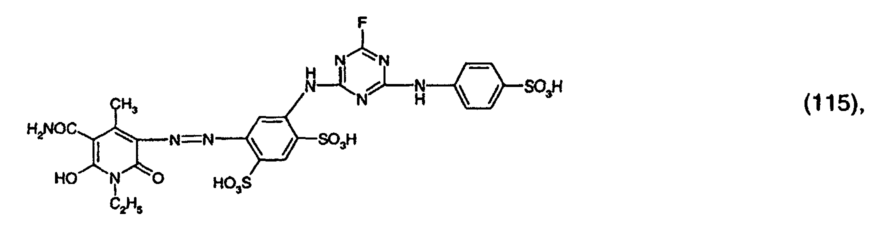 und 3 Teile des Reaktivfarbstoffs gemäss Herstellungsbeispiel 32 werden in 200 Teilen Wasser gelöst. Dazu gibt man 800 Teile einer Lösung, die pro Liter 50 g Glaubersalz enthält. In dieses Färbebad geht man bei 40°C mit 100 Teilen einer gebleichten Baumwoll-Wirkware ein. Nach 45 Minuten werden 50 Teile einer Lösung, die pro Liter 16 g Natriumhydroxyd und 20 g kalziniertes Soda enthält, zugegeben. Die Temperatur des Färbebads wird weitere 45 Minuten bei 40°C gehalten. Danach wird die gefärbte Ware gespült, kochend ausgewaschen, nochmals gespült und getrocknet. Man erhält eine waschechte grüne Färbung mit sehr hoher Lichtechtheit.

Verfährt man wie in Applikationsbeispiel 10 angegeben, verwendet jedoch anstelle von 3 Teilen des Reaktivfarbstoffs gemäss Herstellungsbeispiel 32 3 Teile eines der Reaktivfarbstoffe gemäss den Herstellungsbeispielen 33 oder 34, so werden analoge Färbungen erhalten.

## Patentansprüche

1. Verfahren zum Färben oder Bedrucken von Papier, Kunststoff-Folien oder von hydroxylgruppenhaltigem oder stickstoffhaltigem Fasermaterial mit Reaktivfarbstoffen, **dadurch gekennzeichnet, dass** man
mindestens einen Reaktivfarbstoff der Formel (1) aus der nachfolgenden Gruppe a) und
mindestens einen Reaktivfarbstoff aus den nachfolgenden Gruppen b), c) und d) verwendet:
a) grün- oder blaufärbende Reaktivfarbstoffe der Formel (1) 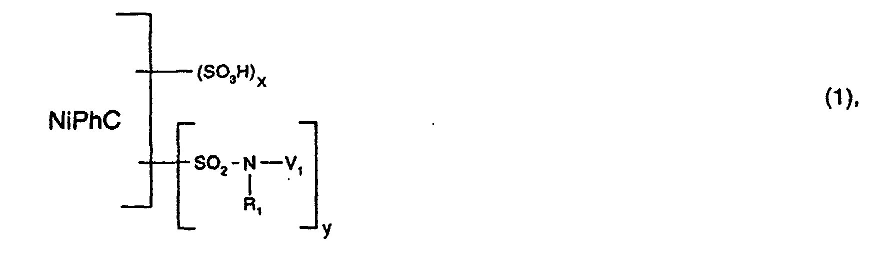 worin
NiPhC der Rest eines Nickelphthalocyanins ist,
R₁ Wasserstoff oder gegebenenfalls durch Hydroxy, Sulfo oder Sulfato substituiertes C₁-C₄-Alkyl,
V₁ C₁-C₈-Alkyl, welches durch eine faserreaktive Gruppe der Formel 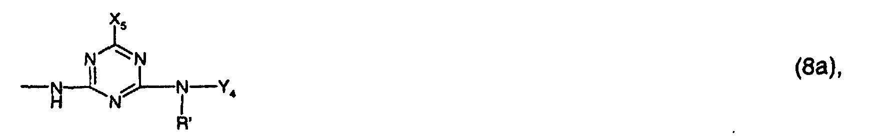
-SO₂-Z (8b)
oder
-CO-NH-(CH₂)₂₋₃-SO₂-Z (8c)
substituiert ist, worin
R' Wasserstoff oder C₁-C₄-Alkyl,
X₅ Fluor oder insbesondere Chlor,
Y₄ Wasserstoff, gegebenenfalls durch Hydroxy, Sulfo oder Sulfato substituiertes und gegebenenfalls durch Sauerstoff unterbrochenes C₁-C₈-Alkyl, oder gegebenenfalls durch C₁-C₄-Alkyl, C₁-C₄-Alkoxy, Halogen, Carboxy oder Sulfo substituiertes Phenyl oder Naphthyl bedeutet, und
Z ein Rest der Formel -CH=CH₂ oder -CH₂-CH₂-U₁ und U₁ eine Abgangsgruppe ist, oder
V₁ durch C₁-C₄-Alkyl, C₁-C₄-Alkoxy, Halogen, Carboxy, Sulfo oder eine faserreaktive Gruppe der Formel (8a), (8b) oder (8c) substituiertes Phenyl oder Naphthyl ist, und
x 2 bis 4 und y 1 bis 2 ist,
wobei der Reaktivfarbstoff der Formel (1) mindestens eine faserreaktive Gruppe enthält;
b) blaufärbende Reaktivfarbstoffe der Formel (2) oder (3) 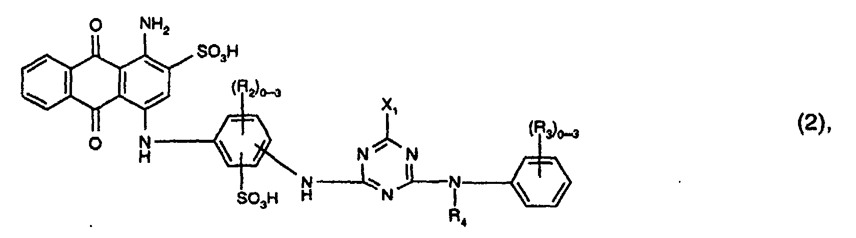 worin
(R₂)₀₋₃ für 0 bis 3 gleiche oder voneinander verschiedene C₁-C₄-Alkylreste und
(R₃)₀₋₃ für 0 bis 3 gleiche oder voneinander verschiedene Substituenten aus der Gruppe C₁-C₄-Alkyl, C₁-C₄-Alkoxy, Halogen, Carboxy und Sulfo steht,
X₁ Chlor oder Fluor ist, und
R₄ Wasserstoff oder gegebenenfalls durch Hydroxy, Sulfo oder Sulfato substituiertes C₁-C₄-Alkyl ist, 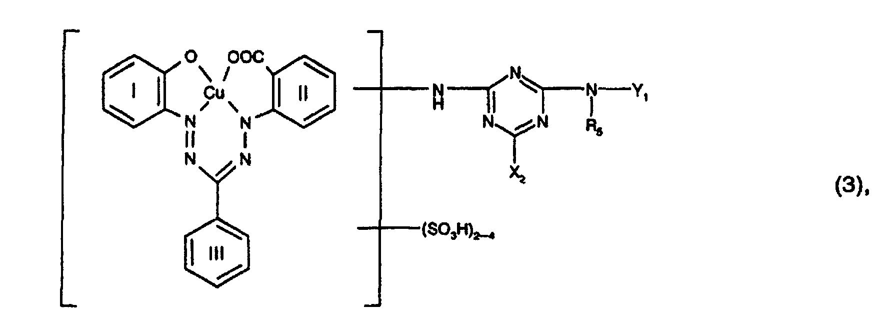 worin
R₅ Wasserstoff oder gegebenenfalls durch Hydroxy, Sulfo oder Sulfato substituiertes C₁-C₄-Alkyl,
X₂ Chlor ist,
Y₁ Wasserstoff, gegebenenfalls durch Hydroxy, Sulfo oder Sulfato substituiertes und gegebenenfalls durch Sauerstoff unterbrochenes C₁-C₈-Alkyl oder gegebenenfalls durch C₁-C₄-Alkyl, C₁-C₄-Alkoxy, Halogen, Carboxy oder Sulfo substituiertes Phenyl oder Naphthyl ist, und
die Benzolkerne I, II und III keine weiteren Substituenten enthalten oder durch C₁-C₄-Alkyl, C₁-C₄-Alkoxy, Halogen oder Carboxy weitersubstituiert sind;
c) rotfärbende Reaktivfarbstoffe der Formel (4) 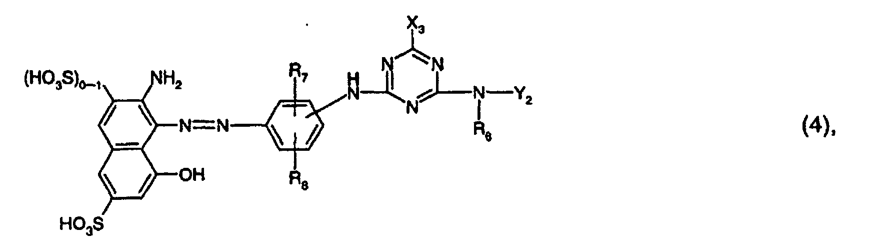 worin
R₆ Wasserstoff oder gegebenenfalls durch Hydroxy, Sulfo oder Sulfato substituiertes C₁-C₄-Alkyl ist,
R₇ und R₈ unabhängig voneinander Wasserstoff, C₁-C₄-Alkyl, C₁-C₄-Alkoxy, Halogen, Carboxy oder Sulfo sind,
X₃ Chlor oder Fluor, und
Y₂ Wasserstoff, gegebenenfalls durch Hydroxy, Sulfo, Sulfato oder einen Rest der Formel -SO₂-Z substituiertes und gegebenenfalls durch Sauerstoff unterbrochenes C₁-C₈-Alkyl, gegebenenfalls durch C₁-C₄-Alkyl, C₁-C₄-Alkoxy, Halogen, Carboxy, Sulfo oder einen Rest der Formel -SO₂-Z oder -CO-NH-(CH₂)₂₋₃-SO₂-Z substituiertes Phenyl oder Naphthyl ist, oder der Rest -N(R₆)-Y₂ Morpholino bedeutet, wobei
Z ein Rest der Formel -CH=CH₂ oder -CH₂-CH₂-U₁ und U₁ eine Abgangsgruppe ist;
d) gelb- oder orangefärbende Reaktivfarbstoffe der Formel (5) 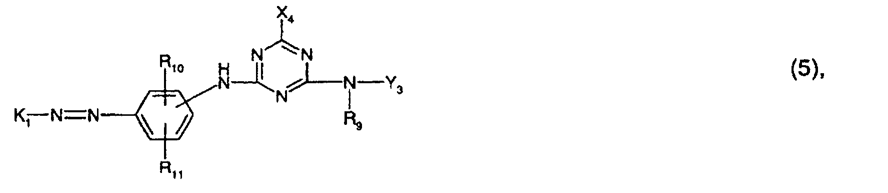 worin
R₉ Wasserstoff oder gegebenenfalls durch Hydroxy, Sulfo oder Sulfato substituiertes C₁-C₄-Alkyl ist,
R₁₀ und R₁₁ unabhängig voneinander Wasserstoff, C₁-C₄-Alkyl, C₁-C₄-Alkoxy, Halogen, Carboxy oder Sulfo sind,
X₄ Chlor oder Fluor, und
Y₃ Wasserstoff, gegebenenfalls durch Hydroxy, Sulfo oder Sulfato substituiertes und gegebenenfalls durch Sauerstoff unterbrochenes C₁-C₈-Alkyl, gegebenenfalls durch C₁-C₄-Alkyl, C₁-C₄-Alkoxy, Halogen, Carboxy, Sulfo oder einen gegebenenfalls weitersubstituierten Halogentriazinylaminorest substituiertes Phenyl oder Naphthyl ist, oder der Rest -N(R₉)-Y₃ Morpholino bedeutet, und
K₁ ein Rest der Formel 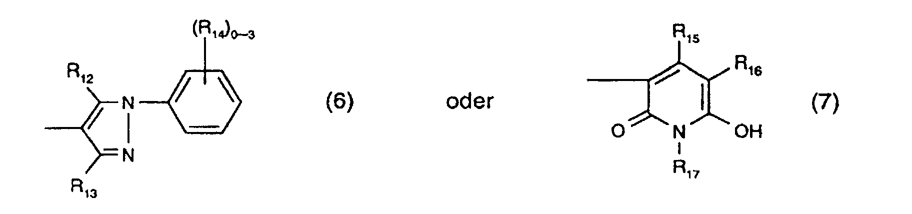 ist, worin
R₁₂ Hydroxy oder Amino,
R₁₃ Methyl oder Carboxy ist,
(R₁₄)₀₋₃ für 0 bis 3 gleiche oder verschiedene Substituenten aus der Gruppe C₁-C₄-Alkyl, C₁-C₄-Alkoxy, Halogen, Carboxy und Sulfo steht,
R₁₅ und R₁₇ C₁-C₄-Alkyl sind, und
R₁₆ Cyano, Carbamoyl oder Sulfomethyl ist.

2. Verfahren gemäss Anspruch 1, **dadurch gekennzeichnet, dass**
R₁ Wasserstoff oder C₁-C₄-Alkyl und
V₁ ein Rest der Formel 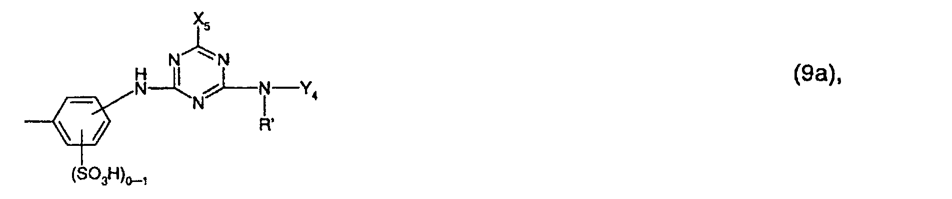 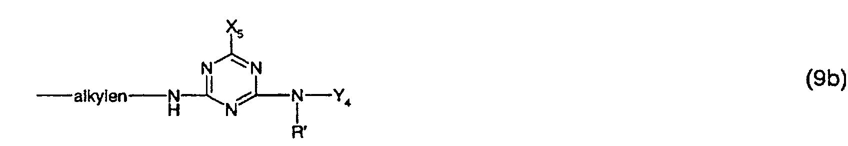 oder 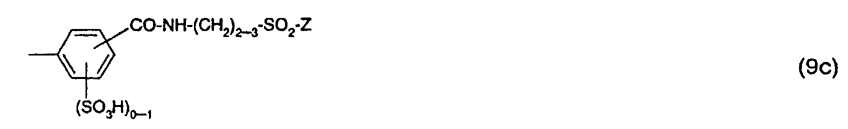 ist, worin
R' Wasserstoff oder C₁-C₄-Alkyl,
X₅ Fluor oder Chlor,
Y₄ Wasserstoff oder gegebenenfalls durch C₁-C₄-Alkyl, C₁-C₄-Alkoxy, Halogen, Carboxy oder Sulfo substituiertes Phenyl ist,
alkylen C₂-C₆-Alkylen bedeutet, und
Z die in Anspruch 1 angegebenen Bedeutungen hat.

3. Verfahren gemäss einem der Ansprüche 1 und 2, **dadurch gekennzeichnet, dass** man als Reaktivfarbstoff der Formel (1) einen Reaktivfarbstoff der Formel 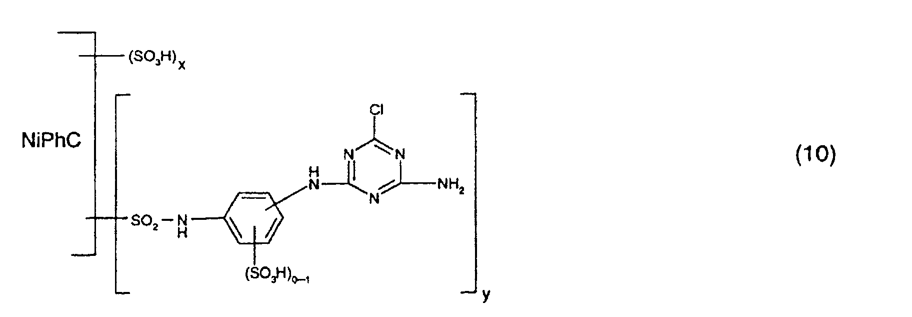 verwendet, worin
NiPhC, x und y die in Anspruch 1 angegebenen Bedeutungen haben.

4. Verfahren gemäss einem der Ansprüche 1 bis 3, **dadurch gekennzeichnet, dass**
R₃ Sulfo, R₄ Wasserstoff oder C₁-C₄-Alkyl und X₁ Chlor ist.

5. Verfahren gemäss einem der Ansprüche 1 bis 4, **dadurch gekennzeichnet, dass** man als Reaktivfarbstoff der Formel (2) einen Reaktivfarbstoff der Formel 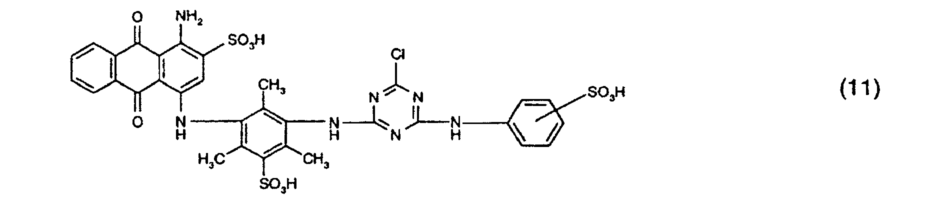 verwendet.

6. Verfahren gemäss einem der Ansprüche 1 bis 5, **dadurch gekennzeichnet, dass** man als Reaktivfarbstoff der Formel (3) einen Reaktivfarbstoff der Formel 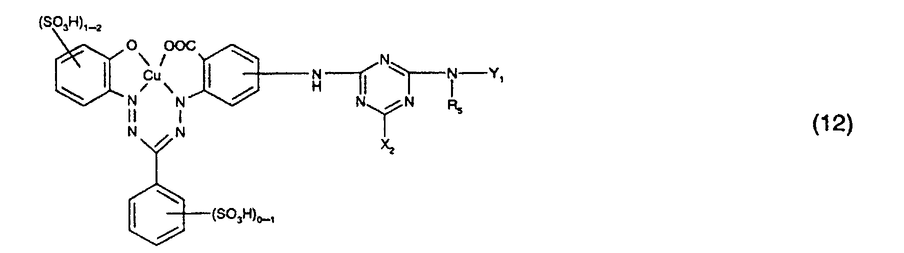 verwendet, worin R₅ Wasserstoff oder C₁-C₄-Alkyl ist und X₂ und Y₁ die in Anspruch 1 angegebenen Bedeutungen haben.

7. Verfahren gemäss einem der Ansprüche 1 bis 6, **dadurch gekennzeichnet, dass**
R₅ Wasserstoff oder C₁-C₄-Alkyl,
X₂ Chlor und
Y₁ Wasserstoff ist.

8. Verfahren gemäss einem der Ansprüche 1 bis 7, **dadurch gekennzeichnet, dass**
R₆ Wasserstoff oder C₁-C₄-Alkyl,
R₇ Sulfo,
R₈ Wasserstoff oder Sulfo und
Y₂ Wasserstoff, gegebenenfalls durch Hydroxy, Sulfo oder Sulfato substituiertes und gegebenenfalls durch Sauerstoff unterbrochenes C₁-C₈-Alkyl, oder gegebenenfalls durch C₁-C₄-Alkyl, C₁-C₄-Alkoxy, Halogen, Carboxy oder Sulfo substituiertes Phenyl oder Naphthyl ist, oder der Rest -N(R₆)-Y₂ Morpholino bedeutet.

9. Verfahren gemäss einem der Ansprüche 1 bis 8, **dadurch gekennzeichnet, dass** man als Reaktivfarbstoff der Formel (4) einen Reaktivfarbstoff der Formel 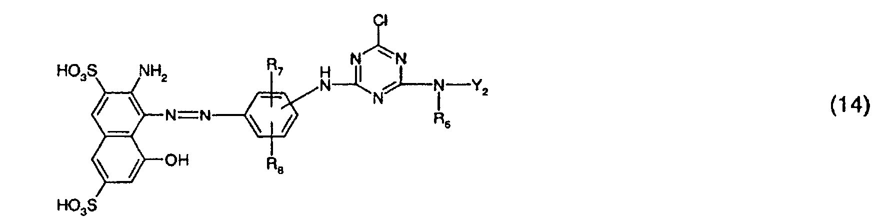 verwendet, worin
R₆ Wasserstoff oder C₁-C₄-Alkyl,
R₇ Sulfo,
R₈ Wasserstoff oder Sulfo und
Y₂ durch Hydroxy, Sulfo oder Sulfato substituiertes und gegebenenfalls durch Sauerstoff unterbrochenes C₁-C₄-Alkyl, oder gegebenenfalls durch C₁-C₄-Alkyl, C₁-C₄-Alkoxy, Halogen, Carboxy oder Sulfo substituiertes Phenyl ist.

10. Verfahren gemäss einem der Ansprüche 1 bis 9, **dadurch gekennzeichnet, dass**
R₉ Wasserstoff oder C₁-C₄-Alkyl,
R₁₀ Sulfo, R₁₁ Wasserstoff oder Sulfo, R₁₂ Hydroxy, R₁₃ Methyl, R₁₆ Carbamoyl und
X₄ Chlor ist.

11. Verfahren gemäss einem der Ansprüche 1 bis 10, **dadurch gekennzeichnet, dass** man als Reaktivfarbstoff der Formel (5) einen Reaktivfarbstoff der Formel 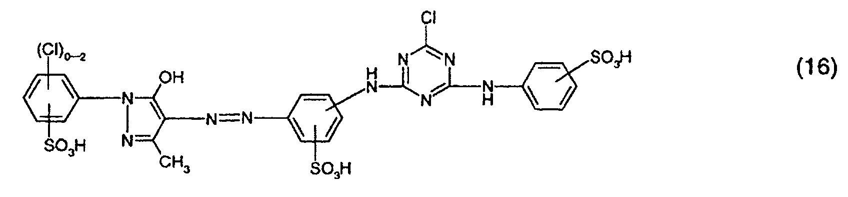 oder 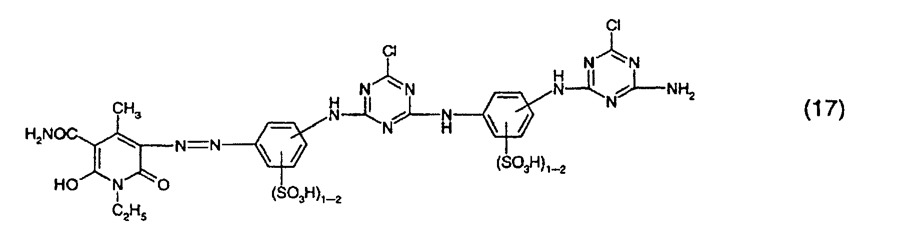 verwendet.

12. Verfahren gemäss einem der Ansprüche 1 bis 11, **dadurch gekennzeichnet, dass** man
mindestens einen Reaktivfarbstoff der Formel (1) aus der Gruppe a) und
mindestens einen Reaktivfarbstoff der Formel (4) aus der Gruppe c) verwendet.

13. Verfahren gemäss einem der Ansprüche 1 bis 11, **dadurch gekennzeichnet, dass** man
mindestens einen Reaktivfarbstoff der Formel (1) aus der Gruppe a) und
mindestens einen Reaktivfarbstoff der Formel (5) aus der Gruppe d) verwendet.

14. Verfahren gemäss einem der Ansprüche 1 bis 11, **dadurch gekennzeichnet, dass** man
mindestens einen Reaktivfarbstoff der Formel (1) aus der Gruppe a),
mindestens einen Reaktivfarbstoff der Formel (4) aus der Gruppe c) und
mindestens einen Reaktivfarbstoff der Formel (5) aus der Gruppe d) verwendet.

15. Verfahren gemäss einem der Ansprüche 1 bis 11, **dadurch gekennzeichnet, dass** man
mindestens einen Reaktivfarbstoff der Formel (1) aus der Gruppe a),
mindestens einen Reaktivfarbstoff der Formel (2) oder (3) aus der Gruppe b),
mindestens einen Reaktivfarbstoff der Formel (4) aus der Gruppe c) und
mindestens einen Reaktivfarbstoff der Formel (5) aus der Gruppe d) verwendet.

16. Verfahren gemäss einem der Ansprüche 1 bis 15, **dadurch gekennzeichnet, dass** man hydroxylgruppenhaltiges oder stickstoffhaltiges Fasermaterial bedruckt.

17. Verfahren gemäss Anspruch 16, **dadurch gekennzeichnet, dass** man hydroxylgruppenhaltiges oder stickstoffhaltiges Fasermaterial nach dem Tintenstrahldruck-Verfahren bedruckt.

18. Verfahren gemäss Anspruch 17, **dadurch gekennzeichnet, dass** man das Fasermaterial mit wässrigen Tinten bedruckt, welche 5 bis 35 Gew.-% des Reaktivfarbstoffs enthalten.

19. Verfahren gemäss Anspruch 18, **dadurch gekennzeichnet, dass** die wässrigen Tinten 5 bis 30 Gew.-% 1,2-Propylenglykol enthalten.

20. Verfahren gemäss einem der Ansprüche 1 bis 15, **dadurch gekennzeichnet, dass** man hydroxylgruppenhaltiges oder stickstoffhaltiges Fasermaterial nach dem Ausziehverfahren oder dem Foulard-Färbeverfahren färbt.

21. Verfahren gemäss einem der Ansprüche 1 bis 20, **dadurch gekennzeichnet, dass** es sich bei dem Fasermaterial um hydroxylgruppenhaltiges Fasermaterial handelt.

22. Verfahren gemäss Anspruch 21, **dadurch gekennzeichnet, dass** es sich bei dem Fasermaterial um cellulosehaltiges Fasermaterial, insbesondere Baumwolle oder Viskose, handelt.

23. Verfahren gemäss einem der Ansprüche 1 bis 15, **dadurch gekennzeichnet, dass** man Papier oder Kunstoff-Folien bedruckt.

24. Reaktivfarbstoffe der Formel 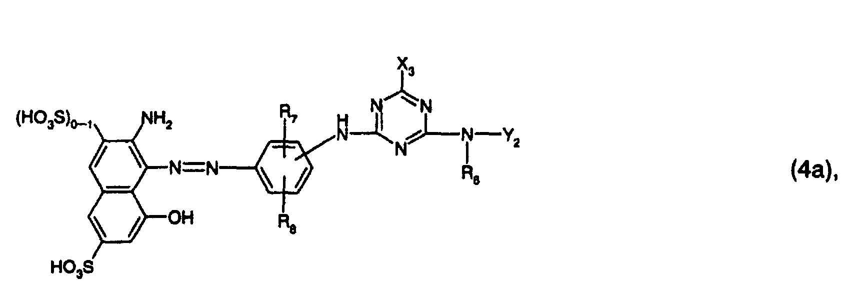 worin
R₆ Wasserstoff oder gegebenenfalls durch Hydroxy, Sulfo oder Sulfato substituiertes C₁-C₄-Alkyl ist,
R₇ Sulfo ist und R₈ Wasserstoff bedeutet,
X₃ Fluor, und
Y₂ Wasserstoff, gegebenenfalls durch Hydroxy, Sulfo oder Sulfato substituiertes und gegebenenfalls durch Sauerstoff unterbrochenes C₁-C₈-Alkyl, oder der Rest -N(R₆)-Y₂ Morpholino bedeutet.

25. Verfahren zum Bedrucken von Papier, Kunststoff-Folien oder von hydroxylgruppenhaltigem oder stickstoffhaltigem Fasermaterial nach dem Tintenstrahldruckverfahren, **dadurch gekennzeichnet, dass** man diese Materialien mit mindestens einen Reaktivfarbstoff der Formel (1) aus der nachfolgenden Gruppe a) und mindestens einen Reaktivfarbstoff aus den nachfolgenden Gruppen b), c) und d) bedruckt:
a) grün- oder blaufärbende Reaktivfarbstoffe der Formel (1) 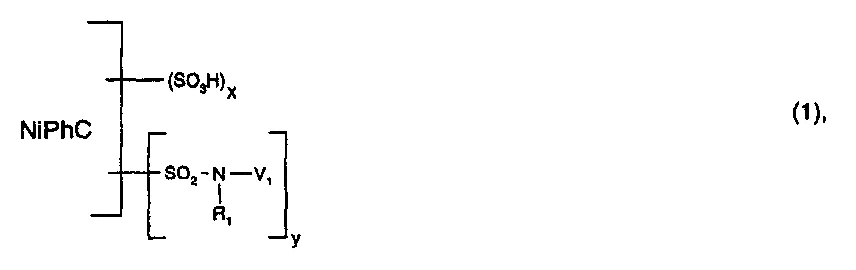 worin
NiPhC der Rest eines Nickelphthalocyanins ist,
R₁ Wasserstoff oder gegebenenfalls substituiertes C₁-C₄-Alkyl,
V₁ Wasserstoff oder gegebenenfalls substituiertes C₁-C₈-Alkyl, Phenyl oder Naphthyl, und
x 2 bis 4 und y 1 bis 2 ist, wobei der Reaktivfarbstoff der Formel (1) mindestens eine faserreaktive Gruppe enthält;
b) blaufärbende Reaktivfarbstoffe der Formel (2) oder (3) 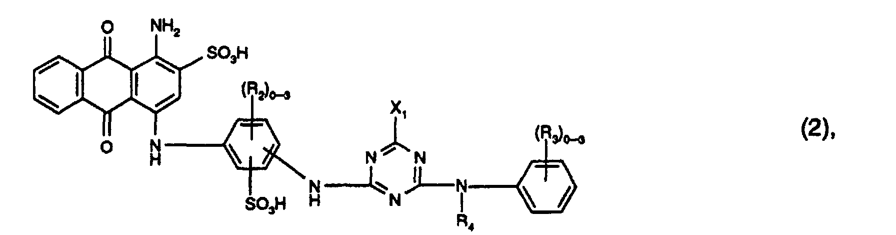 worin
(R₂)₀₋₃ für 0 bis 3 gleiche oder voneinander verschiedene C₁-C₄-Alkylreste und
(R₃)₀₋₃ für 0 bis 3 gleiche oder voneinander verschiedene Substituenten aus der Gruppe C₁-C₄-Alkyl, C₁-C₄-Alkoxy, Halogen, Carboxy und Sulfo steht,
X₁ Chlor oder Fluor ist, und
R₄ Wasserstoff oder gegebenenfalls durch Hydroxy, Sulfo oder Sulfato substituiertes
C₁-C₄-Alkyl ist, 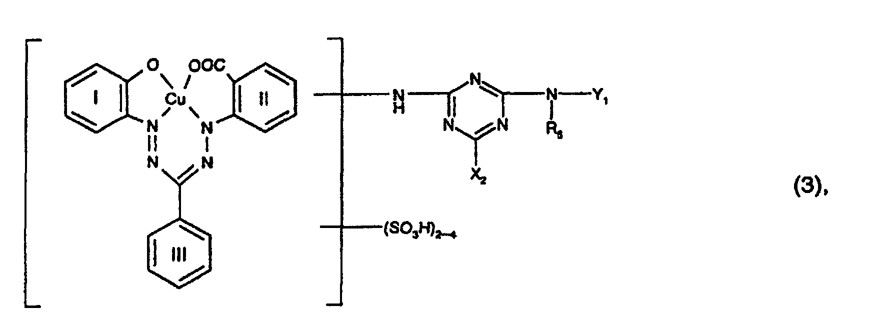 worin
R₅ Wasserstoff oder gegebenenfalls durch Hydroxy, Sulfo oder Sulfato substituiertes C₁-C₄-Alkyl,
X₂ Chlor oder Fluor ist,
Y₁ Wasserstoff, gegebenenfalls durch Hydroxy, Sulfo oder Sulfato substituiertes und gegebenenfalls durch Sauerstoff unterbrochenes C₁-C₈-Alkyl oder gegebenenfalls durch C₁-C₄-Alkyl, C₁-C₄-Alkoxy, Halogen, Carboxy oder Sulfo substituiertes Phenyl oder Naphthyl ist, und
die Benzolkeme I, II und III keine weiteren Substituenten enthalten oder durch C₁-C₄-Alkyl, C₁-C₄-Alkoxy, Halogen oder Carboxy weitersubstituiert sind;
c) rotfärbende Reaktivfarbstoffe der Formel (4) 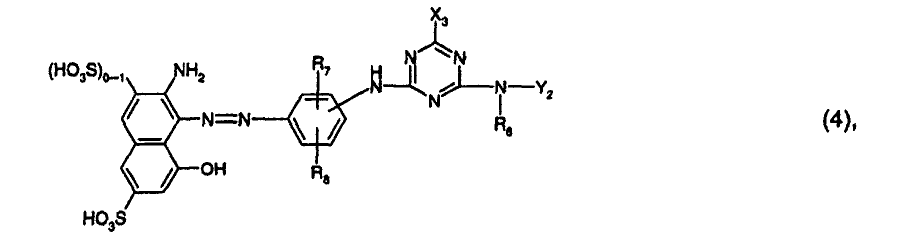 worin
R₆ Wasserstoff oder gegebenenfalls durch Hydroxy, Sulfo oder Sulfato substituiertes C₁-C₄-Alkyl ist,
R₇ und R₈ unabhängig voneinander Wasserstoff, C₁-C₄-Alkyl, C₁-C₄-Alkoxy, Halogen, Carboxy oder Sulfo sind,
X₃ Chlor oder Fluor, und
Y₂ Wasserstoff, gegebenenfalls durch Hydroxy, Sulfo, Sulfato oder einen Rest der Formel -SO₂-Z substituiertes und gegebenenfalls durch Sauerstoff unterbrochenes C₁-C₈-Alkyl, gegebenenfalls durch C₁-C₄-Alkyl, C₁-C₄-Alkoxy, Halogen, Carboxy, Sulfo oder einen Rest der Formel -SO₂-Z oder -CO-NH-(CH₂)₂₋₃-SO₂-Z substituiertes Phenyl oder Naphthyl ist, oder der Rest -N(R₈)-Y₂ Morpholino bedeutet, wobei
Z ein Rest der Formel -CH=CH₂ oder -CH₂-CH₂-U₁ und U₁ eine Abgangsgruppe ist;
d) gelb- oder orangefärbende Reaktivfarbstoffe der Formel (5) 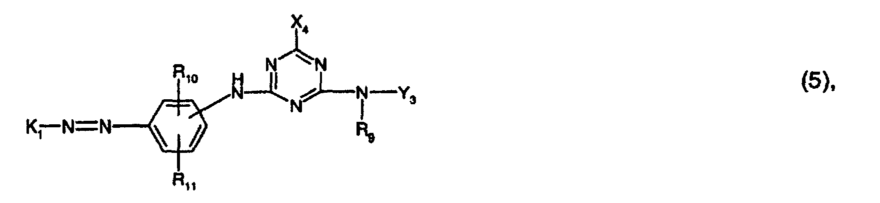 worin
R₉ Wasserstoff oder gegebenenfalls durch Hydroxy, Sulfo oder Sulfato substituiertes C₁-C₄-Alkyl ist,
R₁₀ und R₁₁ unabhängig voneinander Wasserstoff, C₁-C₄-Alkyl, C₁-C₄-Alkoxy, Halogen, Carboxy oder Sulfo sind,
X₄ Chlor oder Fluor, und
Y₃ Wasserstoff, gegebenenfalls durch Hydroxy, Sulfo oder Sulfato substituiertes und gegebenenfalls durch Sauerstoff unterbrochenes C₁-C₈-Alkyl, gegebenenfalls durch C₁-C₄-Alkyl, C₁-C₄-Alkoxy, Halogen, Carboxy, Sulfo oder einen gegebenenfalls weitersubstituierten Halogentriazinylaminorest substituiertes Phenyl oder Naphthyl ist, oder der Rest -N(R₉)-Y₃ Morpholino bedeutet, und
K₁ ein Rest der Formel 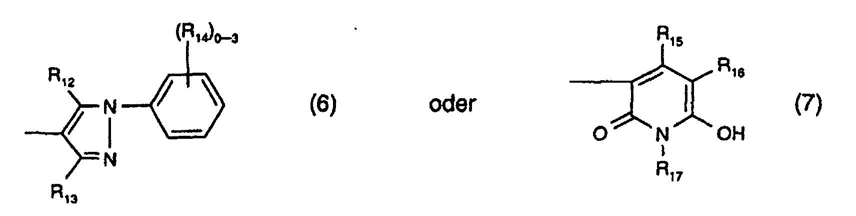 ist, worin
R₁₂ Hydroxy oder Amino,
R₁₃ Methyl oder Carboxy ist,
(R₁₄)₀₋₃ für 0 bis 3 gleiche oder verschiedene Substituenten aus der Gruppe C₁-C₄-Alkyl, C₁-C₄-Alkoxy, Halogen, Carboxy und Sulfo steht,
R₁₅ und R₁₇ C₁-C₄-Alkyl sind, und
R₁₆ Cyano, Carbamoyl oder Sulfomethyl ist.

## Claims

1. A process for dyeing or printing paper, films of plastic or fibre material containing hydroxyl groups or containing nitrogen with reactive dyes, which comprises using
at least one reactive dye of the formula (1) from the following group a) and
at least one reactive dye from the following groups b), c) and d):
a) green- or blue-dyeing reactive dyes of the formula (1) 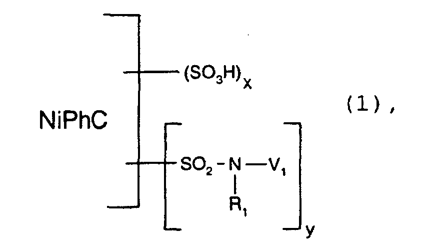 in which
NiPhC is the radical of a nickel phthalocyanine,
R₁ is hydrogen or C₁-C₄alkyl which is unsubstituted or substituted by hydroxyl, sulfo or sulfato,
V₁ is C₁-C₈alkyl which is substituted by a fibre-reactive group of the formula 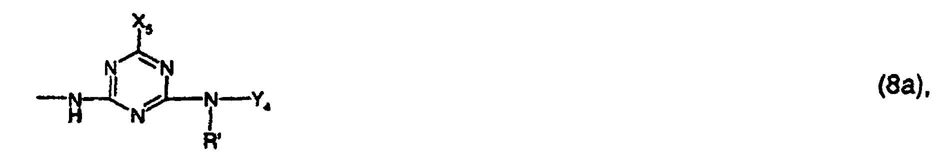
-SO₂-Z (8b)
or
-CO-NH-(CH₂)₂₋₃-SO₂-Z (8c)
in which
R' is hydrogen or C₁-C₄alkyl,
X₅ is fluorine or in particular chlorine,
Y₄ is hydrogen, C₁-C₈alkyl which is unsubstituted or substituted by hyrdoxyl, sulfo or sulfato and is uninterrupted or interrupted by oxygen, or phenyl or naphthyl which are each unsubstituted or substituted by C₁-C₄alkyl, C₁-C₄alkoxy, halogen, carboxyl or sulfo, and
Z is a radical of the formula -CH=CH₂ or -CH₂-CH₂-U₁ and U₁ is a leaving group, or
V₁ is phenyl or naphthyl which are each substituted by C₁-C₄alkyl, C₁-C₄alkoxy, halogen, carboxyl, sulfo or a fibre-reactive group of the formula (8a), (8b) or (8c), and
x is 2 to 4 and y is 1 to 2,
the reactive dye of the formula (1) containing at least one fibre-reactive group;
b) blue-dyeing reactive dyes of the formula (2) or (3) 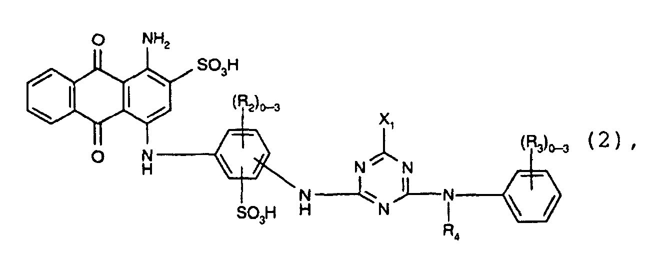 in which
(R₂)₀₋₃ is 0 to 3 C₁-C₄alkyl radicals which are identical or different from one another and
(R₃)₀₋₃ is 0 to 3 substituents, which are identical or different from another, from the group consisting of C₁-C₄alkyl, C₁-C₄alkoxy, halogen, carboxyl and sulfo,
X₁ is chlorine or fluorine and
R₄ is hydrogen or C₁-C₄alkyl which is unsubstituted or substituted by hydroxyl, sulfo or sulfato, 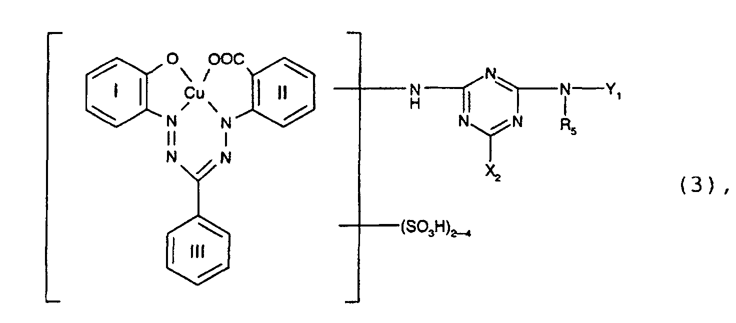 in which
R₅ is hydrogen or C₁-C₄alkyl which is unsubstituted or substituted by hydroxyl, sulfo or sulfato,
X₂ is chlorine,
Y₁ is hydrogen, C₁-C₈alkyl which is unsubstituted or substituted by hydroxyl, sulfo or sulfato and uninterrupted or interrupted by oxygen, or phenyl or naphthyl which are unsubstituted or substituted by C₁-C₄alkyl, C₁-C₄alkoxy, halogen, carboxyl or sulfo, and the benzene nuclei I, II and III contain no further substituents or are further substituted by C₁-C₄alkyl, C₁-C₄alkoxy, halogen or carboxyl;
c) red-dyeing reactive dyes of the formula (4) 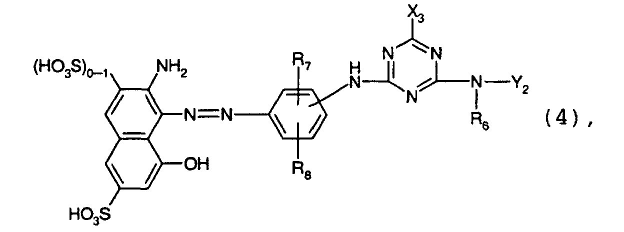 in which
R₆ is hydrogen or C₁-C₄alkyl which is unsubstituted or substituted by hydroxyl, sulfo or sulfato,
R₇ and R₈ independently of one another are hydrogen, C₁-C₄alkyl, C₁-C₄alkoxy, halogen, carboxyl or sulfo,
X₃ is chlorine or fluorine and
Y₂ is hydrogen, C₁-C₈alkyl which is unsubstituted or substituted by hydroxyl, sulfo, sulfato or a radical of the formula -SO₂-Z and is uninterrupted or interrupted by oxygen, or phenyl or naphthyl which are unsubstituted or substituted by C₁-C₄alkyl, C₁-C₄alkoxy, halogen, carboxyl, sulfo or a radical of the formula - SO₂-Z or -CO-NH-(CH₂)₂₋₃-SO₂-Z, or
the radical -N(R₆)-Y₂ is morpholino, in which
Z is a radical of the formula -CH=CH₂ or -CH₂-CH₂-U₁ and
U₁ is a leaving group;
d) yellow- or orange-dyeing reactive dyes of the formula (5) 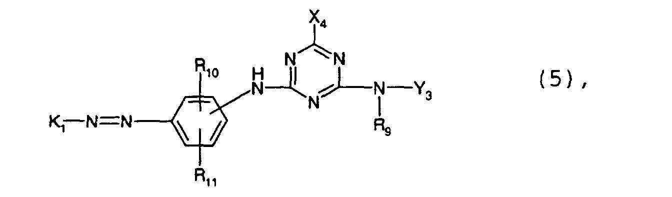 in which
R₉ is hydrogen or C₁-C₄alkyl which is unsubstituted or substituted by hydroxyl, sulfo or sulfato,
R₁₀ and R₁₁ independently of one another are hydrogen, C₁-C₄alkyl, C₁-C₄alkoxy, halogen, carboxyl or sulfo,
X₄ is chlorine or fluorine and
Y₃ is hydrogen, C₁-C₈alkyl which is unsubstituted or substituted by hydroxyl, sulfo or sulfato and is uninterrupted or interrupted by oxygen, or phenyl or naphthyl which are unsubstituted or substituted by C₁-C₄alkyl, C₁-C₄alkoxy, halogen, carboxyl, sulfo or a halogenotriazinylamino radical which is unsubstituted or further substituted, or
the radical -N(R₉)-Y₃ is morpholino, and
K₁ is a radical of the formula 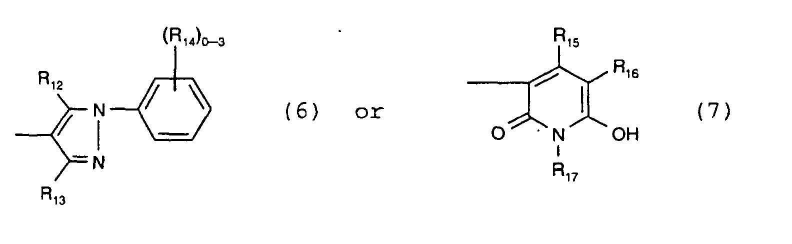 in which
R₁₂ is hydroxyl or amino,
R₁₃ is methyl or carboxyl,
(R₁₄ )₀₋₃ is 0 to 3 identical or different substituents from the group consisting of C₁-C₄alkyl, C₁-C₄alkoxy, halogen, carboxyl and sulfo,
R₁₅ and R₁₇ are C₁-C₄alkyl and
R₁₆ is cyano, carbamoyl or sulfomethyl.

2. A process according to claim 1, wherein
R₁ is hydrogen or C₁-C₄alkyl and
V₁ is a radical of the formula 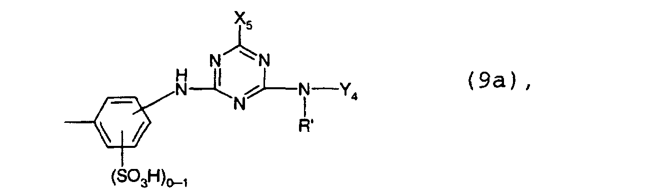 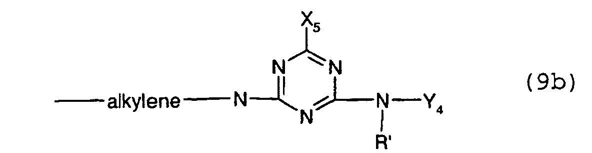 or 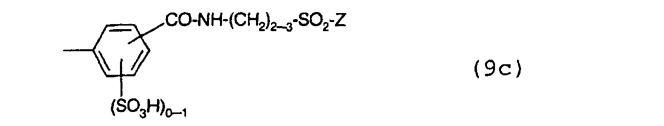 in which
R' is hydrogen or C₁-C₄alkyl,
X₅ is fluorine or chlorine,
Y₄ is hydrogen or phenyl which is unsubstituted or substituted by C₁-C₄alkyl, C₁-C₄alkoxy, halogen, carboxyl or sulfo,
alkylene is C₂-C₆alkylene and
Z is as defined in claim 1.

3. A process according to either claim 1 or claim 2, wherein the reactive dye of the formula (1) used is a reactive dye of the formula 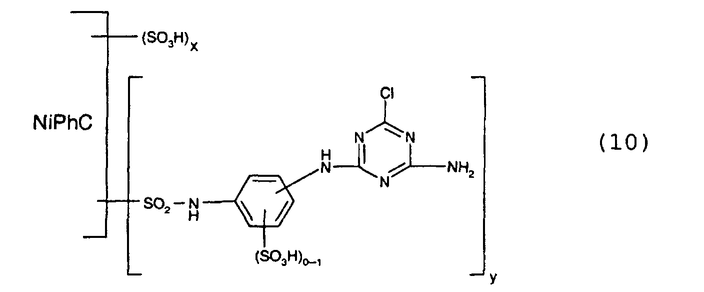 in which
NiPhC, x and y are as defined in claim 1.

4. A process according to any one of claims 1 to 3, wherein
R₃ is sulfo,
R₄ is hydrogen or C₁-C₄alkyl and
X₁ is chlorine.

5. A process according to any one of claims 1 to 4, wherein the reactive dye of the formula (2) used is a reactive dye of the formula

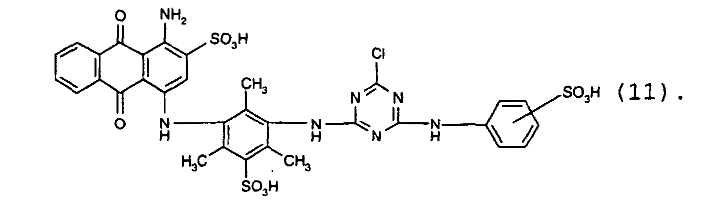

6. A process according to any one of claims 1 to 5, wherein the reactive dye of the formula (3) used is a reactive dye of the formula 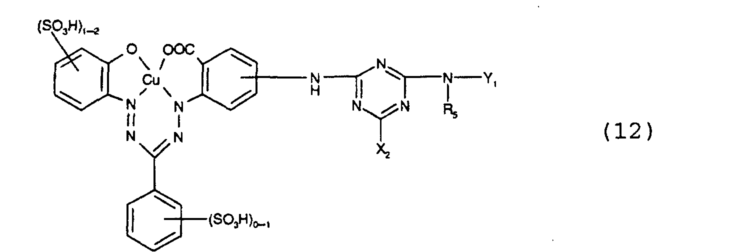 in which
R₅ is hydrogen or C₁-C₄alkyl and
X₂ and Y₁ are as defined in claim 1.

7. A process according to any one of claims 1 to 6, wherein
R₅ is hydrogen or C₁-C₄alkyl,
X₂ is chlorine and
Y₁ is hydrogen.

8. A process according to any one of claims 1 to 7, wherein
R₆ is hydrogen or C₁-C₄alkyl,
R₇ is sulfo,
R₈ is hydrogen or sulfo and
Y₂ is hydrogen, C₁-C₈alkyl, which is unsubstituted or substituted by hydroxyl, sulfo or sulfato and is uninterrupted or interrupted by oxygen, or phenyl or naphthyl which are unsubstituted or substituted by C₁-C₄alkyl, C₁-C₄alkoxy, halogen, carboxyl or sulfo, or the radical -N(R₆)-Y₂ is morpholino.

9. A process according to any one of claims 1 to 8, wherein the reactive dye of the formula (4) used is a reactive dye of the formula 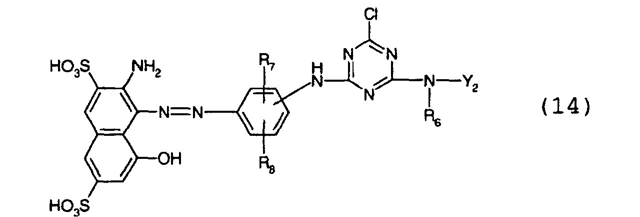 in which
R₆ is hydrogen or C₁-C₄alkyl,
R₇ is sulfo,
R₈ is hydrogen or sulfo and
Y₂ is C₁-C₄alkyl which is substituted by hydroxyl, sulfo or sulfato and is uninterrupted or interrupted by oxygen, or is phenyl which is unsubstituted or substituted by C₁-C₄alkyl, C₁-C₄alkoxy, halogen, carboxyl or sulfo.

10. A process according to any one of claims 1 to 9, wherein
R₉ is hydrogen or C₁-C₄alkyl,
R₁₀ is sulfo,
R₁₁ is hydrogen or sulfo,
R₁₂ is hydroxyl,
R₁₃ is methyl,
R₁₆ is carbamoyl and
X₄ is chlorine.

11. A process according to any one of claims 1 to 10, wherein the reactive dye of the formula (5) used is a reactive dye of the formula 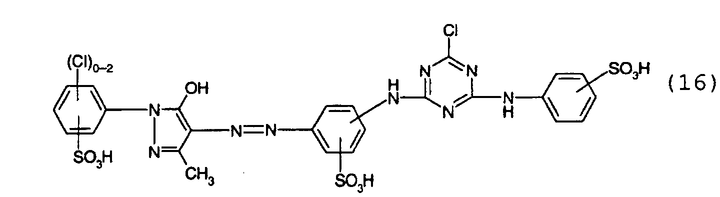 or

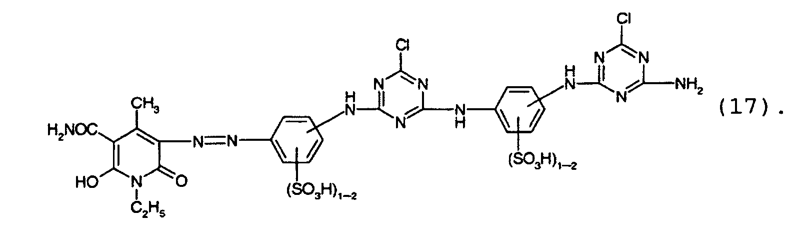

12. A process according to any one of claims 1 to 11, wherein
at least one reactive dye of the formula (1) from group a) and
at least one reactive dye of the formula (4) from group c) are used.

13. A process according to any one of claims 1 to 11, wherein
at least one reactive dye of the formula (1) from group a) and
at least one reactive dye of the formula (5) from group d) are used.

14. A process according to any one of claims 1 to 11, wherein
at least one reactive dye of the formula (1) from group a),
at least one reactive dye of the formula (4) from group c) and
at least one reactive dye of the formula (5) from group d) are used.

15. A process according to any one of claims 1 to 11, wherein
at least one reactive dye of the formula (1) from group a),
at least one reactive dye of the formula (2) or (3) from group b),
at least one reactive dye of the formula (4) from group c) and
at least one reactive dye of the formula (5) from group d) are used.

16. A process according to any one of claims 1 to 15, wherein fibre material containing hydroxyl groups or containing nitrogen is printed.

17. A process according to claim 16, wherein fibre material containing hydroxyl groups or containing nitrogen is printed by the ink jet printing process.

18. A process according to claim 17, wherein the fibre material is printed with aqueous inks which comprise 5 to 35% by weight of the reactive dye.

19. A process according to claim 18, wherein the aqueous inks comprise 5 to 30% by weight of 1,2-propylene glycol.

20. A process according to any one of claims 1 to 15, wherein fibre material containing hydroxyl groups or containing nitrogen is dyed by the exhaust method or the pad-dyeing method.

21. A process according to any one of claims 1 to 20, wherein the fibre material is fibre material containing hydroxyl groups.

22. A process according to claim 21, wherein the fibre material is cellulosic fibre material, in particular cotton or viscose.

23. A process according to any one of claims 1 to 15, wherein paper or films of plastic are printed.

24. A reactive dye of the formula 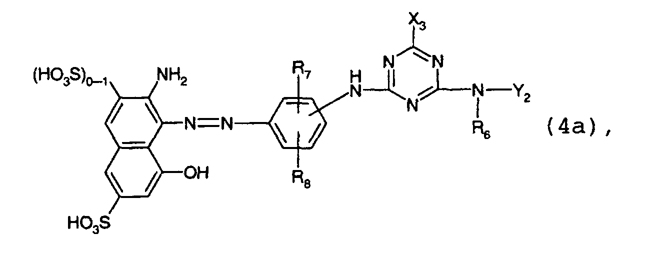 in which
R₆ is hydrogen or C₁-C₄alkyl which is unsubstituted or substituted by hydroxyl, sulfo or sulfato,
R₇ is sulfo and R₈ is hydrogen,
X₃ is fluorine and
Y₂ is hydrogen, C₁-C₈alkyl which is unsubstituted or substituted by hydroxyl, sulfo or sulfato and is uninterrupted or interrupted by oxygen, or the radical -N(R₆)-Y₂ is morpholino.

25. A process for printing paper, films of plastic or fibre material containing hydroxyl groups or containing nitrogen by the ink jet printing process, which comprises printing these materials with at least one reactive dye of the formula (1) from the following group a) and at least one reactive dye from the following groups b), c) and d):
a) green- or blue-dyeing reactive dyes of the formula (1) 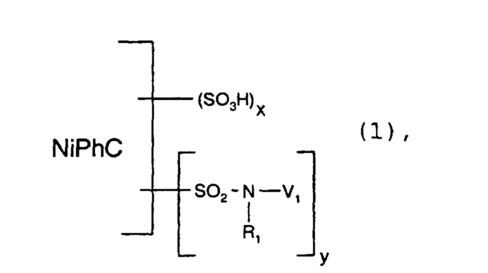 in which
NiPhC is the radical of a nickel phthalocyanine,
R₁ is hydrogen or substituted or unsubstituted C₁-C₄alkyl,
V₁ is hydrogen or substituted or unsubstituted C₁-C₈alkyl, phenyl or naphthyl, and
x is 2 to 4 and y is 1 to 2,
the reactive dye of the formula (1) containing at least one fibre-reactive group;
b) blue-dyeing reactive dyes of the formula (2) or (3) 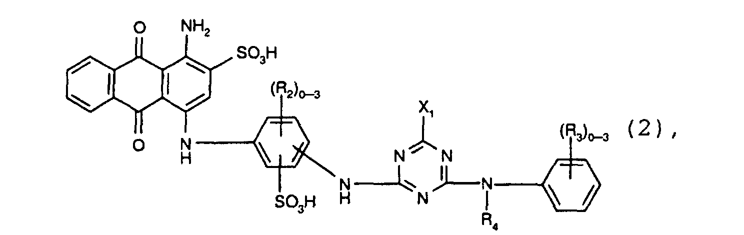 in which
(R₂)₀₋₃ is 0 to 3 C₁-C₄alkyl radicals which are identical or different from one another and
(R₃)₀₋₃ is 0 to 3 substituents, which are identical or different from another, from the group consisting of C₁-C₄alkyl, C₁-C₄alkoxy, halogen, carboxyl and sulfo,
X₁ is chlorine or fluorine and
R₄ is hydrogen or C₁-C₄alkyl which is unsubstituted or substituted by hydroxyl, sulfo or sulfato, 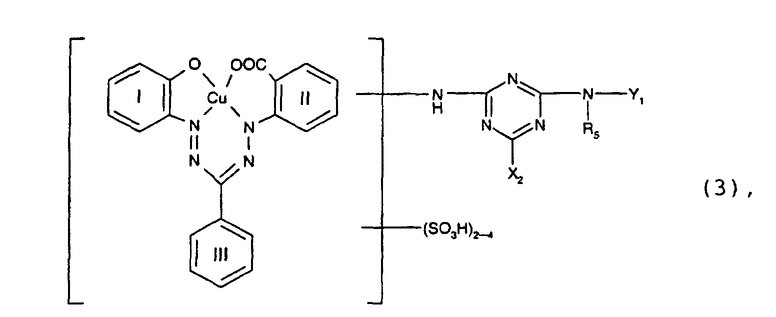 in which
R₅ is hydrogen or C₁-C₄alkyl which is unsubstituted or substituted by hydroxyl, sulfo or sulfato,
X₂ is chlorine or fluorine,
Y₁ is hydrogen, C₁-C₈alkyl which is unsubstituted or substituted by hydroxyl, sulfo or sulfato and uninterrupted or interrupted by oxygen, or phenyl or naphthyl which are unsubstituted or substituted by C₁-C₄alkyl, C₁-C₄alkoxy, halogen, carboxyl or sulfo, and the benzene nuclei I, II and III contain no further substituents or are further substituted by C₁-C₄alkyl, C₁-C₄alkoxy, halogen or carboxyl;
c) red-dyeing reactive dyes of the formula (4) 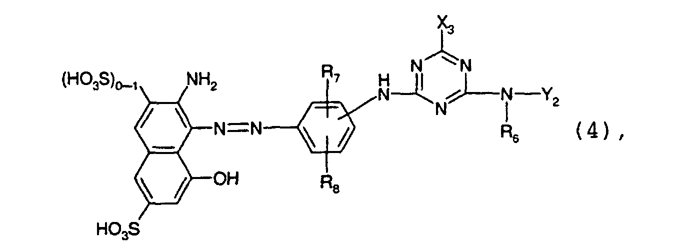 in which
R₆ is hydrogen or C₁-C₄alkyl which is unsubstituted or substituted by hydroxyl, sulfo or sulfato,
R₇ and R₈ independently of one another are hydrogen, C₁-C₄alkyl, C₁-C₄alkoxy, halogen, carboxyl or sulfo,
X₃ is chlorine or fluorine and
Y₂ is hydrogen, C₁-C₈alkyl which is unsubstituted or substituted by hydroxyl, sulfo, sulfato or a radical of the formula -SO₂-Z and is uninterrupted or interrupted by oxygen, or phenyl or naphthyl which are unsubstituted or substituted by C₁-C₄alkyl, C₁-C₄alkoxy, halogen, carboxyl, sulfo or a radical of the formula - SO₂-Z or -CO-NH-(CH₂)₂₋₃-SO₂-Z, or
the radical -N(R₆)-Y₂ is morpholino, in which
Z is a radical of the formula -CH=CH₂ or -CH₂-CH₂-U₁ and
U₁ is a leaving group;
d) yellow- or orange-dyeing reactive dyes of the formula (5) 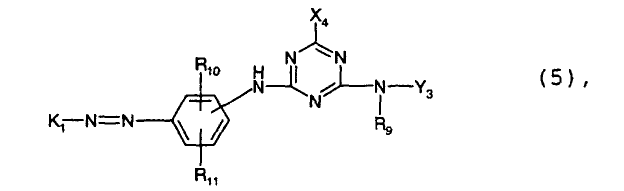 in which
R₉ is hydrogen or C₁-C₄alkyl which is unsubstituted or substituted by hydroxyl, sulfo or sulfato,
R₁₀ and R₁₁ independently of one another are hydrogen, C₁-C₄alkyl, C₁-C₄alkoxy, halogen, carboxyl or sulfo,
X₄ is chlorine or fluorine and
Y₃ is hydrogen, C₁-C₈alkyl which is unsubstituted or substituted by hydroxyl, sulfo or sulfato and is uninterrupted or interrupted by oxygen, or phenyl or naphthyl which are unsubstituted or substituted by C₁-C₄alkyl, C₁-C₄alkoxy, halogen, carboxyl, sulfo or a halogenotriazinylamino radical which is unsubstituted or further substituted, or
the radical -N(R₉)-Y₃ is morpholino, and
K₁ is a radical of the formula 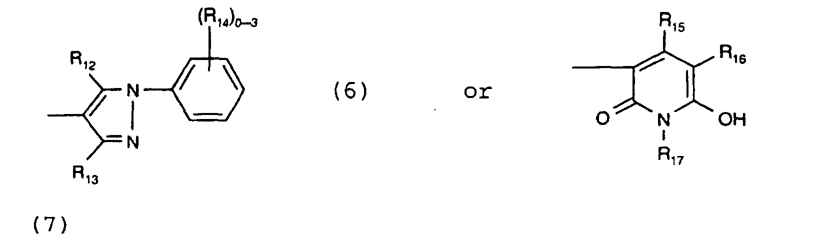 in which
R₁₂ is hydroxyl or amino,
R₁₃ is methyl or carboxyl,
(R₁₄ )₀₋₃ is 0 to 3 identical or different substituents from the group consisting of C₁-C₄alkyl, C₁-C₄alkoxy, halogen, carboxyl and sulfo,
R₁₅ and R₁₇ are C₁-C₄alkyl and
R₁₆ is cyano, carbamoyl or sulfomethyl.

## Revendications

1. Procédé pour la teinture ou l'impression de papier, de feuilles de matière plastique ou de matériaux fibreux contenant des groupes hydroxyle ou contenant de l'azote avec des colorants réactifs, **caractérisé en ce que** l'on utilise au moins un colorant réactif de formule (1) du groupe a) suivant et au moins un colorant réactif des groupes b), c) et d) suivants :
a) des colorants réactifs teintant en vert ou en bleu de formule (1) 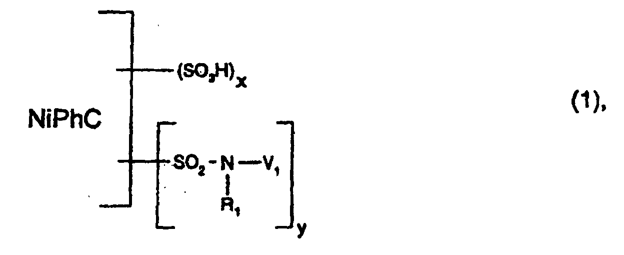 dans laquelle
NiPhC est le reste d'une phtalocyanine de nickel,
R₁ représente un atome d'hydrogène ou un groupe alkyle en C₁ à C₄ éventuellement substitué par un hydroxy, sulfo ou sulfato,
V₁ représente un groupe alkyle en C₁ à C₈, qui est substitué par un groupe réactif avec les fibres de formule 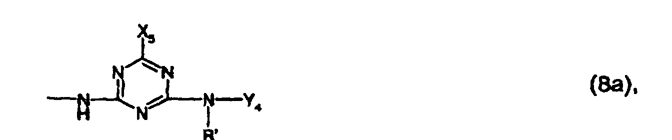
-SO₂-Z (8b)
ou
-CO-NH-(CH₂)₂₋₃-SO₂-Z (8c)
dans lesquelles,
R' représente un atome d'hydrogène ou un groupe alkyle en C₁ à C₄,
X₅ représente un atome de fluor ou en particulier le chlore,
Y₄ représente un atome d'hydrogène, un groupe alkyle en C₁ à C₈ éventuellement substitué par un hydroxy, sulfo ou sulfato et éventuellement interrompu par un oxygène ou un groupe phényle ou naphtyle éventuellement substitué par un groupe alkyle en C₁ à C₄, alcoxy en C₁ à C₄, halogène, carboxy ou sulfo, et
Z est un groupe de formule -CH=CH₂ ou -CH₂-CH₂-U₁ et U₁ est un groupe partant, ou V₁ est un groupe phényle ou naphtyle substitué par un groupe alkyle en C₁ à C₄, alcoxy en C₁ à C₄, halogène, carboxy, sulfo ou un groupe réactif avec les fibres de formules (8a), (8b) ou (8c), et
x est 2 à 4 et y est 1 à 2,
dans lequel le colorant réactif de formule (1) contient au moins un groupe réactif avec les fibres ;
b) des colorants réactifs colorant en bleu de formule (2) ou (3) 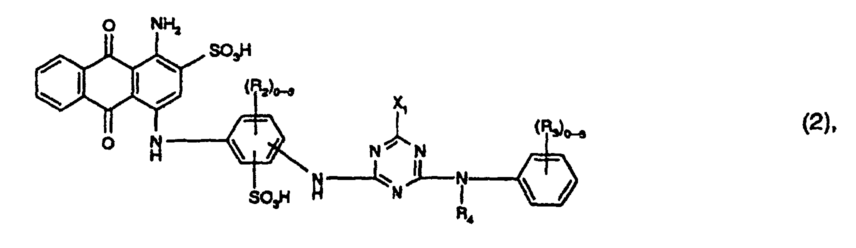 dans laquelle
(R₂)₀₋₃ représente 0 à 3 groupes alkyle en C₁ à C₄ identiques ou différents les uns des autres et
(R₃)₀₋₃ représente 0 à 3 substituants identiques ou différents choisis dans le groupe alkyle en C₁ à C₄, alcoxy en C₁ à C₄, halogène, carboxy et sulfo,
X₁ est le chlore ou le fluor, et
R₄ est un atome d'hydrogène ou un groupe alkyle en C₁ à C₄ éventuellement substitué par un hydroxy, sulfo ou sulfato, 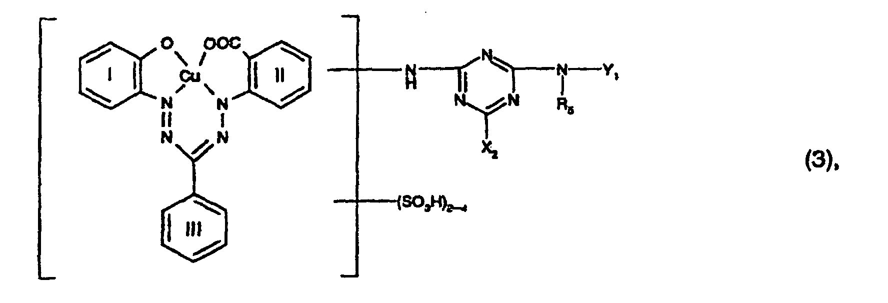
dans laquelle
R₅ représente un atome d'hydrogène ou un groupe alkyle en C₁ à C₄ éventuellement substitué par un hydroxy, sulfo ou sulfato,
X₂ est le chlore,
Y₁ est un atome d'hydrogène, un groupe alkyle en C₁ à C₈ éventuellement substitué par un hydroxy, sulfo ou sulfato et éventuellement interrompu par l'oxygène ou un groupe phényle ou naphtyle éventuellement substitué par un groupe alkyle en C₁ à C₄, alcoxy en C₁ à C₄, halogène, carboxy ou sulfo, et
les noyaux benzéniques I, II, et III ne contiennent pas d'autres substituants ou sont encore substitués par un groupe alkyle en C₁ à C₄, alcoxy en C₁ à C₄, halogène ou carboxy ;
c) des colorants réactifs colorant en rouge de formule (4) 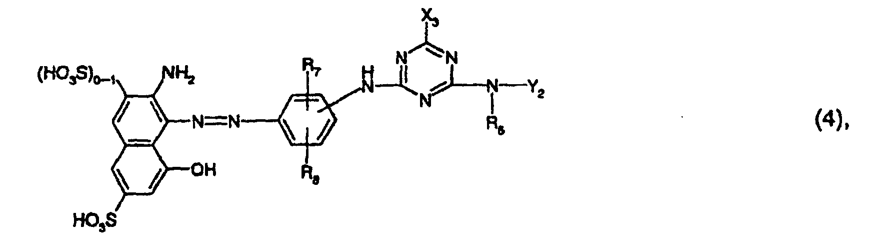 dans laquelle
R₆ est un atome d'hydrogène ou un groupe alkyle en C₁ à C₄ éventuellement substitué par un hydroxy, sulfo ou sulfato,
R₇ et R₈ sont indépendamment l'un de l'autre un atome d'hydrogène, un groupe alkyle en C₁ à C₄, alcoxy en C₁ à C₄, halogène, carboxy ou sulfo,
X₃ est le chlore ou le fluor,
Y₂ représente un atome d'hydrogène, éventuellement substitué par un hydroxy, sulfo, sulfato ou un reste de formule -SO₂-Z et interrompu éventuellement par l'oxygène, un groupe phényle ou naphtyle éventuellement substitué par un groupe alkyle en C₁ à C₄, alcoxy en C₁ à C₄, halogène, carboxy, sulfo ou un reste de formule -SO₂-Z ou -CO-NH-(CH₂)₂₋₃-SO₂-Z, ou le groupe -N(R₆)-Y₂ représente le groupe morpholino, dans lequel
Z est un groupe de formule -CH=CH₂ ou -CH₂-CH₂-U₁ et U₁ est un groupe partant ;
d) des colorants réactifs teintant en jaune ou orange de formule (5), 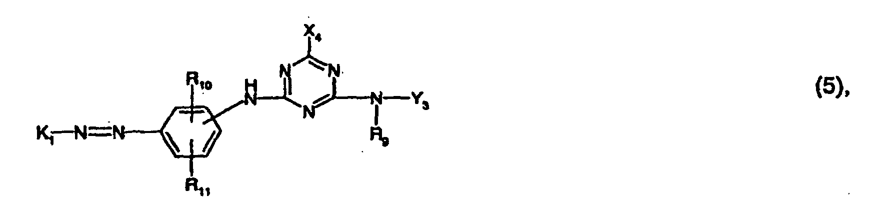
dans laquelle
R₉ est un atome d'hydrogène ou un groupe alkyle en C₁ à C₄ éventuellement substitué par un hydroxy, sulfo ou sulfato,
R₁₀ et R₁₁ représentent indépendamment l'un de l'autre un hydrogène, un groupe alkyle en C₁ à C₄, alcoxy en C₁ à C₄, halogène, carboxy ou sulfo,
X₄ est le chlore ou le fluor,
Y₃ représente un atome d'hydrogène, un groupe alkyle en C₁ à C₈ éventuellement substitué par un hydroxy, sulfo ou sulfato et éventuellement interrompu par un oxygène, un groupe phényle ou naphtyle éventuellement substitué par un groupe alkyle en C₁ à C₄, alcoxy en C₁ à C₄, halogène, carboxy, sulfo ou éventuellement encore substitué, ou le groupe -N(R₉)-Y₃ représente un groupe morpholino et,
K₁ est un groupe de formule 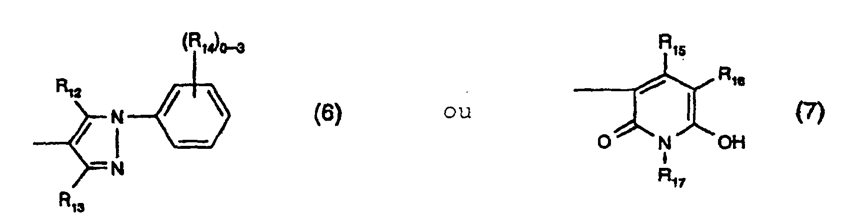
dans laquelle
R₁₂ représente un hydroxy ou amino,
R₁₃ représente le méthyle ou le carboxy,
(R₁₄)₀₋₃ représente 0 à 3 substituants identiques ou différents dans le groupe d'un alkyle en C₁ à C₄, alcoxy en C₁ à C₄, halogène, carboxy et sulfo,
R₁₅ et R₁₇ sont un groupe alkyle en C₁ à C₄ et,
R₁₆ est le cyano, carbamoyle ou sulfométhyle.

2. Procédé selon la revendication 1, **caractérisé en ce que**
R₁ est un atome d'hydrogène ou un groupe alkyle en C₁ à C₄ et
V₁ est un groupe de formule 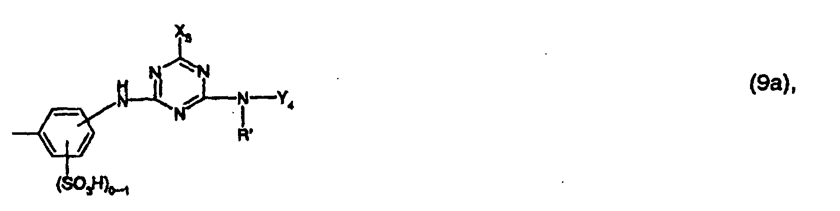 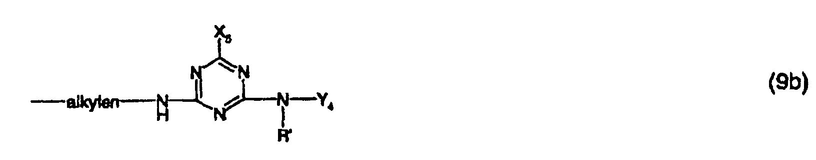 ou 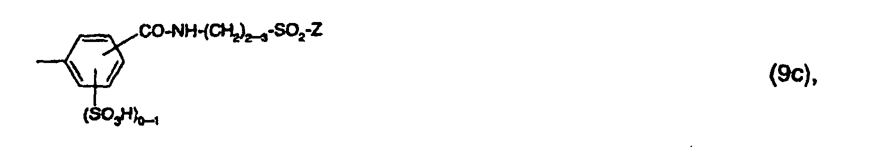
dans laquelle
R' représente un atome d'hydrogène ou un alkyle en C₁ à C₄,
X₅ représente le fluor ou le chlore,
Y₄ représente un atome d'hydrogène ou éventuellement un groupe phényle substitué par un alkyle en C₁ à C₄, alcoxy en C₁ à C₅, halogène, carboxy ou sulfo,
alkylène représente un alkylène en C₂ à C₆ et,
Z a les significations indiquées dans la revendication 1

3. Procédé selon l'une des revendications 1 et 2, **caractérisé en ce qu'**on utilise comme colorant réactif de formule (1) un colorant réactif de formule 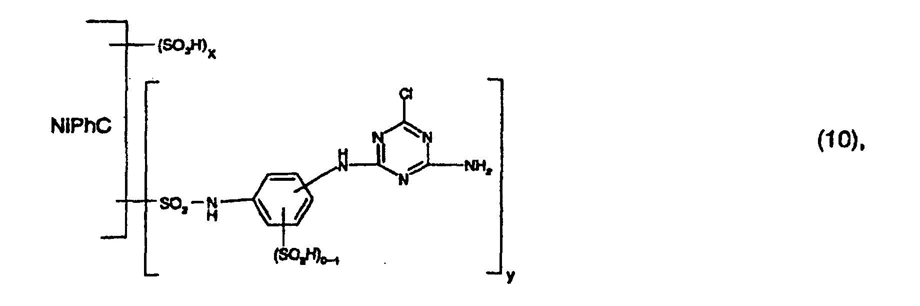 dans laquelle
NiPhC, x et y ont les significations indiquées à la revendication 1.

4. Procédé selon l'une des revendications 1 à 3, **caractérisé en ce que** R₃ est un groupe sulfo, R₄ un atome d'hydrogène ou le groupe alkyle en C₁ à C₄ et X₁ est le chlore.

5. Procédé selon l'une des revendications 1 à 4, **caractérisé en ce que** l'on utilise comme colorant réactif de formule (2) un colorant réactif de formule

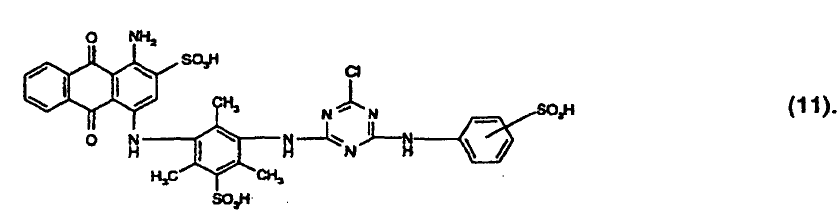

6. Procédé selon l'une des revendications 1 à 5, **caractérisé en ce que** l'on utilise comme colorant réactif de formule (3) un colorant réactif de formule 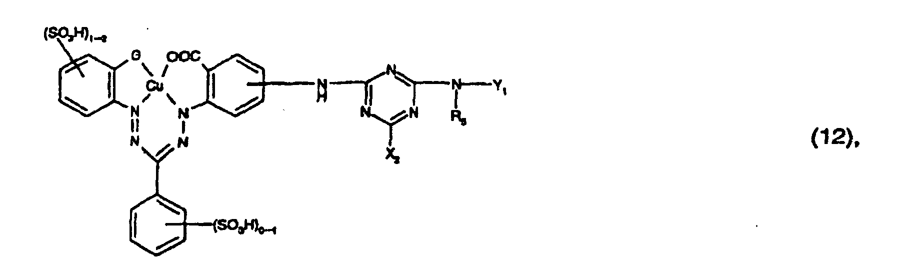 dans laquelle
R₅ représente un atome d'hydrogène ou un groupe alkyle en C₁ à C₄ et X₂ et Y₁ ont les significations indiquées à la revendication 1.

7. Procédé selon l'une des revendications 1 à 6, **caractérisé en ce que** R₅ représente un atome d'hydrogène ou un groupe alkyle en C₁ à C₄,
X₂ représente le chlore et
Y₁ est un atome d'hydrogène.

8. Procédé selon l'une des revendications 1 à 7, **caractérisé en ce que**
R₆ représente un atome d'hydrogène ou un groupe alkyle en C₁ à C₄,
R₇ un groupe sulfo,
R₈ représente un atome d'hydrogène ou un groupe sulfo et
Y₂ représente un atome d'hydrogène, un groupe alkyle en C₁ à C₈ éventuellement substitué par un hydroxy, sulfo ou sulfato et éventuellement interrompu par l'oxygène, ou un groupe phényle ou naphtyle éventuellement substitué par un groupe alkyle en C₁ à C₄, alcoxy en C₁ à C₄, halogène, carboxy ou sulfo, ou le groupe -N(R₆)-Y₂ représente le groupe morpholino.

9. Procédé selon une des revendications 1 à 8, **caractérisé en ce que** l'on utilise comme colorant réactif de formule (4) un colorant réactif de formule 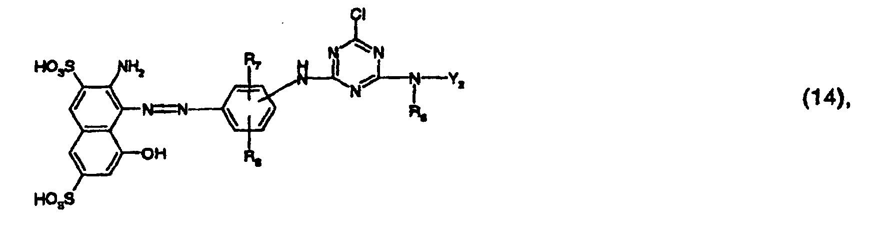 dans laquelle,
R₆ représente un atome d'hydrogène ou un groupe alkyle en C₁ à C₄,
R₇ un groupe sulfo,
R₈ représente un atome d'hydrogène ou un groupe sulfo et
Y₂ est un groupe alkyle en C₁ à C₄ substitué par un hydroxy, sulfo ou sulfato et éventuellement interrompu par l'oxygène, ou un groupe phényle éventuellement substitué par un groupe alkyle en C₁ à C₄, alcoxy en C₁ à C₄, halogène, carboxy ou sulfo.

10. Procédé selon l'une des revendications 1 à 9, **caractérisé en ce que**
R₉ représente un atome d'hydrogène ou un groupe alkyle en C₁ à C₄,
R₁₀ représente un groupe sulfo, R₁₁ un atome d'hydrogène ou un groupe sulfo, R₁₂ un groupe hydroxy, R₁₃ un groupe méthyle, R₁₆ un groupe carbamoyle et X₄ représente le chlore.

11. Procédé selon l'une des revendications 1 à 10, **caractérisé en ce qu'**on utilise comme colorant réactif de formule (5) un colorant réactif de formule 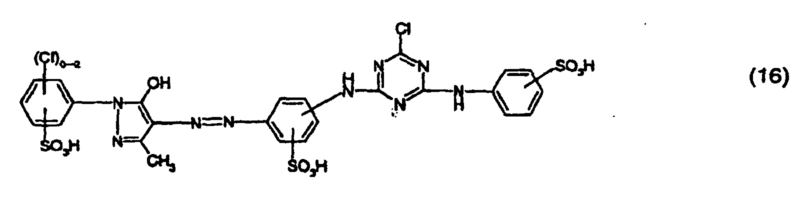 ou

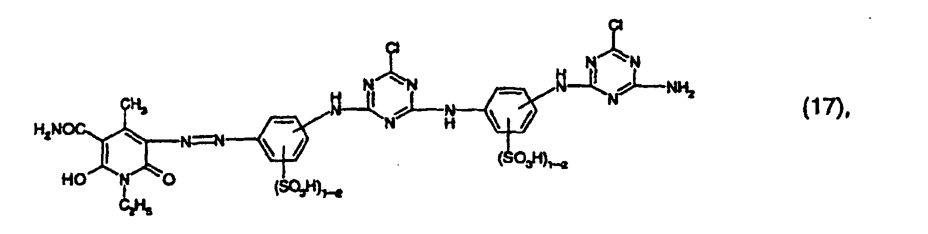

12. Procédé selon l'une des revendications 1 à 11, **caractérisé en ce que** l'on utilise au moins un colorant réactif de formule (1) du groupe a) et
au moins un colorant réactif de formule (4) du groupe c) .

13. Procédé selon l'une des revendications 1 à 11, **caractérisé en ce que** l'on utilise au moins un colorant réactif de formule (1) du groupe a) et
au moins un colorant réactif de formule (5) du groupe d).

14. Procédé selon l'une des revendications 1 à 11, **caractérisé en ce que** l'on utilise au moins un colorant réactif de formule (1) du groupe a) et
au moins un colorant réactif de formule (4) du groupe c) et
au moins un colorant réactif de formule (5) du groupe d).

15. Procédé selon l'une des revendications 1 à 11, **caractérisé en ce que** l'on utilise au moins un colorant réactif de formule (1) du groupe a),
au moins un colorant réactif de formules (2) ou (3) du groupe b),
au moins un colorant réactif de formule (4) du groupe c) et
au moins un colorant réactif de formule (5) du groupe d).

16. Procédé selon l'une des revendications 1 à 15, **caractérisé en ce que** l'on imprime un matériau fibreux contenant des groupes hydroxyle ou contenant de l'azote.

17. Procédé selon la revendication 16, **caractérisé en ce que** l'on imprime un matériau fibreux contenant des groupes hydroxyle ou contenant de l'azote selon le procédé d'impression par jet d'encre.

18. Procédé selon la revendication 17, **caractérisé en ce que** l'on imprime le matériau fibreux avec des encres aqueuses, qui contiennent de 5 à 35 % en poids du colorant réactif.

19. Procédé selon la revendication 18, **caractérisé en ce que** les encres aqueuses contiennent de 5 à 30 % en poids de 1,2-propylèneglycol.

20. Procédé selon l'une des revendications 1 à 15, **caractérisé en ce que** l'on teinte un matériau fibreux contenant des groupes hydroxyle ou contenant de l'azote selon le procédé d'étirage ou le procédé de teinture au foulard.

21. Procédé selon l'une des revendications 1 à 20, **caractérisé en ce qu'**il s'agit pour le matériau fibreux de matériau fibreux contenant des groupes hydroxyle.

22. Procédé selon la revendication 21, **caractérisé en ce qu'**il s'agit pour le matériau fibreux de matériaux fibreux cellulosiques, en particulier de coton ou de viscose.

23. Procédé selon l'une des revendications 1 à 15, **caractérisé en ce que** l'on imprime du papier ou des feuilles de matière plastique.

24. Colorants réactifs de formule 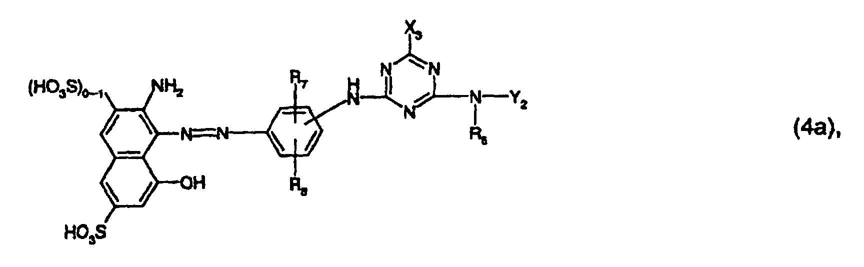 dans laquelle
R₆ représente un atome d'hydrogène ou un groupe alkyle en C₁ à C₄ éventuellement substitué par un hydroxy, sulfo ou sulfato,
R₇ est un groupe sulfo et R₈ représente un atome d'hydrogène,
X₃ représente un fluor, et
Y₂ représente un atome d'hydrogène, un groupe alkyle en C₁ à C₈ éventuellement substitué par un hydroxy, sulfo ou sulfato et interrompu éventuellement par l'oxygène, ou le reste -N(R₆)-Y₂ représente le groupe morpholino.

25. Procédé pour l'impression de papier, de feuilles de matière plastique ou de matériau fibreux contenant des groupes hydroxyle ou contenant de l'azote selon le procédé d'impression par jet d'encre, **caractérisé en ce que** l'on imprime ces matériaux avec au moins un colorant réactif de formule (1) du groupe suivant a) et au moins un colorant réactif des groupes suivants b), c) et d) :
a) des colorants réactifs teintant en vert ou en bleu de formule (1) 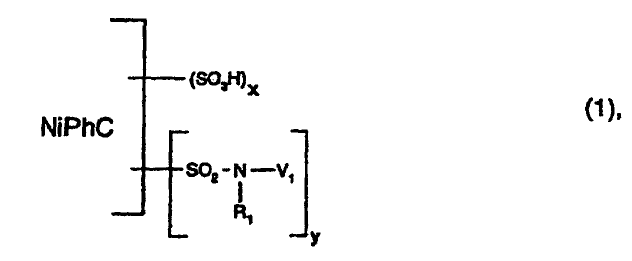 dans laquelle
NiPhC est le reste du phtalocyanine de nickel,
R₁ représente un atome d'hydrogène ou un groupe alkyle en C₁ à C₄ éventuellement substitué,
V₁ représente un atome d'hydrogène ou un groupe alkyle en C₁ à C₈ éventuellement substitué, phényle ou naphtyle, et
x est 2 à 4 et y est 1 à 2,
dans lesquels le colorant réactif de formule (1) contient au moins un groupe réactif avec les fibres ;
b) des colorants réactifs teintant en bleu de formule (2) ou (3), 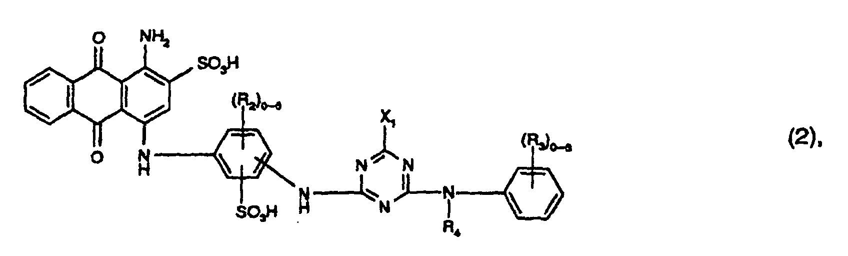 dans laquelle
(R₂)₀₋₃ représente 0 à 3 groupes alkyle en C₁ à C₄ identiques ou différents les uns des autres et
(R₃)₀₋₃ représente 0 à 3 substituants identiques ou différents les uns des autres dans le groupe alkyle en C₁ à C₄, alcoxy en C₁ à C₄, halogène, carboxy et sulfo,
X₁ est un chlore ou fluor, et
R₄ représente un atome d'hydrogène ou un groupe alkyle en C₁ à C₄ éventuellement substitué par un hydroxy, sulfo ou sulfato, 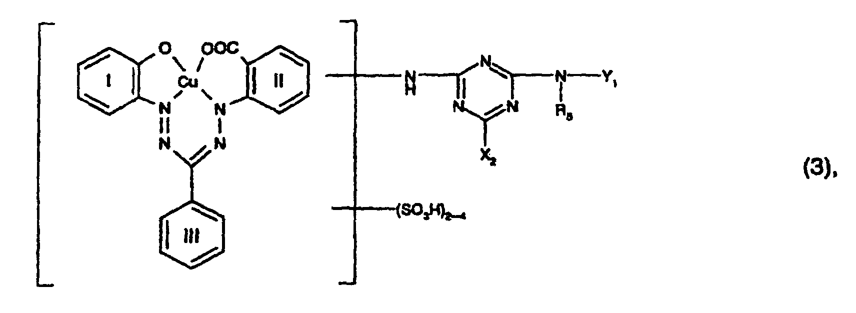
dans laquelle
R₅ représente un atome d'hydrogène ou un groupe alkyle en C₁ à C₄ éventuellement substitué par un hydroxy, sulfo ou sulfato,
X₂ est le chlore ou le fluor,
Y₁ représente un atome d'hydrogène, un groupe alkyle en C₁ à C₈ éventuellement substitué par un hydroxy, sulfo ou sulfato et éventuellement interrompu par l'oxygène ou un groupe phényle ou naphtyle éventuellement substitué par un groupe alkyle en C₁ à C₄, alcoxy en C₁ à C₄, halogène, carboxy ou sulfo, et
les noyaux benzéniques I, II et III ne contiennent pas d'autres substituants ou sont encore substitués par un groupe alkyle en C₁ à C₄, alcoxy en C₁ à C₄, un halogène ou un carboxy ;
c) des colorants réactifs teintant en rouge de formule (4) 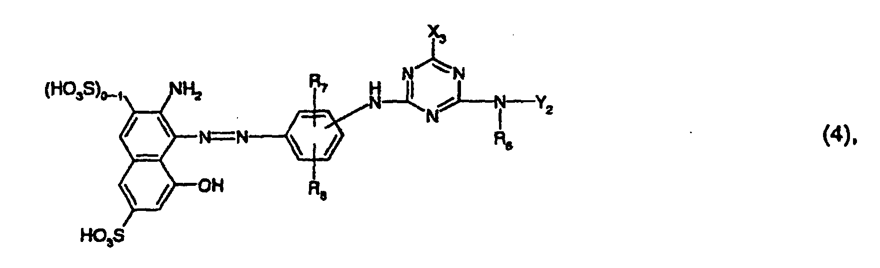 dans laquelle
R₆ est un atome d'hydrogène ou un groupe alkyle en C₁ à C₄ éventuellement substitué par un hydroxy, sulfo ou sulfato,
R₇ et R₈ sont indépendamment l'un de l'autre un atome d'hydrogène, un groupe alkyle en C₁ à C₄, alcoxy en C₁ à C₄, un halogène, carboxy ou sulfo,
X₃ représente un chlore ou fluor, et
Y₂ représente un atome d'hydrogène, un groupe alkyle en C₁ à C₈ éventuellement substitué par un hydroxy, sulfo, sulfato ou un groupe de formule -SO₂-Z et interrompu éventuellement par l'oxygène, un groupe phényle ou naphtyle éventuellement substitué par un groupe alkyle en C₁ à C₄, alcoxy en C₁ à C₄, un halogène, carboxy, sulfo ou un groupe de formule -SO₂-Z ou -CO-NH-(CH₂)₂₋₃-SO₂-Z, ou le reste -N(R₆)-Y₂ représente le groupe morpholino, dans lequel
Z est un reste de formule -CH=CH₂ ou -CH₂-CH₂-U₁ et U₁ est un groupe partant ;
d) des colorants réactifs teintant en jaune ou orange de formule (5) 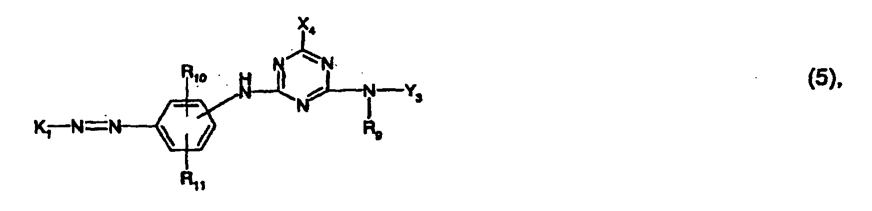 dans laquelle
R₉ est un atome d'hydrogène ou un groupe alkyle en C₁ à C₄ éventuellement substitué par un hydroxy, sulfo ou sulfato,
R₁₀ et R₁₁ sont indépendamment l'un de l'autre un atome d'hydrogène, un groupe alkyle en C₁ à C₄, alcoxy en C₁ à C₄, un halogène, un carboxy ou un sulfo,
X₄ représente le chlore ou le fluor, et
Y₃ représente un atome d'hydrogène, un groupe alkyle en C₁ à C₈ éventuellement substitué par un hydroxy, sulfo ou sulfato et éventuellement interrompu par l'oxygène, un groupe phényle ou naphtyle éventuellement substitué par un groupe alkyle en C₁ à C₄, alcoxy en C₁ à C₄, halogène, carboxy, sulfo ou un groupe halogénotriazinylamino éventuellement encore substitué, ou le reste -N(R₉)-Y₃ représente le groupe morpholino, et
K₁ est un reste de formule 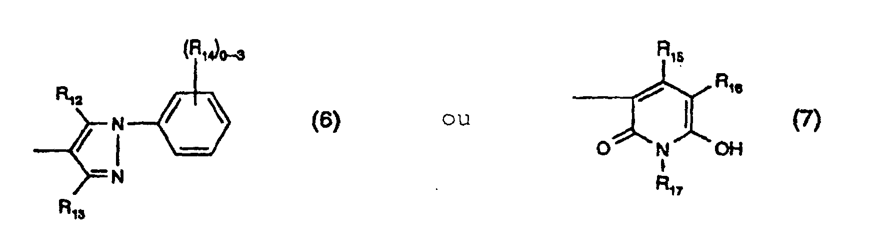
dans laquelle
R₁₂ représente un groupe hydroxy ou amino,
R₁₃ est un méthyle ou carboxy,
(R₁₄)₀₋₃ représente 0 à 3 substituants identiques ou différents dans le groupe alkyle en C₁ à C₄, alcoxy en C₁ à C₄, halogène, carboxy et sulfo,
R₁₅ et R₁₇ sont un groupe alkyle en C₁ à C₄, et
R₁₆ est un groupe cyano, carbamoyle ou sulfométhyle.
